# EUROPEAN PATENT APPLICATION

(11) **EP 4 813 917 A1**
(43) Date of publication of application: **30.09.2026**
(21) Application number: 25166322.5
(22) Date of filing: 26.03.2025
(51) Int. Cl.: C01B 39/16, C11D 3/00

(54) **SYNTHESIS OF LTA-TYPE NA,CA-ZEOLITES WITH DEFINED NA/CA RATIOS**

(71) Applicant: Basic, Robert, 10090 Zagreb (HR)
(72) Inventor: BASIC, Robert, 10090 Zagreb (HR); SUBOTIC, Boris, 10020 Zagreb (HR)
(74) Representative: Maiwald GmbH

(57) **Abstract**

The present disclosure relates to of LTA-type Na,Ca-zeolites with defined Na/Ca ratio, having different shapes and different particles (crystal) sizes and a method for preparation of such zeolite. The disclosed method allows for a predetermined Na/Ca ratio in LTA-type zeolites prepared in a one-pot reaction, excluding the need of ion exchange or mixing processes. The method of present disclosure also allows for LTA-type Na,Ca-zeolites with uniform particles and thus uniform distribution of sodium and calcium-ions with in the zeolite, even at small amounts of calcium-ions.

## Description

### Field of the invention

The present disclosure relates to a method for the preparation of LTA-type Na,Ca-zeolites with defined Na/Ca ratio, having different shapes and different particles (crystal) sizes, and to the zeolites prepared by such method.

### Background

Although most of the applications of the zeolites are closely connected with their structural and chemical properties (i.e., type of zeolite, modification by ion exchange and/or isomorphous substitution, etc.), size and morphology of zeolite crystals can play a significant role in their application.

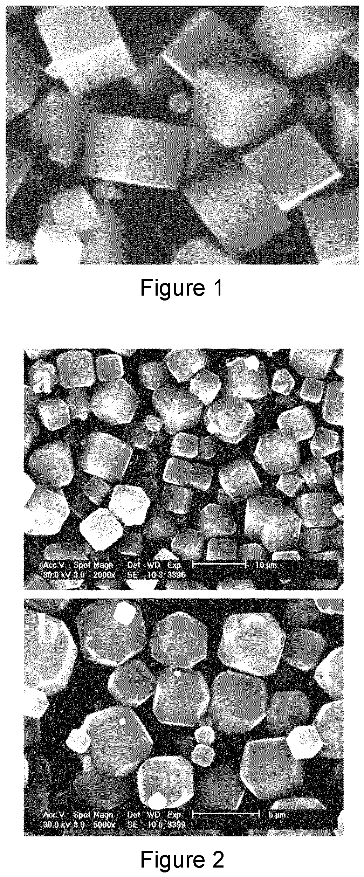

One of the major applications of zeolites, especially of the LTA-type, also known as zeolite 4A, is the substitution of phosphates in washing formulations (DE 2412838 (Henkel); GB 1 504 211). Particles (micro-crystals) of zeolite 4A obtained by standard hydrothermal synthesis appear in the typical form of a regular cube with sharp edges and apexes (cf. shape in Fig. 1). However, such form of zeolite A microcrystals was deemed unfavourable for use in the washing formulations; the sharp apexes of such zeolite crystals result in remaining of zeolite in the micropores of textile materials, and thus an increase of incrustations on textile material. In addition, crystals of zeolite A with sharp edges and apexes cause abrasion of some parts of the washing machine. For this reason, producers of washing formulations tend to adopt the synthesis procedure to obtain zeolite crystals with truncated edges and apexes (cf. shape in Fig. 2). On the other hand, in highly concentrated compact detergent powder, zeolite is not only an ion exchanger, but also a carrier of active components. Especially non-ionic surfactants are carried by zeolites that allow for better flow ability of detergent powder (e.g. EP 0521 635 A1 (Unilever); EP 0 149 264 B2 (Unilever)). The production of the highly concentrated compact detergent powder demands the builders having not only high exchange capacity for calcium and magnesium ions but also high absorption for non-ionic surfactants. One of these is zeolite P, which is also known as zeolite MAP (it is P-type zeolite having maximum aluminum content) and zeolite A24. The molecular framework of zeolite P is different from that of zeolite A (B. Subotic, I. Šmit, O. Hadžija and L. Sekovanić Zeolites 2 (1982) 135.; A. Katović, B. Subotić, I. Šmit and LJ.A. Despotović, Zeolites 9 (1989) 45.) and its particles are smaller than those of the standard zeolite builder. This implies that it exchanges calcium ions more rapidly and binds them more firmly than zeolite A does, especially at low temperatures. Its magnesium exchange is also more rapid than that of zeolite 4A. The smaller particle size (0.1 - 5 µm, more preferably 0.4 - 2 µm and most preferably 0.4 - 1 µm) and morphology of pseudo- spherical aggregates result in an enhanced absorption capacity for surfactants. A comparison of the absorption capacity for oil between MAP and five different commercially available zeolite A samples showed that 57 g of oil is absorbed on 100 g of MAP and that 29 - 44 g (depending on the sample) of oil is absorbed on 100 g of commercially available zeolite A samples [EP 0 521 635 A1 (Unilever)]. This means that the absorption of oil is 29 - 96 % higher on zeolite MAP than on zeolite A. However, since the particle size of zeolite MAP is considerably lower than the particle (crystal) size of commercially available zeolite A samples, this difference in the oil absorption capacity is caused rather by the difference in the particle size than by the specific surface properties of zeolite MAP relative to specific properties of commercially available zeolite A. Hence, it is certain that the same high oil absorption capacity can be obtained on zeolite A having the particle (crystal) size comparable with the particle size of zeolite MAP. In addition, the crystallization time of zeolite MAP is significantly longer compared with those in the production of zeolite A which increases the production expenses of zeolite MAP relative to zeolite 4A. For catalytic applications, both small and large zeolite crystals are desirable. It is well known that the smallest crystals are the most effective as catalysts as long as the catalytic reaction proceeds in the intercrystalline void volume. In some cases, the catalytic activity and selectivity are not only affected by crystal size but by morphological properties of zeolite crystals used as catalysts.

It has been found that both crystal morphologies (see Figs. 1 and 2) and particle sizes (see Figs. 5-7) of LTA-type zeolites, that can be used in different applications (adsorption of non-polar and electrically neutral molecules including oil, non-ionic surfactants, proteins, and other biologically-based compounds) can be successfully synthesized under controlled, specific chemical conditions (S. Bosnar, J. Bronić, Ð. Brlek, B. Subotić *Microporous and Mesoporous Materials*, 142 (2011) 389-397.; C. Kosanović, T. Antonić Jelić, J. Bronić, D. Kralj, B. Subotić, *Microporous and Mesoporous Materials*, 137 (2011) 72-82.).

For some of the mentioned applications, a part, or even complete original (host) sodium (Na⁺) ions need to be replaced by other cations, most frequently calcium (Ca²⁺) ions.

The ion exchange of sodium (Na⁺) with calcium ions (Ca²⁺) enhances the zeolites stability, functionality, and performance. This exchange increases the structural stability and reduces the solubility of the zeolite in water. Additionally, the replacement with Ca²⁺-ions improves ion exchange capacity, especially for hardness ions like calcium and magnesium, making it particularly effective for water softening in detergents. Another advantage is the reduced interaction with surfactants, preserving their effectiveness. These properties contribute to better washing performance, reduced deposits on textiles, and more efficient detergent formulations. Furthermore, ion exchange can be specifically adjusted to optimize the zeolite's properties for applications such as catalysis or water treatment.

Since there is no known procedure of direct synthesis of Ca-, and/or Na,Ca-zeolite, the calcium form of LTA-type zeolite is usually prepared by the exchange of original (host) sodium ions from LTA-type zeolite with calcium ions from solution. The preparation of Na,Ca-zeolites with predictable Na/Ca ratio cannot be easily realized experimentally.

Another way for the preparation of Na,Ca-zeolites is the physical mixing of the original Na- and Ca- (prepared by the complete exchange of sodium ions from zeolite with calcium ions from solution) of zeolites in the desired proportion. Although this way of preparation of Na,Ca zeolites is, at first sight, simple and reliable, the problem is the acquirement of a homogeneous and uniform distribution of sodium and calcium ions in the zeolite, especially if one of the pure forms (Ca-/ or Na-zeolite) is present in a small proportion.

### SUMMARY

For the above given reasons, there is still a need for a method for the preparation of LTA-type Na,Ca-zeolites having a homogeneous and uniform distribution of Na⁺ and Ca²⁺ ions in the powdered product in an easy and reliable manner.

The present disclosure is directed to a method for the preparation of LTA-type Na,Ca-zeolites with a predictable ratio of sodium (Na⁺) and calcium (Ca²⁺) ions that can surprisingly be obtained in a direct synthesis method via one-pot reaction. The method allows for the synthesis of different types of morphologies, namely zeolites comprising zeolite particles having a form of cubic crystals with sharp edges and apexes, zeolite particles having a form of cubic crystals with truncated edges and apexes, zeolite particles having a form of cubic crystals with rounded edges and apexes and face-less zeolite particles.

A direct one-pot synthesis of Na,Ca-zeolites integrates both sodium (Na⁺) and calcium (Ca²⁺) ions during crystallization, eliminating the need for post-synthesis ion exchange or mixing. This approach ensures a more homogeneous and uniform ion distribution, enhances structural stability, and reduces solubility in water. It also optimizes processing, saves time and costs while allowing precise control of ion composition to meet specific application needs. In detergents, directly synthesized Na,Ca-zeolites can improve water softening efficiency, minimize abrasion on textiles and washing machines, and enhance overall performance.

In a first aspect, the present disclosure relates to a method for preparing an LTA-type Na,Ca-zeolite in a one-pot-reaction, wherein the method comprises the steps of:
(a) Providing an aluminosilicate hydrogel by mixing an aqueous sodium aluminate solution and an aqueous sodium silicate solution with a total volume V_{hg} at a temperature T_{P}, wherein the aluminosilicate hydrogel is characterized by
   (1) the molar ratio A [Na₂O/H₂O] is within the range of from 0.0051 to 0.065.
   (2) the molar ratio TAC [SiO₂/H₂O] is within the range of from 0.0026 to 0.06; and
   (3) the molar ratio y [SiO₂/Al₂O₃] is within the range of from 1.2 to 2.2;
(b) Adjusting the temperature of the aluminosilicate hydrogel provided in step a. to a temperature T_{R} of from 50 to 90 °C;
(c) Adding an aqueous calcium hydroxide solution in a volume V_{Ca} to the aluminosilicate hydrogel of step b. at a time t_{c}(add); and
(d) Continuing hydrothermal treatment after step c. for a total time t_{a-c}.

In a second aspect, the disclosure is directed to an LTA-type Na, Ca-zeolite of the general formula xNa₂O•(1-x)CaO•Al₂O₃•ySiO₂•zH₂O, comprising uniform zeolite particles, wherein the molar ratios [xNa₂O•(1-x)CaO]/[Al₂O₃] = 1, y = [SiO₂/Al₂O₃] = 2 and [H₂O/Al₂O₃] is in the range of from 4.5 and 5; and wherein the molar ratio of Ca²⁺ and Na⁺ ions [Ca/Na] = (1-x)/(2x) is >0.

It has now unexpectedly and surprisingly been found that LTA-type Na,Ca-zeolites having a pre-defined ratio of Na/Ca can be directly synthesized by a method using a one-pot reaction. Said method involves a calcium hydroxide solution as a source of calcium ions. The previous requirement for post-synthesis ion exchange or mixing of pure sodium and calcium zeolites to obtain LTA-type Na,Ca-zeolites is thus eliminated.

In ion exchange or mixing processes for zeolites, the ion distribution is usually inhomogenous, leading to heterogeneous properties within the material. The exchanged ions may not fully penetrate the crystal structure, resulting in surface-concentrated modifications rather than uniform incorporation. This may negatively affect ion exchange efficiency, stability, and performance consistency, especially in applications like detergents or catalysis. Additionally, the process requires extra processing steps, increasing time and production costs while potentially introducing structural stress to the zeolite framework.

With the disclosed method, zeolites with a uniform and consistent ion distribution between calcium and sodium within individual zeolite particles and throughout the entire zeolite mixture can be achieved. This is because the particles crystallize from a homogeneous hydrogel that contains uniformly distributed calcium and sodium ions in specific ratios. In addition to producing zeolite particles with a uniform sodium and calcium distribution, this method also offers the advantage of predictable and controllable sodium-to-calcium ratios in the resulting LTA-type Na,Ca-zeolite through the one-pot synthesis of the present disclosure. This allows for even very small amounts of calcium ions to be incorporated with exceptional uniformity, which cannot be achieved through conventional ion exchange or mixing processes. The latter methods, commonly used until now, tend to result in inhomogeneous and inconsistent ion distribution, especially when incorporating smaller amounts of Ca²⁺-ions in the overall LTA-type Na,Ca-zeolite structure.

### BRIEF DESCRIPTION OF THE DRAWINGS

- Fig. 1:: SEM photograph of typical cubic crystals of LTA-type zeolite having sharp edges and apexes.
- Fig. 2:: SEM photograph of cubic crystals of LTA-type zeolite with truncated edges and apexes with e/L = 0.12 (Fig. 2a), and e/L = 0.22 (Fig. 2b).

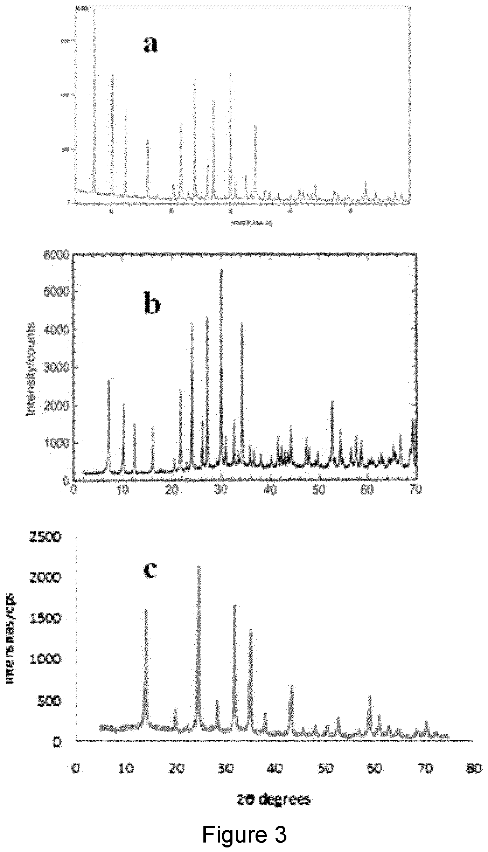

- Fig. 3:: XRD patterns of pure LTA-type zeolite (Fig. 3a), a mixture of LTA-type zeolite and hydroxysodalite (HS, < 10 wt. %) (Fig. 3b) and pure hydroxysodalite (HS) (Fig. 3c).

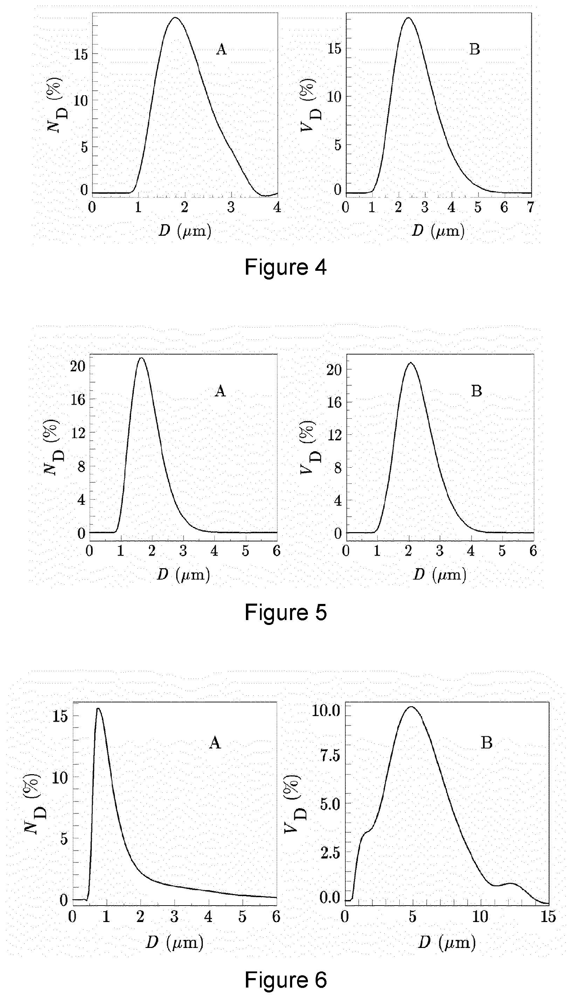

- Fig. 4:: Crystal size distributions by number (A) and by volume (B) of LTA-type zeolite crystals having the regular cubic shape with sharp edges and apexes, obtained under the following chemical conditions: A = 0.0136; TAC = 0.0044; y = 2.0.
- Fig. 5:: Crystal size distributions by number (A) and by volume (B) of LTA-type zeolite crystals having cubic shape with truncated edges and apexes with the aspect ratio e/L = 0.12, obtained under the following chemical conditions: A = 0.01; TAC = 0.0086; y = 1.4.
- Fig. 6:: Crystal size distributions by number (A) and by volume (B) of zeolite A crystals having cubic shape with truncated edges and apexes with the aspect ratio e/L = 0.2, obtained under the following chemical conditions: A = 0.023; TAC = 0.01; y = 1.7.

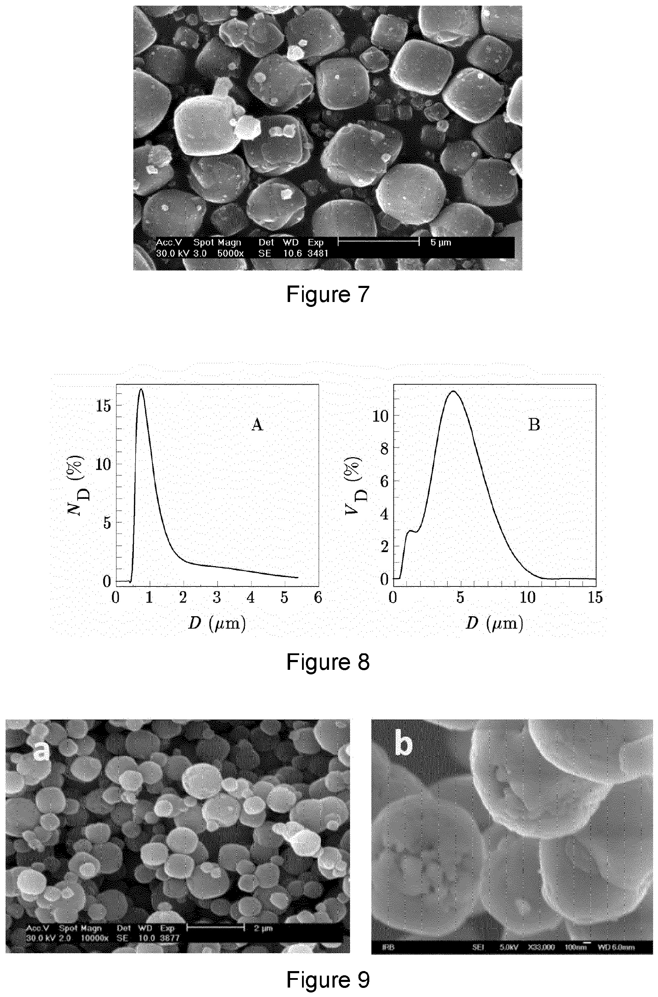

- Fig. 7:: SEM photograph of cubic crystals of LTA-type zeolite with rounded edges and apexes.
- Fig. 8:: Crystal size distributions by number (A) and by volume (B) of LTA-type zeolite crystals having cubic shape with rounded edges and apexes, obtained under the following chemical conditions: A = 0.035; TAC = 0.035; y = 1.6.
- Fig. 9:: SEM photograph of face-less LTA-type zeolite particles magnified for 10000 times (Fig. 9a) and for 33000 times (Fig. 9b).

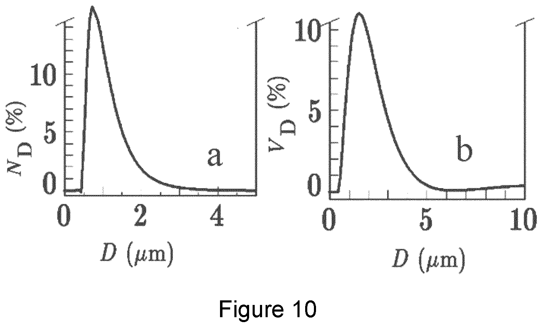

- Fig.10:: Crystal size distributions by number (a) and by volume (b) of the face-less (FLA) LTA-type zeolite obtained under the following chemical conditions: A = 0.035; TAC = 0.0057; y = 1.3.

### DETAILED DESCRIPTION

The present disclosure is described in the following in more detail, exemplified by preferred embodiments and embodiment examples. However, it is understood that the scope of the present disclosure is not limited thereto, but only by the appendant claims.

The present disclosure relates to two aspects. These two aspects are explained in more detail in the following by explaining and providing preferred embodiments to these aspects.

### Method of preparation

In a first aspect, the present disclosure relates to a method for preparing an LTA-type Na,Ca-zeolite in a one-pot-reaction, wherein the method comprises the steps of:
(a) Providing an aluminosilicate hydrogel by mixing an aqueous sodium aluminate solution and an aqueous sodium silicate solution with a total volume V_{hg} at a temperature T_{P}, wherein the aluminosilicate hydrogel is characterized by
   (1) the molar ratio A [Na₂O/H₂O] is within the range of from 0.0051 to 0.065.
   (2) the molar ratio TAC [SiO₂/H₂O] is within the range of from 0.0026 to 0.06; and
   (3) the molar ratio y [SiO₂/Al₂O₃] is within the range of from 1.2 to 2.2;
(b) Adjusting the temperature of the aluminosilicate hydrogel provided in step a. to a temperature T_{R} of from 50 to 90 °C;
(c) Adding an aqueous calcium hydroxide solution in a volume V_{Ca} to the aluminosilicate hydrogel of step b. at a time t_{c}(add); and
(d) Continuing hydrothermal treatment after step c. for a total time t_{a-c}.

The Linde Type A (LTA) zeolite is a synthetic aluminosilicate with a cubic crystal structure composed of sodalite cages connected by four-membered oxygen rings. Its general formula is Mₓ[(AlO₂)×(SiO₂)_{γ}]·zH₂O, where M represents exchangeable cations like Na⁺, K⁺, or Ca²⁺. Specific types include Na-LTA (Zeolite 4A) and Ca-LTA (Zeolite 5A). It has a highly porous framework, making it an excellent molecular sieve. The pore size may be adjusted by ion exchange, typically 4Å (NaA), 5Å (CaA), or larger.

LTA-type zeolites are widely used in gas separation, water softening, and drying applications due to their high adsorption capacity and selectivity. Their structure allows for precise molecular filtration, making them essential in industrial catalysis and purification processes.

The disclosed method for preparing an Na,Ca-LTA zeolites in a one-pot reaction represents a significant advancement in zeolite manufacturing, offering an efficient and scalable method for producing mixed-cation LTA-type structures without requiring post-synthetic ion exchange or mixing. This process involves the simultaneous incorporation of sodium (Na⁺) and calcium (Ca²⁺) ions during the crystallization stage, ensuring a uniform cation distribution within the zeolite framework.

The method, including process simplification, cost reduction, and enhanced material performance. By eliminating the need for post-synthetic modification, the one-pot reaction reduces chemical waste and improves the overall sustainability and commercial viability of LTA-type zeolite production.

When it is referred to 'the method' in the following preferred embodiments, it is referred to a method of preparation according to the present disclosure.

In step a. of the method, an aluminosilicate hydrogel is provided by mixing an aqueous sodium aluminate solution and an aqueous sodium silicate solution with a total volume V_{hg} at a temperature T_{P}. The aqueous solutions may preferably comprise demineralized or deionized water. The temperature T_{P} is the reaction temperature at which the hydrogel is provided. The temperature T_{P} is in the range of from 20 to 90 °C in step a. The temperature range of T_{P} is selected that a range from ambient temperature (about 20 °C) to a temperature of 90 °C, which is suitably kept below the boiling point of water, is covered. If the hydrogel in step a. is provided at an elevated temperature, less energy and time is consumed when the hydrogel is heated in step b. However, the formation of zeolites occurs faster at higher temperatures.

In a further preferred embodiment, the method has a temperature T_{P} in the range of from 20 to 80 °C in step a. At elevated temperature, individual water molecules begin to evaporate, leading to increased water loss. While full boiling does not occur at temperatures below 100 °C, small vapor bubbles can form locally, which may disrupt the gel structure. A temperature maximum of T_{P} = 80 °C helps to minimize evaporation, ensuring more stable hydration of the zeolites.

The aluminosilicate hydrogel provided in a total volume V_{hg} in step a. is characterized by its chemical composition, expressed as molar oxide composition in the form of xNa₂O•Al₂O₃•ySiO₂•zH₂O. The molar oxide composition xNa₂O•Al₂O₃•ySiO₂•zH₂O is defined by the ratios A (Alkalinity), TAC (Total Aluminosilicate Concentration) and y: $A = x / z = \left[{Na}_{2}{O / H}_{2}O\right] ;$ $TAC = y / z = \left[{SiO}_{2}{/ H}_{2}O\right] ;$ and $y = \left[{SiO}_{2}{/ Al}_{2}{O}_{3}\right] .$

The ratios A, TAC and y are present in a specific range and determine the type of crystallized zeolite, morphological properties and the size of the zeolite particles.

In step b. of the method, the hydrogel provided in step a. is heated to a temperature T_{R} in the range of from 50 to 90 °C. The temperature range starts at an elevated temperature of 50 °C with a maximum that is suitably kept below the boiling point of water to avoid gel structure disruption and water loss.

In a preferred embodiment, T_{R} is in the range of from 75 to 85 °C, and most preferably T_{R} is 80 °C in step b. As already outline, a temperature maximum of T_{P} = 80 °C helps to minimize evaporation, ensuring more stable hydration of the zeolites as a consistent water availability is provided, preventing unwanted pore formation.

The method further includes adding an aqueous calcium hydroxide solution in a volume V_{Ca} to the aluminosilicate hydrogel of step c. at a time t_{c}(add), wherein t_{c}(add) is in the range of 0.8 to 0.9 of the time t_{a-c}.

The hydrothermal treatment is continued until the hydrogel is converted into the crystalline phase resulting in the zeolite at a temperature T_{R} as defined above.

The time t_{a-c} is to be understood as the total time of the hydrothermal treatment of the hydrogel, wherein the amorphous phase of the hydrogel is converted into the crystalline phase resulting in the zeolite according to the present disclosure. The time t_{c}(add) refers to 80 to 90 % of the total time the hydrogel of step a. needs to fully crystallize. A partly crystallised hydrogel offers a more stable, ordered structure with clearly defined pores that enable targeted Ca²⁺-ion incorporation. A complete incrystalline hydrogel offers no defined structure, making the process more uncontrolled and inefficient. The process was found to be the most effective at 80 to 90 % of the total time of crystallization. The total time of crystallization is dependent on the composition of the hydrogel and the temperature T_{R}, with a higher temperature resulting in faster crystallization. The hydrothermal treatment is continued for the time t_{a-c} thereby maintaining the temperature T_{R} as defined above in step b.

In a preferred embodiment according to the present method, t_{c}(add) is from 100 to 170 minutes, preferably 105 to 117 minutes, 120 to 135 minutes, 130 to 145 minutes or 144 to 162 minutes.

In another preferred embodiment of the method, t_{c}(add) is 100, 110, 120, 130, 140, 150, 160, or 170 minutes.

In another preferred embodiment of the method, t_{c}(add) is 105, 107, 109, 111, 113, 115, or 117 minutes.

In another preferred embodiment of the method, t_{c}(add) is 120, 122, 124, 126, 128, 130, 132, or 135 minutes.

In another preferred embodiment of the method, t_{c}(add) is 130, 132, 134, 136, 138, 140, 142, or 135 minutes.

In another preferred embodiment of the method, t_{c}(add) is 144, 146, 148, 150, 152, 154, 156, 158, 160, or 162 minutes.

In a preferred embodiment of the method, the volume V_{Ca} of the calcium hydroxide solution added in step c. is 0.100 V_{hg} ≤ V_{Ca} ≤ 0.150 V_{hg}. The ratio between the total volume V_{hg} of the hydrogel provided in step a. and the volume V_{Ca} of the calcium hydroxide solution, added in step c. at a specific concentration, is important to allow for a defined ratio of calcium to sodium ions in the zeolite prepared according to the method of present disclosure. The volume ratio between V_{Ca} and V_{hg} in a Na-zeolite ion exchange affects the pore structure, stability, and hydration properties. Since Ca²⁺ is larger and has twice the charge of Na⁺, replacing two Na⁺ ions with one Ca²⁺ alters the ion distribution and can lead to structural compression or reduced water uptake. This change impacts the zeolite's ability to exchange ions efficiently and maintain its porous framework, making the volume ratio a key factor in optimizing performance.

In another preferred embodiment of the method, the volume V_{Ca} is V_{Ca} = 0.1 V_{hg}, V_{Ca} = 0.110 V_{hg}, V_{Ca} = 0.120 V_{hg}, V_{Ca} = 0.125 V_{hg}, V_{Ca} = 0.130 V_{hg}, V_{Ca} = 0.140 V_{hg}, or V_{Ca} = 0.150 V_{hg}.

In a further preferred embodiment of the method, the volume V_{Ca} is V_{Ca} = 0.121 V_{hg}, V_{Ca} = 0.122 V_{hg}, V_{Ca} = 0.123 V_{hg}, V_{Ca} = 0.124 V_{hg}, V_{Ca} = 0.125 V_{hg}, V_{Ca} = 0.126 V_{hg}, V_{Ca} = 0.127 V_{hg}, V_{Ca} = 0.128 V_{hg}, or V_{Ca} = 0.129 V_{hg}.

In the most preferred embodiment of the method, the volume V_{Ca} in step c. is V_{Ca} = 0.125 V_{hg}.

The calcium hydroxide solution disclosed in step c. is obtained by dissolving and/or suspending calcium hydroxide in solid form in pure water or an aqueous phase containing further components. The aqueous phase may preferably comprise demineralized or deionized water. The calcium hydroxide solution may include a part of the solid calcium hydroxide that is suspended and remains unsolved. In the following the calcium hydroxide solution may also be referred to as suspension/solution of calcium hydroxide, which is understood to be the same in the context of the present disclosure. It is understood that the skilled person may identify whether a solution or suspension is present. When the concentration of the calcium hydroxide solution is referred to in the following, it is to be understood as a certain suspended and/or partly dissolved amount of calcium hydroxide (expressed in mol, determined by weight) in a defined volume of aqueous phase, which is homogeneously dispersed, suspended or dissolved.

In a preferred embodiment of the method, the concentration of the aqueous calcium hydroxide solution added in step c. is in the range of from 0.27 mol/L to 6.20 mol/L. The range of concentration of the calcium hydroxide solution disclosed herein refers to a calcium hydroxide solution that has a volume V_{Ca} that is 0.100 V_{hg} ≤ V_{Ca} ≤ 0.150 V_{hg}. The range of concentration of the aqueous calcium hydroxide solution in the suitable volume V_{Ca} depending on V_{hg} allows to cover the full range of a Na⁺ to Ca²⁺ ratio in the zeolite > 0.

In another preferred embodiment of the method, the concentration of the aqueous calcium hydroxide solution is 0.27, 0.54, 0.81, 1.08, 1.35, 1.62, 1.89, 2.16, 2.43, 2.70, 2.97, 3.24, 3.51, 3.78, 4.05, 4.32, 4.59, 4.86, 5.12, 5.40, 5.67, 5.94, or 6.20 mol/L.

In a preferred embodiment of the method, the added aqueous calcium hydroxide solution of step c. contains potassium ions. According to such embodiment, the calcium hydroxide solution may be obtained by dissolving and/or suspending calcium hydroxide in solid form in an aqueous phase containing potassium ions.

Various potassium sources can be used for zeolite synthesis, depending on the desired properties and processing conditions. These include inorganic salts (e.g., KCI, K₂SO₄, KNO₃), hydroxides (e.g., KOH), and carbonates (e.g., K₂CO₃), which provide potassium in a reactive form. Additionally, potassium-containing minerals or complex precursors may serve as alternative sources. The selection of the potassium source influences factors such as alkalinity, solubility, and interaction with other components, ultimately affecting the structural and functional characteristics of the final material.

The addition of K⁺ ions during the synthesis of a Na,Ca-zeolite can offer several benefits. Without being bound to any theory, the addition of potassium helps controlling crystal morphology, ensuring uniform growth and reducing defects. The addition of K⁺-ions may facilitate a more homogeneous and uniform Ca²⁺ distribution.

Without being bound to any theory, in the present disclosure it was discovered that the addition of potassium ions surprisingly has a positive effect on the formation of the crystalline phase of the zeolite according to the present disclosure. The addition of the herein disclosed amount of potassium ions according to the method of present disclosure supports the formation of a purely crystalline phase, resulting in a positive impact on the crystalline purity and yield of the zeolite according to the present disclosure. Potassium ions present in the defined range of a concentration of present disclosure were especially found to facilitate a more homogeneous and uniform Ca²⁺ distribution.

In a preferred embodiment of the method, the aqueous calcium hydroxide solution of step c. contains potassium ions, preferably wherein the potassium ions are selected from KNO₃, K₂SO₄, K₂PO₄, KCI, potassium citrate, and potassium lactate.

In another preferred embodiment of the method, the aqueous calcium hydroxide solution of step c. contains potassium ions in a concentration in the range of from 0.2 mol/L to 0.8 mol/L, preferably 0.2 mol/L to 0.65 mol/L.

In another further preferred embodiment of the method, the aqueous calcium hydroxide solution of step c. contains KNO₃ in a concentration in the range of from 0.2 mol/L to 0.8 mol/L, preferably 0.2 mol/L to 0.65 mol/L.

In another further preferred embodiment of the method, the aqueous calcium hydroxide solution of step c. contains potassium ions in a concentration of 0.2, 0.25, 0.3, 0.35, 0.4, 0.45, 0.5, 0.55, 0.6, 0.65, 0.7, 0.75 or 0.8 mol/L.

In the most preferred embodiment of the method, the aqueous calcium hydroxide solution of step c. contains potassium ions in a concentration of 0.5 mol/L.

In another further preferred embodiment of the method, the aqueous calcium hydroxide solution of step c. contains KNO₃ in a concentration of 0.5 mol/L.

Without being bound to any theory, it was experimentally found that in the presence of potassium ions the crystalline phase is created in a more stable manner, and the potassium ions help in incorporating calcium ions into the zeolite.

In a preferred embodiment, the method includes continuing hydrothermal treatment after step c. for a total time t_{a-c} in step d., wherein the time t_{a-c} may be from of 20 to 1400 minutes or more. The time t_{a-c} is the total time the amorphous phase (hydrogel) needs to transform into the fully crystalline phase (zeolite).

In a preferred embodiment of the method, the time t_{a-c} is from 130 to 180 minutes, preferably 130 minutes, 150 minutes, 160 minutes or 180 minutes.

In another preferred embodiment of the method, t_{a-c} is 130, 132, 135, 137, 140, 142, 145, 147, 150, 152, 155, 157, 160, 162, 165, 167, 170, 172, 175, 177 or 180 minutes.

The zeolite obtained according to the method disclosed is treated with a standard washing and drying process after full crystallization in step d. after the time t_{a-c}, to obtain a zeolite according to the present disclosure.

A standard washing cycle in zeolite production typically involves multiple steps to remove residual reactants and impurities. First, the synthesized zeolite is washed with deionized water to eliminate soluble by-products. This may be followed by one or more rinsing steps with an aqueous solution, such as diluted acid or alkaline solutions, to adjust the pH and enhance purity. The washing process may be conducted at controlled temperatures and under agitation to ensure thorough cleaning. Finally, the zeolite is filtered, dried, and optionally subjected to further purification steps to achieve the desired composition and quality.

In a preferred embodiment, the method is followed by a standard washing cycle with deionized water to a final pH value of from pH 9 to 10.

A standard drying process for zeolites typically involves controlled temperature treatment to remove residual moisture while preserving the crystalline structure. Initially, the washed zeolite is drained and pre-dried at moderate temperatures to prevent structural stress. This may be followed by drying at elevated temperatures, typically between 100 °C and 300 °C, under ambient or reduced pressure to ensure thorough dehydration. In some cases, stepwise heating is applied to prevent rapid water loss, which could affect the zeolite's integrity. The dried zeolite is then cooled under controlled conditions before storage or further processing.

In a preferred embodiment, the method is followed by a drying step at a temperature of from 100 to 110 °C, preferably at 105 °C for at least 12 h duration or more. The drying step of the zeolite obtained from the method according to the present disclosure is typically performed after a washing step.

### Morphology

An LTA-type zeolite obtained by the method of preparation according to the present disclosure is characterized by its molar oxide composition in the form of xNa₂O•Al₂O₃•ySiO₂•zH₂O, that is defined by the ratios A, TAC and y in the hydrogel prior to crystallization. The hydrogel in specific ratios A, TAC and y is prepared in step a. of the method according to the present disclosure and defines the crystal structure type of the zeolite and also the morphology of the zeolite after the hydrogel is fully crystallized.

The morphology of a zeolite refers to its external shape and structural features at the zeolite particle level. It describes characteristics such as particle size, shape (e.g., cubic, spherical), surface texture, and aggregation behaviour. Morphology is distinct from the crystal structure (e.g. LTA-type zeolite), which defines the atomic arrangement within the zeolite framework. Instead, it relates to the physical form of individual zeolite particles, which can influence diffusion properties, catalytic performance, and adsorption behaviour in practical applications.

The LTA-type Na,Ca zeolite prepared according to the method of present disclosure results in various different morphologies of the zeolite particles: cubic crystals with sharped edges and apexes, cubic crystals with truncated edges and apexes, cubic crystals with rounded edges and apexes, and face-less particles.

In zeolites, specific morphologies like cubic, rounded, and truncated-edge shapes offer distinct advantages in terms of performance and functionality. Cubic structures provide well-defined, symmetrical surfaces that allow for uniform ion exchange and efficient diffusion within the pores. Rounded shapes, on the other hand, help reduce the formation of sharp edges, minimizing mechanical stress and enhancing stability during use. Truncated-edge morphologies combine the benefits of both by providing larger surface areas while still maintaining structural integrity, making them ideal for optimizing catalytic reactions. These shape variations improve the accessibility of the active sites and ensure better performance in applications like catalysis and separation processes.

When it is referred to 'the zeolite' in the following preferred embodiments, it is referred to an LTA-type Na,Ca-zeolite prepared according to a method of present disclosure. Especially, 'the zeolite' may refer to a zeolite with one of the disclosed morphologies obtained by the method according to the section indicating.

### Cubic crystals with sharp edges and apexes

In a preferred embodiment, an LTA-type Na,Ca-zeolite prepared according to the method comprises zeolite particles having a form of cubic crystals with sharp edges and apexes, wherein the zeolite is obtained from a hydrogel in step a) that has a molar ratio A ≤ 0.0136, a molar ratio 0.00255 ≤ TAC ≤ 0.006, and a molar ratio 2.0 ≤ y ≤ 2.2.

In a further preferred embodiment, the zeolite comprising zeolite particles having a form of cubic crystals with sharp edges and apexes is obtained from a hydrogel in step a. that has a molar ratio A = 0.011, A = 0.0115, A = 0.0120, A = 0.0130, or A = 0.0136.

In another further preferred, the zeolite comprising zeolite particles having a form of cubic crystals with sharp edges and apexes is obtained from a hydrogel in step a. that has a molar ratio A = 0.0134, A = 0.0135, A = 0.0136, or A = 0.0137, preferably A = 0.0136.

In a further preferred embodiment, the zeolite comprising zeolite particles having a form of cubic crystals with sharp edges and apexes is obtained from a hydrogel in step a. that has a molar ratio TAC = 0.00255, TAC = 0.00300, TAC = 0.00350, TAC = 0.00400, TAC = 0.00444, TAC = 0.00510, TAC = 0.00550, or TAC = 0.00600.

In another further preferred embodiment, the zeolite comprising zeolite particles having a form of cubic crystals with sharp edges and apexes is obtained from a hydrogel in step a. that has a molar ratio TAC = 0.0043, TAC = 0.0044, TAC = 0.0045 or TAC = 0.0046, preferably TAC = 0.0044.

In a further preferred embodiment, the zeolite comprising zeolite particles having a form of cubic crystals with sharp edges and apexes is obtained from a hydrogel in step a. that has a molar ratio y = 2.0, y = 2.05, y = 2.1, y = 2.15, or y = 2.2.

In another further preferred embodiment, the zeolite comprising zeolite particles having a form of cubic crystals with sharp edges and apexes is obtained from a hydrogel in step a. that has a molar ratio y = 2.0, y = 2.01, y = 2.02, y = 2.03, or y = 2.04, preferably y = 2.0.

The zeolite prepared according to the method further comprises zeolite particles having a form of cubic crystals with sharp edges and apexes, wherein the molar ratio of Ca²⁺ and Na⁺-ions [Ca/Na] = (1-x)/(2x) is determined > 0.

In a preferred embodiment, the zeolite comprises zeolite particles having a form of cubic crystals with sharp edges and apexes, wherein the molar ratio of Ca²⁺ and Na⁺-ions is in the range of from 0.01 to 55.

In a further preferred embodiment, the zeolite comprises zeolite particles having a form of cubic crystals with sharp edges and apexes, wherein the molar ratio of Ca²⁺ and Na⁺-ions is in the range of from 0.01 to 11, preferably the molar ratio is about 0.05, 0.1, 0.2, 0.5, 0.7, 1, 1.2, 1.4, 1.6, 1.8, 2.0, 2.2, 2.4, 2.6, 2.8., 3.0, 3.2, 3.4, 3.6, 3.8, 4.0, 4.2, 4.4, 4.6, 4.8, 5.0, 5.2, 5.4, 5.6, 5.8, 6.0, 6.2, 6.4, 6.6, 6.8, 7.0, 7.2, 7.4, 7.6, 7.8, 8.0, 8.2, 8.4, 8.6, 8.8, 9.0, 9.2, 9.4, 9.6, 9.8, 10.0, 10.2, 10.4, 10.6, 10.8, or 11.0.

In another further preferred embodiment, the zeolite comprises zeolite particles having a form of cubic crystals with sharp edges and apexes, wherein the molar ratio of Ca²⁺ and Na⁺ ions is about 0.09, about 0.24, about 0.44, about 0.83, about 1.7 or about 6.6.

In a particular preferred embodiment, the zeolite comprises zeolite particles having a form of cubic crystals with sharp edges and apexes, wherein the molar ratio of Ca²⁺ and Na⁺ ions is 0.07, 0.08, 0.085, 0.09, 0.095, 0.1, or 0.11.

In another particular preferred embodiment, the zeolite comprises zeolite particles having a form of cubic crystals with sharp edges and apexes, wherein the molar ratio of Ca²⁺ and Na⁺ ions is 0.21, 0.22, 0.23, 0.24, 0.25, 0.27, or 0.28.

In another particular preferred embodiment, the zeolite comprises zeolite particles having a form of cubic crystals with sharp edges and apexes, wherein the molar ratio of Ca²⁺ and Na⁺ ions is 0.41, 0.42, 0.43, 0.44, 0.45, 0.46, or 0.47.

In another particular preferred embodiment, the zeolite comprises zeolite particles having a form of cubic crystals with sharp edges and apexes, wherein the molar ratio of Ca²⁺ and Na⁺ ions is 0.8, 0.81, 0.82, 0.83, 0.84, 0.85, or 0.86.

In another particular preferred embodiment, the zeolite comprises zeolite particles having a form of cubic crystals with sharp edges and apexes, wherein the molar ratio of Ca²⁺ and Na⁺ ions is 1.5, 1.6, 1.65, 1.7, 1.75, 1.8, 1.85, 1.9, or 2.0.

In another particular preferred embodiment, the zeolite comprises zeolite particles having a form of cubic crystals with sharp edges and apexes, wherein the molar ratio of Ca²⁺ and Na⁺ ions is 6.4, 6.5, 6.55, 6.6, 6.65, 6.7, 6.75, 6.8, or 6.9.

In a preferred embodiment, the zeolite comprises zeolite particles having a form of cubic crystals with sharp edges and apexes, wherein the zeolite has a crystal size in the range of from 1.0 to 5.5 µm.

In a further preferred embodiment, the zeolite comprises zeolite particles having a form of cubic crystals with sharp edges and apexes, wherein the zeolite has a crystal size of about 1.0, 1.5, 2.0, 2.5, 3.0, 3.5, 4.0, 4.5, 5.0 or 5.5 µm.

In a preferred embodiment, the zeolite comprises zeolite particles having a form of cubic crystals with sharp edges and apexes, wherein the zeolite comprises an average oxide composition with proportions of:

| **Na₂O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|
| 14.23 | 28.00 | 33.65 | 21.69 | 2.42 | 0.157 CaO•0.836 Na₂O•Al₂O₃•2.04 SiO₂•4.39 H₂O |
| 11.60 | 28.08 | 32.74 | 22.88 | 4.83 | 0.313 CaO•0.660 Na₂O•Al₂O₃•1.98 SiO₂•4.59 H₂O |
| 9.07 | 28.15 | 32.56 | 23.05 | 7.24 | 0.468 CaO•0.530 Na₂O•Al₂O₃•1.96 SiO₂•4.64 H₂O |
| 6.43 | 28.22 | 34.24 | 21.46 | 9.65 | 0.622 CaO•0.375 Na₂O•Al₂O₃•2.06 SiO₂•4.31 H₂O |
| 3.78 | 28.29 | 34.16 | 21.27 | 12.05 | 0.775 CaO•0.226 Na₂O•Al₂O₃•2.05 SiO₂•4.35 H₂O |
| 1.21 | 28.36 | 32.74 | 23.17 | 14.50 | 0.93 CaO•0.070 Na₂O•Al₂O₃•1.96 SiO₂•4.63 H₂O |

### Cubic crystals with truncated edges and apexes

In a preferred embodiment, an LTA-type Na,Ca-zeolite prepared according to the method comprises zeolite particles having a form of cubic crystals with truncated edges and apexes, comprising a ratio e/L of from 0.1 to 0.15, wherein the zeolite is obtained from a hydrogel in step a. that has a molar ratio 0.0051 ≤ A ≤ 0.023, a molar ratio 0.00255 ≤ TAC ≤ 0.015, and a molar ratio 1.8 ≤ y ≤ 2.2.

The ratio e/L describes the morphology of an LTA zeolite with truncated edges, where e is the width of the truncated edge, and L is the total crystal length. A low e/L indicates minimal corner truncation, preserving the cubic shape, while a high e/L signifies strong truncation, resulting in a more truncated appearance. This ratio is essential for characterizing the crystal's shape and structural modifications.

A zeolite with truncated edges and apexes prepared according to the method comprising a ratio e/L of from 0.1 to 0.15 has a small edge truncation of the corners compared to a total cubic crystal with sharp edges and apexes.

In a further preferred embodiment, the zeolite comprising zeolite particles having a form of cubic crystals with truncated edges and apexes comprises a ratio e/L of 0.1, 0.11, 0.12, 0.13, 0.14 or 0.15.

In another further preferred embodiment, the zeolite comprising zeolite particles having a form of cubic crystals with truncated edges and apexes is obtained from a hydrogel in step a. that has a molar ratio A = 0.0051, A = 0.0075, A = 0.01, A = 0.0125, A = 0.015, A = 0.0175, A = 0.02, or A = 0.023.

In another further preferred embodiment, the zeolite comprising zeolite particles having a form of cubic crystals with truncated edges and apexes is obtained from a hydrogel in step a. that has a molar ratio A = 0.008, A = 0.009, A = 0.01, A = 0.011 or A = 0.012, preferably A = 0.01.

In a further preferred embodiment, the zeolite comprising zeolite particles having a form of cubic crystals with truncated edges and apexes is obtained from a hydrogel in step a. that has a molar ratio TAC = 0.00255, TAC = 0.005, TAC = 0.0075, TAC = 0.0086, TAC = 0.01, TAC = 0.00125, or TAC = 0.0150.

In another further preferred embodiment, the zeolite comprising zeolite particles having a form of cubic crystals with truncated edges and apexes is obtained from a hydrogel in step a. that has a molar ratio TAC = 0.0084, TAC = 0.0085, TAC = 0.0086, TAC = 0.0087 or TAC = 0.0088, preferably TAC = 0.0086.

In a further preferred embodiment, the zeolite comprising zeolite particles having a form of cubic crystals with truncated edges and apexes is obtained from a hydrogel in step a. that has a molar ratio y = 1.4, y = 1.8, y = 1.9, y = 2.0, y = 2.1, or y = 2.2.

In another further preferred embodiment, the zeolite comprising zeolite particles having a form of cubic crystals with truncated edges and apexes is obtained from a hydrogel in step a. that has a molar ratio y = 1.6, y = 1.7, y = 1.75, y = 1.8, y = 1.85, y = 1.9 or y = 1.95, preferably y = 1.8.

The zeolite prepared according to the method comprises zeolite particles having a form of cubic crystals with truncated edges and apexes, wherein the molar ratio of Ca²⁺ and Na⁺-ions [Ca/Na] = (1-x)/(2x) is determined > 0.

In a preferred embodiment, the zeolite comprises zeolite particles having a form of cubic crystals with truncated edges and apexes, wherein the molar ratio of Ca²⁺ and Na⁺-ions is in the range of from 0.01 to 55.

In a further preferred embodiment, the zeolite comprises zeolite particles having a form of cubic crystals with truncated edges and apexes, wherein the molar ratio of Ca²⁺ and Na⁺-ions is in the range of from 0.01 to 5, preferably about 0.02, 0.05, 0.07, 0.1, 0.2, 0.3 0.5, 0.7, 1, 1.2, 1.4, 1.6, 1.8, 2.0, 2.2, 2.4, 2.6, 2.8., 3.0, 3.2, 3.4, 3.6, 3.8, 4.0, 4.2, 4.4, 4.6, 4.8, or 5.0.

In another further preferred embodiment, the zeolite comprises zeolite particles having a form of cubic crystals with truncated edges and apexes, wherein the molar ratio of Ca²⁺ and Na⁻ ions is in the range of from 0.06 to 3.5, preferably about 0.06, about 0.14, about 0.25, about 0.4, about 0.5, about 1.6, or about 3.5.

In a particular preferred embodiment, the zeolite comprises zeolite particles having a form of cubic crystals with truncated edges and apexes, wherein the molar ratio of Ca²⁺ and Na⁺-ions is in the range of from 0.04 to 0.8, preferably 0.04, 0.05, 0.055, 0.06, 0.065, 0.7, or 0.8.

In another particular preferred embodiment, the zeolite comprises zeolite particles having a form of cubic crystals with truncated edges and apexes, wherein the molar ratio of Ca²⁺ and Na⁺-ions is in the range of from 0.09 to 0.22, preferably 0.09, 0.095, 0.1, 0.12, 0.14, 0.18, 0.20, or 0.22.

In another particular preferred embodiment, the zeolite comprises zeolite particles having a form of cubic crystals with truncated edges and apexes, wherein the molar ratio of Ca²⁺ and Na⁺-ions is in the range of from 0.17 to 0.35, preferably 0.17, 0.2, 0.22, 0.25, 0.27, 0.3, 0.32 or 0.35.

In another particular preferred embodiment, the zeolite comprises zeolite particles having a form of cubic crystals with truncated edges and apexes, wherein the molar ratio of Ca²⁺ and Na⁺-ions is in the range of from 0.37 to 0.48, preferably 0.37, 0.39, 0.4, 0.41, 0.42, 0.44, 0.46, or 0.48.

In another particular preferred embodiment, the zeolite comprises zeolite particles having a form of cubic crystals with truncated edges and apexes, wherein the molar ratio of Ca²⁺ and Na⁺-ions is in the range of from 0.45 to 0.8, preferably 0.45, 0.47, 0.49, 0.5, 0.51, 0.53, 0.55, 0.6, 0.65, 0.7, or 0.8.

In another particular preferred embodiment, the zeolite comprises zeolite particles having a form of cubic crystals with truncated edges and apexes, wherein the molar ratio of Ca²⁺ and Na⁺-ions is in the range of from 1.1 to 2.0, preferably 1.1, 1.2, 1.3, 1.4, 1.5, 1.55, 1.6, 1.65, 1.7, 1.75, 1.8, 1.85, 1.9, or 2.0.

In another particular preferred embodiment, the zeolite comprises zeolite particles having a form of cubic crystals with truncated edges and apexes, wherein the molar ratio of Ca²⁺ and Na⁺-ions is in the range of from 3.0 to 4.0, preferably 3.0, 3.1, 3.2, 3.3, 3.4, 3.45, 3.5, 3.55, 3.6, 3.7, 3.8, 3.9, or 4.0.

In a preferred embodiment, the zeolite comprises zeolite particles having a form of cubic crystals with truncated edges and apexes, wherein the zeolite has a crystal size in the range of from 1 to 4.5 µm.

In a further preferred embodiment, the zeolite comprises zeolite particles having a form of cubic crystals with truncated edges and apexes, wherein the zeolite has a crystal size of about 1.0, 1.5, 2.0, 2.5, 3.0, 3.5, 4.0, or 4.5 µm.

In a preferred embodiment, the zeolite comprises zeolite particles having a form of cubic crystals with truncated edges and apexes, wherein the zeolite comprises an average oxide composition with proportions of:

| **Na₂O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|
| 14.96 | 27.96 | 34.92 | 20.72 | 1.71 | 0.111 CaO•0.886 Na₂O•Al₂O₃•2.12 SiO₂•4.20 H₂O |
| 13.29 | 28.03 | 33.35 | 21.96 | 3.39 | 0.22 CaO•0.78 Na₂O•Al₂O₃•2.02 SiO₂•4.44 H₂O |
| 11.41 | 28.08 | 32.42 | 23.00 | 5.08 | 0.329 CaO•0.668 Na₂O•Al₂O₃•1.96 SiO₂•4.64 H₂O |
| 9.09 | 28.13 | 34.81 | 23.18 | 6.77 | 0.438 CaO•0.562 Na₂O•Al₂O₃•1.98 SiO₂•4.68 H₂O |
| 7.71 | 28.18 | 33.53 | 22.10 | 8.48 | 0.547 CaO•0.450 Na₂O•Al₂O₃•2.02 SiO₂•4.44 H₂O |
| 5.84 | 28.24 | 33.43 | 22.33 | 10.17 | 0.655 CaO•0.340 Na₂O•Al₂O₃•2.01 SiO₂•4.48 H₂O |
| 4.09 | 28.29 | 34.00 | 21.77 | 11.85 | 0.762 CaO•0.238 Na₂O•Al₂O₃•2.04 SiO₂•4.36 H₂O |
| 2.17 | 28.29 | 32.66 | 23.21 | 13.53 | 0.870 CaO•0.126 Na₂O•Al₂O₃•1.96 SiO₂•4.65 H₂O |

In a preferred embodiment, an LTA-type Na,Ca-zeolite is prepared according to the method, wherein the zeolite comprises zeolite particles having a form of cubic crystals with truncated edges and apexes, comprising a ratio e/L of from 0.2 to 0.25, and wherein the zeolite is obtained from a hydrogel in step a. that has a molar ratio 0.02 ≤ A ≤ 0.037, a molar ratio 0.007 ≤ TAC ≤ 0.0162, and a molar ratio 1.3 ≤ y ≤ 2.2.

A zeolite with truncated edges and apexes prepared according to the method comprising a ratio e/L of from 0.2 to 0.25 has an increased edge truncation of the corners compared to a total cubic crystal with sharp edges and apexes.

In a further preferred embodiment, the zeolite comprising zeolite particles having a form of cubic crystals with truncated edges and apexes comprises a ratio e/L of 0.2, 0.21, 0.22, 0.23, 0.24 or 0.25.

In a further preferred embodiment, the zeolite comprising zeolite particles having a form of cubic crystals with truncated edges and apexes is obtained from a hydrogel in step a. that has a molar ratio A = 0.02, A = 0.022, A = 0.023, A = 0.025, A = 0.027, A = 0.03, A = 0.035, or A = 0.037.

In another further preferred embodiment, the zeolite comprising zeolite particles having a form of cubic crystals with truncated edges and apexes is obtained from a hydrogel in step a. that has a molar ratio A = 0.02, A = 0.021, A = 0.22, A = 0.023, A = 0.024, A = 0.025, or A = 0.026, preferably A = 0.023.

In a further preferred embodiment, the zeolite comprising zeolite particles having a form of cubic crystals with truncated edges and apexes is obtained from a hydrogel in step a. that has a molar ratio TAC = 0.007, TAC = 0.009, TAC = 0.01, TAC = 0.0115, TAC = 0.013, TAC = 0.0145, TAC = 0.0155, or TAC = 0.0162, preferably TAC = 0.01.

In another further preferred embodiment, the zeolite comprising zeolite particles having a form of cubic crystals with truncated edges and apexes is obtained from a hydrogel in step a. that has a molar ratio TAC = 0.007, TAC = 0.008, TAC = 0.009, TAC = 0.01 or TAC = 0.011, TAC = 0.012, preferably TAC = 0.01.

In a further preferred embodiment, the zeolite comprising zeolite particles having a form of cubic crystals with truncated edges and apexes is obtained from a hydrogel in step a. that has a molar ratio y = 1.3, y = 1.5, y = 1.7, y = 2.0, or y = 2.2.

In another further preferred embodiment, the zeolite comprising zeolite particles having a form of cubic crystals with truncated edges and apexes is obtained from a hydrogel in step a. that has a molar ratio y = 1.5, y = 1.6, y = 1.65, y = 1.7, y = 1.75, y = 1.8 or y = 1.9, preferably y = 1.7.

The zeolite prepared according to the method, further comprises zeolite particles having a form of cubic crystals with truncated edges and apexes, wherein the molar ratio of Ca²⁺ and Na⁺-ions [Ca/Na] = (1-x)/(2x) is determined >0.

In a preferred embodiment, the zeolite comprises zeolite particles having a form of cubic crystals with truncated edges and apexes, wherein the molar ratio of Ca²⁺ and Na⁺-ions is in the range of from 0.01 to 50.

In a further preferred embodiment, the zeolite comprises zeolite particles having a form of cubic crystals with truncated edges and apexes, wherein the molar ratio of Ca²⁺ and Na⁺-ions is in the range of from 0.01 to 50, preferably about 0.02, 0.05, 0.07, 0.1, 0.2, 0.3 0.5, 0.7, 1, 1.2, 1.4, 1.6, 1.8, 2.0, 2.2, 2.4, 2.6, 2.8., 3.0, 3.2, 3.4, 3.6, 3.8, 4.0, 4.2, 4.4, 4.6, 4.8, 5.0, 10, 15, 20, 25, 30, 35, 40, 45, 47,49, or 50.

In another further preferred embodiment, the zeolite comprises zeolite particles having a form of cubic crystals with truncated edges and apexes, wherein the molar ratio of Ca²⁺ and Na⁺-ions is about 0.05, about 0.1, about 0.25, about 0.5, about 0.9, about 2.4, or about 49.2.

In a particular preferred embodiment, the zeolite comprises zeolite particles having a form of cubic crystals with truncated edges and apexes, wherein the molar ratio of Ca²⁺ and Na⁺-ions is 0.03, 0.04, 0.045, 0.05, 0.055, 0.5, or 0.6.

In another particular preferred embodiment, the zeolite comprises zeolite particles having a form of cubic crystals with truncated edges and apexes, wherein the molar ratio of Ca²⁺ and Na⁺-ions is 0.09, 0.095, 0.1, 0.12, 0.14, 0.18, 0.20, or 0.22.

In another particular preferred embodiment, the zeolite comprises zeolite particles having a form of cubic crystals with truncated edges and apexes, wherein the molar ratio of Ca²⁺ and Na⁺-ions is 0.17, 0.2, 0.22, 0.25, 0.27, 0.3, 0.32 or 0.35.

In another particular preferred embodiment, the zeolite comprises zeolite particles having a form of cubic crystals with truncated edges and apexes, wherein the molar ratio of Ca²⁺ and Na⁺-ions is 0.37, 0.4, 0.45, 0.5, 0.55, 0.6, or 0.65.

In another particular preferred embodiment, the zeolite comprises zeolite particles having a form of cubic crystals with truncated edges and apexes, wherein the molar ratio of Ca²⁺ and Na⁺-ions is 0.7, 0.75, 0.8, 0.85, 0.9, 0.95, 1.0, 1.1, 1.2, or 1.3.

In another particular preferred embodiment, the zeolite comprises zeolite particles having a form of cubic crystals with truncated edges and apexes, wherein the molar ratio of Ca²⁺ and Na⁺-ions is 2.0, 2.2, 2.3, 2.35, 2.4, 2.45, 2.5, 2.6, or 2.7.

In another particular preferred embodiment, the zeolite comprises zeolite particles having a form of cubic crystals with truncated edges and apexes, wherein the molar ratio of Ca²⁺ and Na⁺-ions is 48, 48.5, 48.7, 48.9, 49, 49.1, 49.15, 49.2, 49.25, 49.3, 49.4, 49.5, 49.8 or 50.

In a preferred embodiment, the zeolite comprises zeolite particles having a form of cubic crystals with truncated edges and apexes, wherein the zeolite has a crystal size in the range of from 0.5 to 15 µm.

In a further preferred embodiment, the zeolite comprises zeolite particles having a form of cubic crystals with truncated edges and apexes, wherein the zeolite has a crystal size of about 0.5, 0.6, 0.8, 1.0, 1.5, 2.0, 2.5, 3.0, 3.5, 4.0, 4.5, 5.0,5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, or 15.0 µm.

In a preferred embodiment, the zeolite comprises zeolite particles having a form of cubic crystals with truncated edges and apexes, wherein the zeolite comprises an average oxide composition with proportions of:

| **Na₂O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|
| 15.54 | 27.90 | 34.20 | 21.03 | 1.13 | 0.0836 CaO•0.914 Na₂O•Al₂O₃•2.076 SiO₂•4.26 H₂O |
| 14.18 | 28.01 | 34.98 | 20.27 | 2.57 | 0.167 CaO•0.833 Na₂O•Al₂O₃•2.12 SiO₂•4.10 H₂O |
| 11.27 | 28.08 | 33.41 | 22.10 | 5.14 | 0.333 CaO•0.660 Na₂O•Al₂O₃•2.02 SiO₂•4.46 H₂O |
| 8.56 | 28.16 | 32.84 | 22.70 | 7.71 | 0.498 CaO•0.500 Na₂O•Al₂O₃•1.98 SiO₂•4.57 H₂O |
| 5.78 | 28.23 | 31.93 | 23.76 | 10.29 | 0.663 CaO•0.337 Na₂O•Al₂O₃•1.92 SiO₂•4.77 H₂O |
| 2.93 | 28.31 | 33.85 | 22.05 | 12.86 | 0.826 CaO•0.170 Na₂O•Al₂O₃•2.03 SiO₂•4.41 H₂O |
| 0.173 | 28.39 | 34.28 | 21.80 | 15.38 | 0.985 CaO•0.01 Na₂O•Al₂O₃•2.05 SiO₂•4.35 H₂O |

### Cubic crystals with rounded edges and apexes

In a preferred embodiment, an LTA-type Na,Ca-zeolite is prepared according to the method, wherein the zeolite comprises zeolite particles having a form of cubic crystals with rounded edges and apexes, and wherein the zeolite is obtained from a hydrogel in step a. that has a molar ratio 0.0165 ≤ A ≤ 0.0420, a molar ratio 0.0053 ≤ TAC ≤ 0.04, and a molar ratio 13 ≤ y ≤ 2.2.

In a further preferred embodiment, the zeolite comprising zeolite particles having a form of cubic crystals with rounded edges and apexes is obtained from a hydrogel in step a. that has a molar ratio A = 0.0165, A = 0.02, A = 0.025, A = 0.027, A = 0.03, A = 0.035, A = 0.037, or A = 0.0420.

In another further preferred embodiment, the zeolite comprising zeolite particles having a form of cubic crystals with rounded edges and apexes is obtained from a hydrogel in step a. that has a molar ratio A = 0.032, A = 0.033, A = 0.034, A = 0.035, A = 0.036, or A = 0.037, preferably A = 0.035.

In a further preferred embodiment, the zeolite comprising zeolite particles having a form of cubic crystals with rounded edges and apexes is obtained from a hydrogel in step a. that has a molar ratio TAC = 0.0053, TAC = 0.01, TAC = 0.015, TAC = 0.02, TAC = 0.025, TAC = 0.03, TAC = 0.035, or TAC = 0.04.

In another further preferred embodiment, the zeolite comprising zeolite particles having a form of cubic crystals with rounded edges and apexes is obtained from a hydrogel in step a. that has a molar ratio TAC = 0.0033, TAC = 0.0034, TAC = 0.0035, TAC = 0.0036, or TAC = 0.0037, preferably TAC = 0.0035.

In a further preferred embodiment, the zeolite comprising zeolite particles having a form of cubic crystals with rounded edges and apexes is obtained from a hydrogel in step a. that has a molar ratio y = 1.3, y = 1.5, y = 1.6, y = 1.8, y = 2.0, or y = 2.2.

In another further preferred embodiment, the zeolite comprising zeolite particles having a form of cubic crystals with sharp edges and apexes is obtained from a hydrogel in step a. that has a molar ratio y = 1.4, y = 1.55, y = 1.55, y = 1.6, y = 1.65, y = 1.7, or y = 1.75, preferably y = 1.6.

The zeolite prepared according to the method, further comprises zeolite particles having a form of cubic crystals with rounded edges and apexes, wherein the molar ratio of Ca²⁺ and Na⁺-ions [Ca/Na] = (1-x)/(2x) is determined >0.

In a preferred embodiment, the zeolite comprises zeolite particles having a form of cubic crystals with rounded edges and apexes, wherein the molar ratio of Ca²⁺ and Na⁺-ions is in the range of from 0.01 to 55.

In a further preferred embodiment, the zeolite comprises zeolite particles having a form of cubic crystals with rounded edges and apexes, wherein the molar ratio of Ca²⁺ and Na⁺-ions is in the range of from 0.01 to 5, preferably about 0.05, 0.1, 0.2, 0.5, 0.7, 1, 1.2, 1.4, 1.6, 1.8, 2.0, 2.2, 2.4, 2.6, 2.8., 3.0, 3.2, 3.4, 3.6, 3.8, 4.0, 4.2, 4.4, 4.6, 4.8, or 5.0.

In another further preferred embodiment, the zeolite comprises zeolite particles having a form of cubic crystals with rounded edges and apexes, wherein the molar ratio of Ca²⁺ and Na⁺-ions is about 0.06, about 0.14, about 0.3, about 0.63, about 1.3, or about 3.8.

In a particular preferred embodiment, the zeolite comprises zeolite particles having a form of cubic crystals with rounded edges and apexes, wherein the molar ratio of Ca²⁺ and Na⁺-ions is 0.04, 0.05, 0.055, 0.06, 0.065, 0.07, or 0.08.

In another particular preferred embodiment, the zeolite comprises zeolite particles having a form of cubic crystals with rounded edges and apexes, wherein the molar ratio of Ca²⁺ and Na⁺ ions is 0.11, 0.12, 0.13, 0.14, 0.15, 0.17, or 0.18.

In another particular preferred embodiment, the zeolite comprises zeolite particles having a form of cubic crystals with rounded edges and apexes, wherein the molar ratio of Ca²⁺ and Na⁺-ions is 0.2, 0.25, 0.27, 0.29, 0.3, 0.31, 0.32, 0.34, 0.37, or 0.4.

In another particular preferred embodiment, the zeolite comprises zeolite particles having a form of cubic crystals with rounded edges and apexes, wherein the molar ratio of Ca²⁺ and Na⁺-ions is 0.5, 0.55, 0.58, 0.6, 0.62, 0.63, 0.65, 0.67, or 0.7.

In another particular preferred embodiment, the zeolite comprises zeolite particles having a form of cubic crystals with rounded edges and apexes, wherein the molar ratio of Ca²⁺ and Na⁺-ions is 1.0, 1.1, 1.15, 1.2, 1.25, 1.3, 1.35, 1.4, or 1.5.

In another particular preferred embodiment, the zeolite comprises zeolite particles having a form of cubic crystals with rounded edges and apexes, wherein the molar ratio of Ca²⁺ and Na⁺-ions is 2.5, 3.0, 3.2, 3.6, 3.7, 3.8, 3.9, 4.0, 4.2 or 4.5.

In a preferred embodiment, the zeolite comprises zeolite particles having a form of cubic crystals with rounded edges and apexes, wherein the zeolite has a crystal size in the range of from 0.5 to 11 µm.

In a further preferred embodiment, the zeolite comprises zeolite particles having a form of cubic crystals with sharp edges and apexes, wherein the zeolite has a crystal size of about 0.5, 0.6, 0.8, 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, 10.0, 10.5, or 11.0 µm.

In a preferred embodiment, the zeolite comprises zeolite particles having a form of cubic crystals with rounded edges and apexes, wherein the zeolite comprises an average oxide composition with proportions of:

| **Na₂O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|
| 15.00 | 27.88 | 31.98 | 23.30 | 1.72 | 0.112 CaO•0.882 Na₂O•Al₂O₃•.1.94 SiO₂•4.72 **H₂O** |
| 13.23 | 28.02 | 33.34 | 21.90 | 3.44 | 0.223 CaO•0.775 Na₂O•Al₂O₃•2.07 SiO₂•4.43 H₂O |
| 10.25 | 28.01 | 33.76 | 21.87 | 6.10 | 0.390 CaO•0.600 Na₂O•Al₂O₃•2.04 SiO₂•4.41 H₂O |
| 7.57 | 28.19 | 32.55 | 23.09 | 8.60 | 0.555 CaO•0.442 Na₂O•Al₂O₃•1.96 SiO₂•4.64 H₂O |
| 4.81 | 28.26 | 33.79 | 21.95 | 11.19 | 0.720 CaO•0.280 Na₂O•Al₂O₃•2.03 SiO₂•4.40 H₂O |
| 1.98 | 28.34 | 32.56 | 23.36 | 13.76 | 0.883 CaO•0.115 Na₂O•Al₂O₃•1.95 SiO₂•4.67 H₂O |

### Face-less zeolite particles

In a preferred embodiment, an LTA-type Na,Ca-zeolite is prepared according to the method, wherein the zeolite comprises face-less zeolite particles, and wherein the zeolite is obtained from a hydrogel in step a. that has a molar ratio 0.026 ≤ A ≤ 0.065, a molar ratio 0.035 ≤ TAC ≤ 0.06, and a molar ratio 1.2 ≤ y ≤ 1.4.

In a further preferred embodiment, the zeolite comprising face-less zeolite particles is obtained from a hydrogel in step a. that has a molar ratio A = 0.026, A = 0.03, A = 0.035, A = 0.040, A = 0.045, A = 0.05, A = 0.055, A = 0.06, or A = 0.065.

In another further preferred embodiment, the zeolite comprising face-less zeolite particles is obtained from a hydrogel in step a. that has a molar ratio A = 0.032, A = 0.033, A = 0.034, A = 0.035, A = 0.036, or A = 0.037, preferably A = 0.035.

In a further preferred embodiment, the zeolite comprising face-less zeolite particles is obtained from a hydrogel in step a. that has a molar ratio TAC = 0.035, TAC = 0.04, TAC = 0.045, TAC = 0.05, TAC = 0.055, TAC = 0.057, or TAC = 0.06.

In another further preferred embodiment, the zeolite comprising face-less zeolite particles is obtained from a hydrogel in step a. that has a molar ratio TAC = 0.053, TAC = 0.055, TAC = 0.056, TAC = 0.057, TAC = 0.058, TAC = 0.059, or TAC = 0.06, preferably TAC = 0.057.

In a further preferred embodiment, the zeolite comprising face-less zeolite particles is obtained from a hydrogel in step a. that has a molar ratio y = 1.2, y = 1.25, y = 1.3, y = 1.35, or y = 1.4.

In another further preferred embodiment, the zeolite comprising face-less zeolite particles is obtained from a hydrogel in step a. that has a molar ratio y = 1.25, y = 1.27, y = 1.28, y = 1.29, y = 1.3, y = 1.31, y = 1.32, or y = 1.35, preferably y = 1.3.

The zeolite prepared according to the method, further comprises face-less zeolite particles, wherein the molar ratio of Ca²⁺ and Na⁺-ions [Ca/Na] = (1-x)/(2x) is determined >0.

In a preferred embodiment, the zeolite comprises face-less zeolite particles, wherein the molar ratio of Ca²⁺ and Na⁺-ions is in the range of from 0.01 to 55.

In a further preferred embodiment, the zeolite comprises face-less zeolite particles, wherein the molar ratio of Ca²⁺ and Na⁺-ions is in the range of from 0.01 to 7, preferably about 0.05, 0.1, 0.2, 0.5, 0.7, 1, 1.2, 1.4, 1.6, 1.8, 2.0, 2.2, 2.4, 2.6, 2.8., 3.0, 3.2, 3.4, 3.6, 3.8, 4.0, 4.2, 4.4, 4.6, 4.8, 5.0, 5.2, 5.4, 5.6, 5.8, 6.0, 6.2, 6.4, 6.6, 6.8, or 7.0.

In another further preferred embodiment, the zeolite comprises face-less zeolite particles, wherein the molar ratio of Ca²⁺ and Na⁺-ions is about 0.07, about 0.13, about 0.16, about 0.3, about 0.5, about 0.82, about 1.4, about 2.8, about 3.6, or about 6.7.

In a particular preferred embodiment, the zeolite comprises face-less zeolite particles, wherein the molar ratio of Ca²⁺ and Na⁺-ions is 0.05, 0.055, 0.06, 0.065, 0.07, 0.075, 0.08, 0.085 or 0.09.

In another particular preferred embodiment, the zeolite comprises face-less zeolite particles, wherein the molar ratio of Ca²⁺ and Na⁺-ions is 0.1, 0.12, 0.13, 0.14, 0.15, 0.16, 0.17, 0.18 or 0.19.

In another particular preferred embodiment, the zeolite comprises face-less zeolite particles, wherein the molar ratio of Ca²⁺ and Na⁺-ions is 0.2, 0.25, 0.27, 0.29, 0.3, 0.31, 0.32, 0.34, 0.37, or 0.4.

In another particular preferred embodiment, the zeolite comprises face-less zeolite particles, wherein the molar ratio of Ca²⁺ and Na⁺-ions is 0.4, 0.042, 0.046, 0.048, 0.5, 0.52, 0.55, 0.58, 0.6, 0.62, 0.65, or 0.7.

In another particular preferred embodiment, the zeolite comprises face-less zeolite particles, wherein the molar ratio of Ca²⁺ and Na⁺-ions is 0.7, 0.75, 0.8, 0.81, 0.82, 0.83, 0.85, 0.9, 1.0, 1.1, 1.2, 1.3, 1.35, 1.37, 1.39, 1.4, 1.41, 1.43, 1.45, or 1.5.

In another particular preferred embodiment, the zeolite comprises face-less zeolite particles, wherein the molar ratio of Ca²⁺ and Na⁺-ions is 2.5, 2.7, 2.75, 2.8, 2.85, 2.9, 3.0, 3.2, 3.5, 3.55, 3.6, 3.65, 3.7, 3.8 or 4.0.

In another particular preferred embodiment, the zeolite comprises face-less zeolite particles, wherein the molar ratio of Ca²⁺ and Na⁺-ions is 6.0, 6.2, 6.4, 6.5, 6.55, 6.6, 6.65, 6.7, 6.75, 6.8, 6.85, 6.9, or 7.0.

In a preferred embodiment, the zeolite comprises face-less zeolite particles, wherein the zeolite has a crystal size in the range of from 0.4 to 5.0 µm.

In a further preferred embodiment, the zeolite comprises face-less zeolite particles, wherein the zeolite has a crystal size of about 0.4, 0.6, 0.8, 1.0, 1.5, 2.0, 2.5, 3.0, 3.5, 4.0, 4.5, or 5.0 µm.

In a preferred embodiment, the zeolite comprises face-less zeolite particles, wherein the zeolite comprises an average oxide composition with proportions of:

| **Na₂O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|
| 14.89 | 27.99 | 32.32 | 23.41 | 1.89 | 0.123 CaO•0.875 Na₂O•Al₂O₃•.1.96 SiO₂•4.74 H₂O |
| 12.79 | 28.05 | 32.71 | 22.66 | 3.78 | 0.245 CaO•0.750 Na₂O•Al₂O₃•1.98 SiO₂•4.58 H₂O |
| 10.81 | 28.10 | 33.43 | 21.97 | 5.67 | 0.367 CaO•0.633 Na₂O•Al₂O₃•2.02 SiO₂•4.43 H₂O |
| 8.72 | 28.16 | 33.67 | 21.86 | 7.57 | 0.489 CaO•0.510 Na₂O•Al₂O₃•2.03 SiO₂•4.40 H₂O |
| 6.52 | 28.21 | 32.40 | 23.27 | 9.60 | 0.619 CaO•0.380 Na₂O•Al₂O₃•1.95 SiO₂•4.67 H₂O |
| 4.52 | 28.27 | 33.87 | 22.35 | 11.41 | 0.734 CaO•0.263 Na₂O•Al₂O₃•2.01 SiO₂•4.48 H₂O |
| 2.58 | 28.33 | 33.87 | 21.99 | 13.24 | 0.850 CaO•0.150 Na₂O•Al₂O₃•2.03 SiO₂•4.40 H₂O |
| 1.21 | 28.31 | 33.03 | 21.88 | 14.49 | 0.931 CaO•0.070 Na₂O•Al₂O₃•1.98 SiO₂•4.39 H₂O |

### LTA-type Na,Ca-zeolite

In a second aspect, the present disclosure is directed to an LTA-type Na,Ca-zeolite of the general formula xNa₂O•(1-x)CaO•Al₂O₃•ySiO₂•zH₂O, comprising uniform zeolite particles, wherein the molar ratios [xNa₂O•(1-x)CaO]/[Al₂O₃] = 1, y = [SiO₂/Al₂O₃] = 2 and [H₂O/Al₂O₃] is in the range of from 4.5 and 5.0; and wherein the molar ratio of Ca²⁺ and Na⁺-ions [Ca/Na] = (1-x)/(2x) is >0.

The ratio between Ca²⁺ and Na⁺-ions can theoretically range from greater than 0 to infinity. The lower limit, which functionally approaches 0, represents the minimal amount of Ca²⁺ in a LTA-type Na,Ca-zeolite according to the present disclosure. The upper limit, which functionally approaches infinity, corresponds to the maximum amount of Ca²⁺ in a LTA-type Na,Ca-zeolite, which, in practical terms, is reached at 100% Ca²⁺, resulting in a pure LTA-type Ca-zeolite. As further note, an excess of Ca²⁺-ions provided during preparation will also result in a pure LTa-type Ca-zeolite as the excess of Ca²⁺-ions remains in the liquid phase of the reaction mixture that is removed during the method of preparation.

The present disclosure relates to LTA-type Na,Ca-zeolites with different morphology of the zeolite particles: cubic crystals with sharped edges and apexes, cubic crystals with truncated edges and apexes, cubic crystals with rounded edges and apexes, and face-less particles. In zeolites, specific morphologies like cubic, rounded, and truncated-edge shapes offer distinct advantages in terms of performance and functionality. Cubic structures provide well-defined, symmetrical surfaces that allow for uniform ion exchange and efficient diffusion within the pores. Rounded shapes, on the other hand, help reduce the formation of sharp edges, minimizing mechanical stress and enhancing stability during use. Truncated-edge morphologies combine the benefits of both by providing larger surface areas while still maintaining structural integrity, making them ideal for optimizing catalytic reactions. These shape variations improve the accessibility of the active sites and ensure better performance in applications like catalysis and separation processes.

The LTA-type Na,Ca zeolites with different morphology according to present disclosure of the zeolite particles are especially not limited to specific molar ratios of Ca²⁺ and Na⁺ ions. The LTA-type Na,Ca zeolites with different morphology of the zeolite particles allow for any molar ratio of Ca²⁺ and Na⁺-ions [Ca/Na] = (1-x)/(2x) is >0.

The zeolite particles are surprisingly provided with a uniform sodium and calcium distribution, and are available with the possibility of a predictable and controllable sodium-to-calcium ratio in the resulting LTA-type Na,Ca-zeolite according to the present disclosure. The present disclosure surprisingly provides zeolites very small amounts of calcium ions that are incorporated with exceptional uniformity. Zeolites with these small amounts and uniform distribution are especially not accessible through conventional ion exchange or mixing processes.

When it is referred to 'the zeolite' in the following preferred embodiments, it is referred to an LTA-type Na,Ca-zeolite according to present disclosure. Especially, 'the zeolite' may refer to a zeolite with one of the disclosed morphologies according to the section indicating.

In preferred embodiment, the zeolite has a molar ratio of Ca²⁺ and Na⁺-ions in the range of from 0.01 to 55, preferably of from 0.01 to 50.

In a further preferred embodiment, the zeolite has a molar ratio of Ca²⁺ and Na⁺-ions in the range of from 0.01 to 11, preferably 0.01 to 5, further preferably 0.01 to 2, most preferably 0.01 to 1.

In another further preferred embodiment, the zeolite has a molar ratio of Ca²⁺ and Na⁺-ions of 0.01, 0.015, 0.02, 0.025, 0.03, 0.035, 0.04, 0.045, 0.05, 0.055, 0.06, 0.065, 0.07, 0.075, 0.08, 0.085, 0.09, or 0.095.

In another further preferred embodiment, the zeolite has a molar ratio of Ca²⁺ and Na⁺-ions of 0.1, 0.15, 0.2, 0.25, 0.3, 0.35, 0.4, 0.45, 0.5, 0.55, 0.6, 0.65, 0.7, 0.75, 0.8, 0.85, 0.9, or 0.95.

In another further preferred embodiment, the zeolite has a molar ratio of Ca²⁺ and Na⁺-ions of 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, 10, 10.5, or 11.

Extremely small amounts of Ca in an LTA-type Na,Ca-zeolite offer several advantages. A Na⁺-rich composition enhances water adsorption, making it ideal for drying applications. It also improves ion exchange capacity, essential for water softening and industrial processes. Maintaining a low Ca²⁺ content preserves crystal stability and the typical pore size, ensuring high selectivity for small molecules like H₂O and CO₂. Additionally, Na⁺-dominated LTA-zeolites experience less structural change under thermal stress, maintaining their performance. Overall, minimal Ca²⁺ content optimizes adsorption, ion exchange, and molecular sieving efficiency.

Previously used processes like ion-exchange were unable to achieve a uniform and consistent distribution of Ca²⁺-ions throughout the Na,Ca-zeolites, especially at very low Ca²⁺-ion concentrations, resulting in inhomogeneous none-uniform individual particles.

The ion distribution in ion exchange processes is inhomogeneous due to several factors. Diffusion limitations restrict the penetration of ions into the zeolite structure, leading to concentration gradients between the surface and the core. Kinetic differences influence exchange rates, as larger, more hydrated ions like Ca²⁺ diffuse more slowly than Na⁺. Uneven equilibrium conditions cause variations in ion replacement across different regions of the zeolite. Additionally, preferential exchange sites at crystal defects or outer surfaces further contribute to inhomogeneities. Lastly, flow and mixing inefficiencies in industrial processes create local concentration differences. Achieving a uniform ion distribution requires advanced synthesis techniques as surprisingly achieved by present disclosure.

The zeolites according to the present disclosure surprisingly can be obtained at an extremely low molar ratio of Ca²⁺ to Na⁺. Additionally, in the zeolites according to the present disclosure, the Ca²⁺-ions are uniformly distributed, ensuring that the individual zeolite particles appear homogeneous and uniform.

### Cubic crystals with sharp edges and apexes

In another preferred embodiment, an LTA-type Na,Ca-zeolite according to the present disclosure comprises zeolite particles having a form of cubic crystals with sharp edges and apexes, wherein the molar ratio of Ca²⁺ and Na⁺-ions is in the range of from 0.01 to 11, preferably about 0.05, 0.1, 0.2, 0.5, 0.7, 1, 1.2, 1.4, 1.6, 1.8, 2.0, 2.2, 2.4, 2.6, 2.8., 3.0, 3.2, 3.4, 3.6, 3.8, 4.0, 4.2, 4.4, 4.6, 4.8, 5.0, 5.2, 5.4, 5.6, 5.8, 6.0, 6.2, 6.4, 6.6, 6.8, 7.0, 7.2, 7.4, 7.6, 7.8, 8.0, 8.2, 8.4, 8.6, 8.8, 9.0, 9.2, 9.4, 9.6, 9.8, 10.0, 10.2, 10.4, 10.6, 10.8, or 11.0.

In another further preferred embodiment, the zeolite comprises zeolite particles having a form of cubic crystals with sharp edges and apexes, wherein the molar ratio of Ca²⁺ and Na⁺-ions is about 0.09, about 0.24, about 0.44, about 0.83, about 1.7 or about 6.6.

In a particular preferred embodiment, the zeolite comprises zeolite particles having a form of cubic crystals with sharp edges and apexes, wherein the molar ratio of Ca²⁺ and Na⁺-ions is 0.07, 0.08, 0.085, 0.09, 0.095, 0.1, or 0.11.

In another particular preferred embodiment, the zeolite comprises zeolite particles having a form of cubic crystals with sharp edges and apexes, wherein the molar ratio of Ca²⁺ and Na⁺-ions is 0.21, 0.22, 0.23, 0.24, 0.25, 0.27, or 0.28.

In another particular preferred embodiment, the zeolite comprises zeolite particles having a form of cubic crystals with sharp edges and apexes, wherein the molar ratio of Ca²⁺ and Na⁺-ions is 0.41, 0.42, 0.43, 0.44, 0.45, 0.46, or 0.47.

In another particular preferred embodiment, the zeolite comprises zeolite particles having a form of cubic crystals with sharp edges and apexes, wherein the molar ratio of Ca²⁺ and Na⁺-ions is 0.8, 0.81, 0.82, 0.83, 0.84, 0.85, or 0.86.

In another particular preferred embodiment, the zeolite comprises zeolite particles having a form of cubic crystals with sharp edges and apexes, wherein the molar ratio of Ca²⁺ and Na⁺-ions is 1.5, 1.6, 1.65, 1.7, 1.75, 1.8, 1.85, 1.9, or 2.0.

In another particular preferred embodiment, the zeolite comprises zeolite particles having a form of cubic crystals with sharp edges and apexes, wherein the molar ratio of Ca²⁺ and Na⁺-ions is 6.4, 6.5, 6.55, 6.6, 6.65, 6.7, 6.75, 6.8, or 6.9.

In a preferred embodiment, the zeolite comprises zeolite particles having a form of cubic crystals with sharp edges and apexes, wherein the zeolite has a crystal size in the range of 1.0 to 5.5 µm.

In a further preferred embodiment, the zeolite comprises zeolite particles having a form of cubic crystals with sharp edges and apexes, wherein the zeolite has a crystal size of about 1.0, 1.5, 2.0, 2.5, 3.0, 3.5, 4.0, 4.5, 5.0 or 5.5 µm.

In a preferred embodiment, the zeolite comprises zeolite particles having a form of cubic crystals with sharp edges and apexes, wherein the zeolite comprises an average oxide composition with proportions of:

| **Na₂O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|
| 14.23 | 28.00 | 33.65 | 21.69 | 2.42 | 0.157 CaO•0.836 Na₂O•Al₂O₃•2.04 SiO₂•4.39 H₂O |
| 11.60 | 28.08 | 32.74 | 22.88 | 4.83 | 0.313 CaO•0.660 Na₂O•Al₂O₃•1.98 SiO₂•4.59 H₂O |
| 9.07 | 28.15 | 32.56 | 23.05 | 7.24 | 0.468 CaO•0.530 Na₂O•Al₂O₃•1.96 SiO₂•4.64 H₂O |
| 6.43 | 28.22 | 34.24 | 21.46 | 9.65 | 0.622 CaO•0.375 Na₂O•Al₂O₃•2.06 SiO₂•4.31 H₂O |
| 3.78 | 28.29 | 34.16 | 21.27 | 12.05 | 0.775 CaO•0.226 Na₂O•Al₂O₃•2.05 SiO₂•4.35 H₂O |
| 1.21 | 28.36 | 32.74 | 23.17 | 14.50 | 0.93 CaO•0.070 Na₂O•Al₂O₃•1.96 SiO₂•4.63 H₂O |

### Cubic crystals with truncated edges and apexes

The ratio e/L describes the morphology of an LTA zeolite with truncated edges, where e is the width of the truncated edge, and L is the total crystal length. A low e/L indicates minimal corner truncation, preserving the cubic shape, while a high e/L signifies strong truncation, resulting in a more truncated appearance. This ratio is essential for characterizing the crystal's shape and structural modifications.

A zeolite with truncated edges and apexes according to the present disclosure comprising a small ratio e/L has a small edge truncation of the corners compared to a total cubic crystal with sharp edges and apexes.

In a preferred embodiment, an LTA-type Na,Ca-zeolite comprises zeolite particles having a form of cubic crystals with truncated edges and apexes comprising a ratio e/L of from 0.1 to 0.15.

In a further preferred embodiment, the zeolite comprises zeolite particles having a form of cubic crystals with truncated edges and apexes comprising a ratio e/L of 0.1, 0.11, 0.12, 0.13, 0.14 or 0.15.

In a preferred embodiment, the zeolite comprises zeolite particles having a form of cubic crystals with truncated edges and apexes, wherein the molar ratio of Ca²⁺ and Na⁺-ions is in the range of from 0.01 to 5, preferably about 0.02, 0.05, 0.07, 0.1, 0.2, 0.3 0.5, 0.7, 1, 1.2, 1.4, 1.6, 1.8, 2.0, 2.2, 2.4, 2.6, 2.8., 3.0, 3.2, 3.4, 3.6, 3.8, 4.0, 4.2, 4.4, 4.6, 4.8, or 5.0.

In further preferred embodiment, the zeolite comprises zeolite particles having a form of cubic crystals with truncated edges and apexes, wherein the molar ratio of Ca²⁺ and Na⁺-ions is about 0.06, about 0.14, about 0.25, about 0.4, about 0.5, about 1.6, or about 3.5.

In a particular preferred embodiment, the zeolite comprises zeolite particles having a form of cubic crystals with truncated edges and apexes, wherein the molar ratio of Ca²⁺ and Na⁺-ions is 0.04, 0.05, 0.055, 0.06, 0.065, 0.7, or 0.8.

In another particular preferred embodiment, the zeolite comprises zeolite particles having a form of cubic crystals with truncated edges and apexes, wherein the molar ratio of Ca²⁺ and Na⁺-ions is 0.09, 0.095, 0.1, 0.12, 0.14, 0.18, 0.20, or 0.22.

In another particular preferred embodiment, the zeolite comprises zeolite particles having a form of cubic crystals with truncated edges and apexes, wherein the molar ratio of Ca²⁺ and Na⁺-ions is 0.17, 0.2, 0.22, 0.25, 0.27, 0.3, 0.32 or 0.35.

In another particular preferred embodiment, the zeolite comprises zeolite particles having a form of cubic crystals with truncated edges and apexes, wherein the molar ratio of Ca²⁺ and Na⁺-ions is 0.37, 0.39, 0.4, 0.41, 0.42, 0.44, 0.46, or 0.48.

In another particular preferred embodiment, the zeolite comprises zeolite particles having a form of cubic crystals with truncated edges and apexes, wherein the molar ratio of Ca²⁺ and Na⁺-ions is 0.45, 0.47, 0.49, 0.5, 0.51, 0.53, 0.55, 0.6, 0.65, 0.7, or 0.8.

In another particular preferred embodiment, the zeolite comprises zeolite particles having a form of cubic crystals with truncated edges and apexes, wherein the molar ratio of Ca²⁺ and Na⁺-ions is 1.1, 1.2, 1.3, 1.4, 1.5, 1.55, 1.6, 1.65, 1.7, 1.75, 1.8, 1.85, 1.9, or 2.0.

In another particular preferred embodiment, the zeolite comprises zeolite particles having a form of cubic crystals with truncated edges and apexes, wherein the molar ratio of Ca²⁺ and Na⁺-ions is 3.0, 3.1, 3.2, 3.3, 3.4, 3.45, 3.5, 3.55, 3.6, 3.7, 3.8, 3.9, or 4.0.

In a preferred embodiment, the zeolite comprises zeolite particles having a form of cubic crystals with truncated edges and apexes, wherein the zeolite has a crystal size in the range of from 1 to 4.5 µm.

In a further preferred embodiment, the zeolite comprises zeolite particles having a form of cubic crystals with truncated edges and apexes, wherein the zeolite has a crystal size of about 1.0, 1.5, 2.0, 2.5, 3.0, 3.5, 4.0, or 4.5 µm.

In a preferred embodiment, the zeolite comprises zeolite particles having a form of cubic crystals with truncated edges and apexes, wherein the zeolite comprises an average oxide composition with proportions of:

| **Na₂O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|
| 14.96 | 27.96 | 34.92 | 20.72 | 1.71 | 0.111 CaO•0.886 Na₂O•Al₂O₃•2.12 SiO₂•4.20 H₂O |
| 13.29 | 28.03 | 33.35 | 21.96 | 3.39 | 0.22 CaO•0.78 Na₂O•Al₂O₃•2.02 SiO₂•4.44 H₂O |
| 11.41 | 28.08 | 32.42 | 23.00 | 5.08 | 0.329 CaO•0.668 Na₂O•Al₂O₃•1.96 SiO₂•4.64 H₂O |
| 9.09 | 28.13 | 34.81 | 23.18 | 6.77 | 0.438 CaO•0.562 Na₂O•Al₂O₃•1.98 SiO₂•4.68 H₂O |
| 7.71 | 28.18 | 33.53 | 22.10 | 8.48 | 0.547 CaO•0.450 Na₂O•Al₂O₃•2.02 SiO₂•4.44 H₂O |
| 5.84 | 28.24 | 33.43 | 22.33 | 10.17 | 0.655 CaO•0.340 Na₂O•Al₂O₃•2.01 SiO₂•4.48 H₂O |
| 4.09 | 28.29 | 34.00 | 21.77 | 11.85 | 0.762 CaO•0.238 Na₂O•Al₂O₃•2.04 SiO₂•4.36 H₂O |
| 2.17 | 28.29 | 32.66 | 23.21 | 13.53 | 0.870 CaO•0.126 Na₂O•Al₂O₃•1.96 SiO₂•4.65 H₂O |

A zeolite with truncated edges and apexes prepared according to the present disclosure comprising a high ratio e/L has an increased edge truncation of the corners compared to a total cubic crystal with sharp edges and apexes.

In a preferred embodiment, an LTA-type Na,Ca-zeolite according to the present disclosure comprises zeolite particles having a form of cubic crystals with truncated edges and apexes comprising a ratio e/L of from 0.2 to 0.25.

In a further preferred embodiment, the zeolite comprises zeolite particles having a form of cubic crystals with truncated edges and apexes comprising a ratio e/L of 0.2, 0.21, 0.22, 0.23, 0.24 or 0.25.

In a preferred embodiment, the zeolite comprises zeolite particles having a form of cubic crystals with truncated edges and apexes, wherein the molar ratio of Ca²⁺ and Na⁺-ions is in the range of from 0.01 to 50, preferably about 0.02, 0.05, 0.07, 0.1, 0.2, 0.3 0.5, 0.7, 1, 1.2, 1.4, 1.6, 1.8, 2.0, 2.2, 2.4, 2.6, 2.8., 3.0, 3.2, 3.4, 3.6, 3.8, 4.0, 4.2, 4.4, 4.6, 4.8, 5.0, 10, 15, 20, 25, 30, 35, 40, 45, 47,49, or 50.

In another further preferred embodiment, the zeolite comprises zeolite particles having a form of cubic crystals with truncated edges and apexes, wherein the molar ratio of Ca²⁺ and Na⁺-ions is about 0.05, about 0.1, about 0.25, about 0.5, about 0.9, about 2.4, or about 49.2.

In a particular preferred embodiment, the zeolite according comprises zeolite particles having a form of cubic crystals with truncated edges and apexes, wherein the molar ratio of Ca²⁺ and Na⁺-ions is 0.03, 0.04, 0.045, 0.05, 0.055, 0.5, or 0.6.

In another particular preferred embodiment, the zeolite comprises zeolite particles having a form of cubic crystals with truncated edges and apexes, wherein the molar ratio of Ca²⁺ and Na⁺-ions is 0.09, 0.095, 0.1, 0.12, 0.14, 0.18, 0.20, or 0.22.

In another particular preferred embodiment, the zeolite comprises zeolite particles having a form of cubic crystals with truncated edges and apexes, wherein the molar ratio of Ca²⁺ and Na⁺-ions is 0.17, 0.2, 0.22, 0.25, 0.27, 0.3, 0.32 or 0.35.

In another particular preferred embodiment, the zeolite comprises zeolite particles having a form of cubic crystals with truncated edges and apexes, wherein the molar ratio of Ca²⁺ and Na⁺-ions is 0.37, 0.4, 0.45, 0.5, 0.55, 0.6, or 0.65.

In another particular preferred embodiment, the zeolite comprises zeolite particles having a form of cubic crystals with truncated edges and apexes, wherein the molar ratio of Ca²⁺ and Na⁺-ions is 0.7, 0.75, 0.8, 0.85, 0.9, 0.95, 1.0, 1.1, 1.2, or 1.3.

In another particular preferred embodiment, the zeolite comprises zeolite particles having a form of cubic crystals with truncated edges and apexes, wherein the molar ratio of Ca²⁺ and Na⁺-ions is 2.0, 2.2, 2.3, 2.35, 2.4, 2.45, 2.5, 2.6, or 2.7.

In another particular preferred embodiment, the zeolite comprises zeolite particles having a form of cubic crystals with truncated edges and apexes, wherein the molar ratio of Ca²⁺ and Na⁺-ions is 48, 48.5, 48.7, 48.9, 49, 49.1, 49.15, 49.2, 49.25, 49.3, 49.4, 49.5, 49.8 or 50.

In a preferred embodiment, the zeolite comprises zeolite particles having a form of cubic crystals with truncated edges and apexes, wherein the zeolite has a crystal size in the range of from 0.5 to 15 µm.

In a further preferred embodiment, the zeolite comprises zeolite particles having a form of cubic crystals with truncated edges and apexes, wherein the zeolite has a crystal size of about 0.5, 0.6, 0.8, 1.0, 1.5, 2.0, 2.5, 3.0, 3.5, 4.0, 4.5, 5.0,5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, or 15.0 µm.

In a preferred embodiment, the zeolite comprises zeolite particles having a form of cubic crystals with truncated edges and apexes, wherein the zeolite comprises an average oxide composition with proportions of:

| **Na₂O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|
| 15.54 | 27.90 | 34.20 | 21.03 | 1.13 | 0.0836 CaO•0.914 Na₂O•Al₂O₃•2.076 SiO₂•4.26 H₂O |
| 14.18 | 28.01 | 34.98 | 20.27 | 2.57 | 0.167 CaO•0.833 Na₂O•Al₂O₃•2.12 SiO₂•4.10 H₂O |
| 11.27 | 28.08 | 33.41 | 22.10 | 5.14 | 0.333 CaO•0.660 Na₂O•Al₂O₃•2.02 SiO₂•4.46 H₂O |
| 8.56 | 28.16 | 32.84 | 22.70 | 7.71 | 0.498 CaO•0.500 Na₂O•Al₂O₃•1.98 SiO₂•4.57 H₂O |
| 5.78 | 28.23 | 31.93 | 23.76 | 10.29 | 0.663 CaO•0.337 Na₂O•Al₂O₃•1.92 SiO₂•4.77 H₂O |
| 2.93 | 28.31 | 33.85 | 22.05 | 12.86 | 0.826 CaO•0.170 Na₂O•Al₂O₃•2.03 SiO₂•4.41 H₂O |
| 0.173 | 28.39 | 34.28 | 21.80 | 15.38 | 0.985 CaO•0.01 Na₂O•Al₂O₃•2.05 SiO₂•4.35 H₂O |

### Cubic crystals with rounded edges and apexes

In a preferred embodiment, an LTA-type Na,Ca-zeolite according to the present disclosure comprises zeolite particles having a form of cubic crystals with rounded edges and apexes, wherein the molar ratio of Ca²⁺ and Na⁺-ions is in the range of from 0.01 to 5, preferably about 0.05, 0.1, 0.2, 0.5, 0.7, 1, 1.2, 1.4, 1.6, 1.8, 2.0, 2.2, 2.4, 2.6, 2.8., 3.0, 3.2, 3.4, 3.6, 3.8, 4.0, 4.2, 4.4, 4.6, 4.8, or 5.0.

In a further preferred embodiment, the zeolite comprises zeolite particles having a form of cubic crystals with rounded edges and apexes, wherein the molar ratio of Ca²⁺ and Na⁺-ions is about 0.06, about 0.14, about 0.3, about 0.63, about 1.3, or about 3.8.

In a particular preferred embodiment, the zeolite comprises zeolite particles having a form of cubic crystals with rounded edges and apexes, wherein the molar ratio of Ca²⁺ and Na⁺-ions is 0.04, 0.05, 0.055, 0.06, 0.065, 0.07, or 0.08.

In another particular preferred embodiment, the zeolite comprises zeolite particles having a form of cubic crystals with rounded edges and apexes, wherein the molar ratio of Ca²⁺ and Na⁺-ions is 0.11, 0.12, 0.13, 0.14, 0.15, 0.17, or 0.18.

In another particular preferred embodiment, the zeolite comprises zeolite particles having a form of cubic crystals with rounded edges and apexes, wherein the molar ratio of Ca²⁺ and Na⁺-ions is 0.2, 0.25, 0.27, 0.29, 0.3, 0.31, 0.32, 0.34, 0.37, or 0.4.

In another particular preferred embodiment, the zeolite comprises zeolite particles having a form of cubic crystals with rounded edges and apexes, wherein the molar ratio of Ca²⁺ and Na⁺-ions is 0.5, 0.55, 0.58, 0.6, 0.62, 0.63, 0.65, 0.67, or 0.7.

In another particular preferred embodiment, the zeolite comprises zeolite particles having a form of cubic crystals with rounded edges and apexes, wherein the molar ratio of Ca²⁺ and Na⁺-ions is 1.0, 1.1, 1.15, 1.2, 1.25, 1.3, 1.35, 1.4, or 1.5.

In another particular preferred embodiment, the zeolite comprises zeolite particles having a form of cubic crystals with rounded edges and apexes, wherein the molar ratio of Ca²⁺ and Na⁺-ions is 2.5, 3.0, 3.2, 3.6, 3.7, 3.8, 3.9, 4.0, 4.2 or 4.5.

In a preferred embodiment of the method, the zeolite comprises zeolite particles having a form of cubic crystals with rounded edges and apexes, wherein the zeolite has a crystal size in the range of from 0.5 to 11 µm.

In a further preferred embodiment, the zeolite comprises zeolite particles having a form of cubic crystals with sharp edges and apexes, wherein the zeolite has a crystal size of about 0.5, 0.6, 0.8, 1.0, 1.5, 2.0, 2.5, 3.0, 3.5, 4.0, 4.5, 5.0, 5.5, 6.0, 6.5, 7.0, 7.5, 8.0, 8.5, 9.0, 9.5, 10.0, 10.5, or 11.0 µm.

In a preferred embodiment, the zeolite comprises zeolite particles having a form of cubic crystals with rounded edges and apexes, wherein the zeolite comprises an average oxide composition with proportions of:

| **Na₂O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|
| 15.00 | 27.88 | 31.98 | 23.30 | 1.72 | 0.112 CaO•0.882 Na₂O•Al₂O₃•.1.94 SiO₂•4.72 H₂O |
| 13.23 | 28.02 | 33.34 | 21.90 | 3.44 | 0.223 CaO•0.775 Na₂O•Al₂O₃•2.07 SiO₂•4.43 H₂O |
| 10.25 | 28.01 | 33.76 | 21.87 | 6.10 | 0.390 CaO•0.600 Na₂O•Al₂O₃•2.04 SiO₂•4.41 H₂O |
| 7.57 | 28.19 | 32.55 | 23.09 | 8.60 | 0.555 CaO•0.442 Na₂O•Al₂O₃•1.96 SiO₂•4.64 H₂O |
| 4.81 | 28.26 | 33.79 | 21.95 | 11.19 | 0.720 CaO•0.280 Na₂O•Al₂O₃•2.03 SiO₂•4.40 H₂O |
| 1.98 | 28.34 | 32.56 | 23.36 | 13.76 | 0.883 CaO•0.115 Na₂O•Al₂O₃•1.95 SiO₂•4.67 H₂O |

### Face-less zeolite particles

In a further preferred embodiment, an LTA-type Na,Ca-zeolite according to the present disclosure comprises face-less zeolite particles, wherein the molar ratio of Ca²⁺ and Na⁺-ions is in the range of from 0.01 to 7, preferably about 0.05, 0.1, 0.2, 0.5, 0.7, 1, 1.2, 1.4, 1.6, 1.8, 2.0, 2.2, 2.4, 2.6, 2.8., 3.0, 3.2, 3.4, 3.6, 3.8, 4.0, 4.2, 4.4, 4.6, 4.8, 5.0, 5.2, 5.4, 5.6, 5.8, 6.0, 6.2, 6.4, 6.6, 6.8, or 7.0.

In another further preferred embodiment, the zeolite comprises face-less zeolite particles, wherein the molar ratio of Ca²⁺ and Na⁺-ions is about 0.07, about 0.13, about 0.16, about 0.3, about 0.5, about 0.82, about 1.4, about 2.8, about 3.6, or about 6.7.

In a particular preferred embodiment, the zeolite comprises face-less zeolite particles, wherein the molar ratio of Ca²⁺ and Na⁺-ions is 0.05, 0.055, 0.06, 0.065, 0.07, 0.075, 0.08, 0.085 or 0.09.

In another particular preferred embodiment, the zeolite comprises face-less zeolite particles, wherein the molar ratio of Ca²⁺ and Na⁺-ions is 0.1, 0.12, 0.13, 0.14, 0.15, 0.16, 0.17, 0.18 or 0.19.

In another particular preferred embodiment, the zeolite comprises face-less zeolite particles, wherein the molar ratio of Ca²⁺ and Na⁺-ions is 0.2, 0.25, 0.27, 0.29, 0.3, 0.31, 0.32, 0.34, 0.37, or 0.4.

In another particular preferred embodiment, the zeolite comprises face-less zeolite particles, wherein the molar ratio of Ca²⁺ and Na⁺-ions is 0.4, 0.042, 0.046, 0.048, 0.5, 0.52, 0.55, 0.58, 0.6, 0.62, 0.65, or 0.7.

In another particular preferred embodiment, the zeolite comprises face-less zeolite particles, wherein the molar ratio of Ca²⁺ and Na⁺-ions is 0.7, 0.75, 0.8, 0.81, 0.82, 0.83, 0.85, 0.9, 1.0, 1.1, 1.2, 1.3, 1.35, 1.37, 1.39, 1.4, 1.41, 1.43, 1.45, or 1.5.

In another particular preferred embodiment, the zeolite comprises face-less zeolite particles, wherein the molar ratio of Ca²⁺ and Na⁺-ions is 2.5, 2.7, 2.75, 2.8, 2.85, 2.9, 3.0, 3.2, 3.5, 3.55, 3.6, 3.65, 3.7, 3.8 or 4.0.

In another particular preferred embodiment, the zeolite comprises face-less zeolite particles, wherein the molar ratio of Ca²⁺ and Na⁺-ions is 6.0, 6.2, 6.4, 6.5, 6.55, 6.6, 6.65, 6.7, 6.75, 6.8, 6.85, 6.9, or 7.0.

In a preferred embodiment, the zeolite comprises face-less zeolite particles, wherein the zeolite has a crystal size in the range of from 0.4 to 5 µm.

In a further preferred embodiment, the zeolite comprises face-less zeolite particles, wherein the zeolite has a crystal size of about 0.4, 0.6, 0.8, 1.0, 1.5, 2.0, 2.5, 3.0, 3.5, 4.0, 4.5, or 5.0 µm.

In a preferred embodiment, the zeolite comprises face-less zeolite particles, wherein the zeolite comprises an average oxide composition with proportions of:

| **Na₂O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|
| 14.89 | 27.99 | 32.32 | 23.41 | 1.89 | 0.123 CaO•0.875 Na₂O•Al₂O₃•.1.96 SiO₂•4.74 H₂O |
| 12.79 | 28.05 | 32.71 | 22.66 | 3.78 | 0.245 CaO•0.750 Na₂O•Al₂O₃•1.98 SiO₂•4.58 H₂O |
| 10.81 | 28.10 | 33.43 | 21.97 | 5.67 | 0.367 CaO•0.633 Na₂O•Al₂O₃•2.02 SiO₂•4.43 H₂O |
| 8.72 | 28.16 | 33.67 | 21.86 | 7.57 | 0.489 CaO•0.510 Na₂O•Al₂O₃•2.03 SiO₂•4.40 H₂O |
| 6.52 | 28.21 | 32.40 | 23.27 | 9.60 | 0.619 CaO•0.380 Na₂O•Al₂O₃•1.95 SiO₂•4.67 H₂O |
| 4.52 | 28.27 | 33.87 | 22.35 | 11.41 | 0.734 CaO•0.263 Na₂O•Al₂O₃•2.01 SiO₂•4.48 H₂O |
| 2.58 | 28.33 | 33.87 | 21.99 | 13.24 | 0.850 CaO•0.150 Na₂O•Al₂O₃•2.03 SiO₂•4.40 H₂O |
| 1.21 | 28.31 | 33.03 | 21.88 | 14.49 | 0.931 CaO•0.070 Na₂O•Al₂O₃•1.98 SiO₂•4.39 H₂O |

### EXPERIMENTAL SECTION

In the following, the present disclosure is illustrated in more detail with reference to the following examples. The following examples are set forth to assist in understanding the disclosure and should not be used as specifically limiting the disclosure described and claimed herein.

### Methods

The synthesis precursors (aluminosilicate hydrogels) are prepared by mixing together sodium aluminate solution (having an appropriate chemical composition with respect to Na₂O, Al₂O₃, and H₂O) and sodium silicate solution (having an appropriate chemical composition with respect to Na₂O, SiO₂, and H₂O) at temperature, T_{P}, within the range from ambient temperature (20 - 30 °C) to 90 °C.

The aluminosilicate hydrogels of the present disclosure have the general molar oxide composition:

xNa₂O•Al₂O₃•ySiO₂•zH₂O

Therein, the factor for Al₂O₃ is set to 1, which allows for the calculation of the ratios as follows:
A(Alkalinity) = x/z = Na₂O/H₂O;
T(Total)A(Aluminosilicate)C(Concentration) = y/z = SiO₂/H₂O;
y = SiO₂/Al₂O₃; wherein
A is in the range from 0.0051 to 0.076;
TAC is in the range from 0.0026 to 0.06;
y is in the range from 1.2 to 2.2.

An aluminosilicate hydrogel defined by A, TAC and y is prepared at a temperature T_{P} of from 20 to 90 °C in a total volume V_{hg}. The hydrogel is transferred into a stainless-steel reaction vessel in a suitable volume provided with a thermostat-jacket and fitted with a water-cooled reflux condenser and thermometer. The reaction mixture, prepared as described above, is heated at a temperature T_{R} of from 20 - 90 °C under stirring with a Teflon-coated magnetic bar driven by a magnetic stirrer or by a propeller. At t_{c}(add) (0.8 to 0.9 of the total time of crystallization t_{a-c}, which corresponds to about 80 - 90 % of the amorphous phase (gel) already being transformed into crystalline one (zeolite)), an appropriate volume of an aqueous calcium hydroxide solution that may comprise potassium ions is added into the reaction vessel containing the reaction mixture. The heating of the reaction mixture is continued for a total time t_{a-c} until the amorphous phase (gel) is completely transformed into a crystalline phase (zeolite). Depending on alkalinity and crystallization temperature, the reaction time may be in the range of 20 to more than 1400 min. The temperature of hydrogel preparation T_{P}, the batch molar ratio y = SiO₂/Al₂O₃ and the batch molar ratio TAC = SiO₂/H₂O do not considerably influence the reaction time. After crystallization has been finished (20 min to 1400 min or more, depending on the chemical composition of the reaction mixture and reaction temperature T_{R}), the suspension of zeolite in the supernatant is filled in the previously weighed centrifugal tubes, weighed again and then centrifuged to separate the solid phase (zeolite) from the liquid phase (supernatant). The supernatant is carefully removed without the disturbance of the solid phase (zeolite). After the removal of the supernatant, the solid phase is redispersed in distilled water and centrifuged in repeated cycles. The procedure is repeated until the pH value of the liquid phase above the sediment is adjusted to pH 9 - 10. The tubes with wet-washed solids are dried overnight (12 h) at 105 °C, and are cooled in desiccators with silica gel, and subsequently weighed again. From the obtained data, the reaction yield, Y_{R} (grams of the product obtained from 100 g of the reaction mixture) was calculated as, ${Y}_{R} = {m}_{P} \times 100 {/ m}_{RM} = \left({m}_{\left(t+P\right)}-{m}_{t}\right) \times 100 \times {n}_{t} / \left({m}_{\left(t+RM\right)}-{m}_{t}\right) \times {n}_{t} = \left({m}_{\left(t+RM\right)}-{m}_{t}\right) \times 100 / \left({m}_{\left(t+P\right)}-{m}_{t}\right)$ where m_{RM} is the mass of the reaction mixture, m_{P} is the mass of dried product, mₜ is the mass of the centrifugal tube, m_{(t+P)} is the mass of the tube and dry product, m_{(t+RM)} is the mass of the tube and reaction mixture, and nt is the number of tubes.

On the basis of a large number of syntheses, it was found that the reaction yield, Y_{R}, can be expressed as functions of A, TAC, and y, i.e., ${Y}_{R} = \left(430.28-1032.5\times A\right) \times \left(1.245-0.00305\times {T}_{R}\right) \times {TAC}^{\left[0.84\times f\left(y\right)\right]} ,$ where $f \left(y\right) = 0.95 + 0.05 \times exp \left(1-0.0809\times {y}^{7.05}\right) .$

### Phase analysis/properties

The samples were analyzed by X-ray diffraction (XRD). The X-ray diffraction patterns of the samples were taken by a Philips PW 1820 diffractometer with a vertical goniometer and CuK_{α} graphite radiation in the corresponding region of Bragg's angles (2θ = 5 - 50°) in steps of 0.04° and with the scan rate of 1 step/s.

Results of the phase analyses show:
I. Pure LTA-type Na,Ca-zeolites (see XRD pattern a in Fig. 3a) are obtained under the following A, y, and TAC values:
   I.1 $0.0051 \leq A \leq 0.0326$ $0.00205 \leq TAC \leq 0.0186$ $0.5 \leq y \leq 2.2$
   I.2. $0.0051 \leq A \leq 0.046$ $0.00205 \leq TAC \leq 0.02315$ $0.5 \leq y \leq 2.0$
   I.3. $0.0051 \leq A \leq 0.055$ $0.00205 \leq TAC \leq 0.0276$ $0.5 \leq y \leq 1.4$
   I.4. $0.065 \leq A < 0.076$ $0.00205 \leq TAC \leq 0.0276$$0.5 \leq y \leq 1.3$
II. Different mixtures of LTA-type Na,Ca-zeolites, and side product hydroxysodalite (HS; see XRD pattern b in Fig. 3b), with a tendency of transformation of LTA-type zeolite to HS at prolonged reaction time, are obtained under the following A, y, and TAC values:
   II.1. $0.0326 \leq A \leq 0.065$ $0.00205 \leq TAC \leq 0.0186$ $y > 2$
   II.2. $0.055 \leq A \leq 0.065$ $0.00205 \leq TAC \leq 0.0276$ $0.5 \leq y \leq 1.4$
   II.3. $0.065 \leq A \leq 0.076$ $0.00205 \leq TAC \leq 0.0276$ $0.5 \leq y \leq 1.3$
III. Pure HS (see XRD pattern c in Fig. 3c) is obtained under the following A, y, and TAC values:
   III.1. $A \geq 0.065$ $0.00205 \leq TAC \leq 0.0378$ $y > 1.3$
   III.2. A ≥ 0.0763 $0.00205 \leq TAC \leq 0.0378$ $0.25 \leq y \leq 2.2$

The structural characteristics of products do not change with the addition of the solution of calcium hydroxide in 0.2 - 0.8 molar potassium ion containing solution (e.g. KNO₃ solution).

### Particulate (particle size and shape) analysis/properties of solid samples

The shape of zeolite particles (crystals) is determined from scanning electron microscope (SEM) photographs of appropriate samples. The SEM photographs were taken by Philips XL 30 and JEOL FSM-7000F, respectively, scanning-electron microscope. Particle (crystals) size distribution curves of the crystalline end products (LTA zeolites) are determined with a Malvern Mastersizer 2000 laser light-scattering particle size analyzer.

Particulate properties of the LTA-type Na,Ca-zeolites synthesized under appropriate values of A, TAC, and y, are as follows:
I. Cubic crystals with sharp edges and apexes (as exemplarily displayed in Fig. 1) having a size in the range from about 1 µm to about 5.5 µm (see Fig. 4) are obtained under the following A, y, and TAC values:
   I.1. $A \leq 0.0136$ $0.00255 \leq TAC \leq 0.006$ $2 \leq y \leq 2.2$
II. Cubic crystals with truncated edges and apexes (see Fig. 2) having a size in the range from about 0.5 µm to about 15 µm (see Figs. 5 and 6), are obtained under the following A, y, and TAC values:
   II.1. $0.0051 \leq A \leq 0.023$ $0.00255 \leq TAC \leq 0.015$ $1.8 \leq y \leq 2.2$
   II.2.
   $0.023 < A \leq 0.037$ $0.01 \leq TAC \leq 0.0162$ $1.3 \leq y \leq 2.2$

The aspect ratio e/L (e is the wideness of the edge and L is the length of the crystal) increases from about 0.12 (see Fig. 2a) to about 0.22 (see Fig. 2b) when y decreases from 2.0 to 1.6. For y < 1.6 e/L = constant and does not change with further decrease of y.
III. Cubic crystals with "rounded" edges and apexes (see Fig. 7) having a size in the range from about 0.5 µm to about 11 µm (see Fig. 8), are obtained under the following A, y, and TAC values:
III.1. $0.0165 < A \leq 0.026$ $0.0053 \leq TAC \leq 0.03$ $1.3 \leq y \leq 2.2$
III.2 $0.0165 < A \leq 0.042$ $0.015 \leq TAC \leq 0.04$ $1.6 \leq y \leq 2.2$
IV. Face-less (FLA; see Fig. 9) LTA-type Na,Ca-zeolites having a size in the range from about 0.4 µm to about 5 µm (see Fig. 10), are obtained under the following A, y, and TAC values: $0.026 < A \leq 0.065$ $0.035 \leq TAC \leq 0.06$ $1.2 \leq y \leq 1.4$

The particulate properties (particle size and shape) do not change with the addition of the solution of calcium hydroxide in 0.2 - 0.8 molar potassium nitrate solution.

### Concentrations of Na, Ca, K, Al and Si by atomic absorption spectrometer

Concentrations of sodium, calcium, potassium, aluminium, and silicium in the solutions obtained by firstly dissolving the calcined samples in 1:1 HCl solution. The dissolved solutions are diluted with distilled water to the concentration ranges available for measuring the concentrations measured by the Perkin-Elmer 3030B atomic absorption spectrometer.

### The average crystal size Lₐᵥ, specific number of particles N_{S}, and geometrical specific surface area GSSA of zeolite LTA-type Na,Ca-zeolites

The appropriate values of Lₐᵥ, N_{S}, and GSSA are determined from the corresponding particle size distribution data (Z. I. Kolar, J. J. M. Binsma and B. Subotić, *J. Cryst. Growth* 1992, 116, 473.; B. Subotić, N. Mažić and I. Šmit in: B. Držaj, S. Hočevar, S. Pejovnik (Eds.), *Zeolites: Synthesis, Structure, Technology and Application, Studies in Surface Science and Catalysis No.24,* Elsevier, Amsterdam, 1985, p. 207.): ${L}_{av} = \sum {L}_{i} \times {N}_{i} / \sum {N}_{i} = G 1 \times \sum {D}_{i} \times {N}_{i} / \sum {N}_{i}$ ${N}_{S} = \sum {N}_{i} / G 2 \times ρ \times \sum {N}_{i} {\left({L}_{i}\right)}^{3} = \sum {N}_{i} / {\left(G1\right)}^{3} \times G 2 xρ \times \sum {N}_{i} \times {\left({D}_{i}\right)}^{3}$ $\begin{matrix}GSSA = \left[G3\times \sum {N}_{i} \times {\left({L}_{i}\right)}^{2}\right] / \left[G2\times ρ\times \sum {N}_{i} \times {\left({L}_{i}\right)}^{3}\right] \\ = \left[{\left(G1\right)}^{2}\times G3\times \sum {N}_{i} \times {\left({D}_{i}\right)}^{2}\right] / \left[{\left(G1\right)}^{3}\times G2\times ρ\times \sum {N}_{i} \times {\left({D}_{i}\right)}^{3}\right]\end{matrix}$ where L = G1×D, D is the diameter of the sphere having the same volume as the cubic particle whose size is determined by the linear dimension (e.g., edge length, L), Nᵢ is the number frequency of the particles (crystals) having a size (equivalent spherical diameter) between D and ΔD, Dᵢ = D + ΔD/2, ρ = 2 g/cm³ is the density of zeolite A, G1 = L/D is the ratio between a linear dimension (edge length, L) of a cubic particle and the diameter D of the spherical particle having the same volume as the cubic one (see Table 1), $G 3 = 1 - {\left(e/L\right)}^{2} \times \left[\left(6+0.7755\times \left(e/L\right)\right.\right] / {\left[1+1.414\times \left(e/L\right)\right]}^{3}$ is the volume geometrical shape factor (see Table 1) and $G 3 = \left\{6+12\times \left(e/L\right)\times \left[1+4\times \left(e/L\right)/9\right]\right\} / {\left[1+1.414\times \left(e/L\right)\right]}^{2}$ is the surface geometrical shape factor.

Variables are e and L, where e is the wideness of the edge ({0 1 1} crystal plane (see Fig. 2) and L is the distance between two opposite {0 0 1} crystal planes.

Volume V, of cubic crystals with sharp edges and apexes (see Fig. 1) can be expressed in two ways: ${V}_{L} = {L}^{3}$ and ${V}_{D} = \left(π/6\right) \times {D}^{3}$ where L is the edge length and D is the diameter of the spherical particle having the same volume as the cubic one. Thus, ${L}^{3} = \left(π/6\right) \times {D}^{3}$ and hence, $G 1 = L / D = {\left(π/6\right)}^{1 / 3} = 0.806$

The geometrical surface area, GSA_{C} of the cube (e.g., cubic crystals with sharp edges and apexes) can be expressed as, ${GSA}_{C} = G 2 \times {L}^{2} = 6 \times {L}^{2}$ and thus, G2 = 6. In addition, from Eq. (1)
V = G3×L³ = 1×L³. and thus, G3 = 1

Volume V, of spherically-shape face-less particles (see Fig. 9) can be expressed by Eq. (2). Since for spherical particles the face-less particles, V_{L} and V_{D} are the same, $G 1 = L / D = 1$

The geometrical surface area (GSA_{S}) of the sphere (face-less particles) is, ${GSA}_{S} = G 2 \times {D}^{2} = π \times {D}^{2}$ and thus, G2 = π = 3.145

Finally, from Eq. (2), volume, V_{S} = V_{D} of the sphere can be expressed as, ${V}_{S} = G 3 \times {D}^{3} = \left(π/6\right) \times {D}^{3}$ and thus, G3 = (π/6) = 0.524

By analysis of a large number of samples of LTA-type zeolite with truncated edges and apexes, having different e/L ratios (from 0.155 to 0.28), we derived empiric formulas for the calculation of the values of G1, G2, and G3 as a function of e/L, $G 1 = {\left[π/\left(6\times G3\right)\right]}^{1 / 3}$ $G 2 = \left\{6+12\times \left(e/L\right)\times \left[1+4\times \left(e/L\right)/9\right]\right\} / {\left[1+1.414\times \left(e/L\right)\right]}^{2}$ and $G 3 = 1 - {\left(e/L\right)}^{2} \times \left[6+0.7755\times \left(e/L\right)\right] / {\left[1+1.414\times \left(e/L\right)\right]}^{3}$

Since the crystals of LTA-type zeolite A with rounded edges and apexes do not have some specific attributes (e.g., regular cube, regular sphere, surfaces defined by e and L) the shape factors G1, G2, and G3 cannot be strictly calculated for this morphology. From Figs. 1, 2a, and 8, it can be concluded that the values of G1, G2, and G3 for zeolite crystals with rounded edges and apexes [G1(r), G2(r), and G3(r)] are between the values of G1, G2, and G3 for cubic crystals with sharp edges and apexes [G1(s), G2(s), and G3(s)] and the values of G1, G2, and G3 for cubic crystals with truncated edges and apexes [e/L = 0.12; G1(t), G2(t), and G3(t)]. They are thus estimated, $G 1 \left(r\right) = \left[G1\left(s\right)+G1\left(t\right)\right] / 2 = \left(0.806+0.821\right) / 2 = 0.814 ;$ $G 2 \left(r\right) = \left[G2\left(s\right)+G2\left(t\right)\right] / 2 = \left(6+4.98\right) / 2 = 5.49 ; and$ $G 3 \left(r\right) = \left[G3\left(s\right)+G3\left(t\right)\right] / 2 = \left(1+0.865\right) / 2 = 0.933 .$

The shape factors G1, G2 and G3 for the LTA-type Na,Ca-zeolites having different shapes are listed in Table 1.

**Table 1 The numerical values of the shape factors G1, G2, and G3 which correspond to LTA-type zeolite particles having different morphologies**

| Numerical value of the shape factor / Particle shape | **G1** | **G2** | **G3** |
|---|---|---|---|
| Cubic with sharp edges and apexes (Fig. 1) | 0.806 | 6.000 | 1.000 |
| Cubic with truncated edges and apexes (Fig. 2a) with e/L = 0.12 | 0.819 | 5.727 | 0.945 |
| Cubic with truncated edges and apexes (Fig. 2b) with e/L = 0.22 | 0.844 | 5.517 | 0.869 |
| Cubic with "rounded" edges and apexes (Fig. 7) | 0.813 | 5.864 | 0.973 |
| Face-less (Fig. 9) | 1.000 | 3.145 | 0.524 |

The average crystal size Lav, specific number of particles NS, and geometrical specific surface area GSSA calculated using the values ΔD, Di, and Ni from the corresponding particle size distribution by the number shown in pattern A of Fig. 4 for cubic crystals with sharp edges and apexes; in Fig. 5 (A) for cubic crystals with truncated edges and apexes having the aspect ratio e/L = 0.12; in Fig. 6 (A) for cubic crystals with truncated edges and apexes having the aspect ratio e/L = 0.22, in Fig. 8 (A) for cubic crystals with "rounded" edges and apexes and Fig. 10 (A), for zeolite FLA, as well as the appropriate numerical values of the factors G1, G2, and G3, are shown in Example 8. ND is the number percentage of the particles (crystals) having the corresponding spherical diameter D. The corresponding pattern B in Fig. 4, 5, 6, 8, 10 corresponds to VD as the volume percentage of the particles (crystals) having the corresponding spherical diameter D.

### Real (BET and Langmuir) specific surface area

The external surface areas of the samples of LTA-type Na,Ca-zeolites are determined by single-point nitrogen adsorption using a Micromeritics FlowSorb II 2300 instrument. Prior to the measurement, the samples were degassed at 80 °C for 1 h to desorb the loosely held moisture from the outer surface of the samples. The external specific surface areas of the analyzed samples are calculated on the basis of BET adsorption isotherms. The values of real external specific surface area, RSSA(BET), determined on the basis of BET adsorption isotherm, are shown in Example 8.

### Examples

### Example 1: chemical synthesis of pure LTA Na-zeolites

Five different hydrogels with different oxide ratios were prepared. The five different hydrogel mixtures result in different LTA Na-zeolite morphologies.

The different hydrogels are prepared by mixing sodium aluminate solution and sodium silicate solution (having chemical compositions with respect to Na₂O, Al₂O₃, and H₂O, as specified in Table 2) at ambient temperature.

200 ml of each hydrogel is transferred into a 350 ml stainless-steel reaction vessel provided with a thermostat-jacket and fitted with a water-cooled reflux condenser and thermometer. The reaction mixtures (hydrogels), prepared as described above, are heated at a reaction temperature T_{R} = 80 °C under stirring with a propeller, until the complete amount of amorphous phase has been transformed into a crystalline phase. After crystallization has completed, the phases were separated, the solid products were washed and dried. The chemical, structural, morphological and particulate properties are determined as described above.

Chemical, structural, morphological and particulate properties of the LTA zeolite, synthesized in accordance with the Example 1, are shown in Examples 5 - 8, respectively.

**Table 2 Hydrogel oxide ratios**

| **Hydrogel** | **A [Na₂O/H₂O]** | **TAC [SiO₂/H₂O]** | **y [SiO₂/Al₂O₃]** |
|---|---|---|---|
| 1 | 0.0136 | 0.0044 | 2.0 |
| 2 | 0.0100 | 0.0086 | 1.8 |
| 3 | 0.0230 | 0.0100 | 1.7 |
| 4 | 0.0350 | 0.0350 | 1.6 |
| 5 | 0.0350 | 0.0570 | 1.3 |

### Example 2: preparation of LTA-type Na,Ca-zeolites with different Ca²⁺ concentrations

Five different hydrogels are prepared in accordance with Example 1 (Table 2).

200 ml of the respective hydrogel is transferred into 350 ml stainless-steel reaction vessel provided with a thermostat- jacket and fitted with a water-cooled reflux condenser and thermometer. The reaction mixtures (hydrogels) are heated at T_{R} = 80 °C under stirring by a propeller. Calcium hydroxide (Ca(OH)₂), dispersed in 25 ml of demineralized water, is added at the given amount (see Table 3 below) to the reaction vessel, under continuous stirring, at the given reaction time t_{c}(add) (see Table 3 below). After the calcium hydroxide solution is added to the reaction vessel, the reaction mixture is continuously heated, under stirring, until the complete amount of amorphous phase has been transformed into the crystalline phase (for the total time t_{a-c}). After crystallization has completed, the phases were separated, the solid products were washed and dried. The chemical, structural, morphological and particulate properties are determined as described above.

Chemical, structural, morphological and particulate properties of the LTA zeolite, synthesized in accordance with the Example 2, are shown in Examples 5 - 8, respectively.

**Table 3 Amount of Ca(OH)₂, time of addition t_{c}(add) and total reaction time t_{a-c} after addition**

| **Hydrogel** | **m(Ca(OH)₂) [g/(25 ml)]** | **t_{c}(add) [min]** | **t_{a-c} [min]** |
|---|---|---|---|
| 1A | 0.5 | 130-145 | 160 |
| 1B | 1.5 | 130-145 | 160 |
| 1C | 3 | 130-145 | 160 |
| 2A | 0.5 | 120-135 | 150 |
| 2B | 2 | 120-135 | 150 |
| 2C | 4 | 120-135 | 150 |
| 3A | 1 | 120-135 | 150 |
| 3B | 3 | 120-135 | 150 |
| 3C | 6 | 120-135 | 150 |
| 4A | 2 | 105-117 | 130 |
| 4B | 5 | 105-117 | 130 |
| 4C | 8 | 105-117 | 130 |
| 5A | 3 | 144-162 | 180 |
| 5B | 6 | 144-162 | 180 |
| 5C | 11.5 | 144-162 | 180 |

### Example 3: Influence of the concentration of potassium nitrate on LTA-type Na,Ca-zeolites

Five different hydrogels are prepared in accordance with Example 1 (Table 2).

200 ml of the respective hydrogel is transferred into 350 ml stainless-steel reaction vessel provided with a thermostat- jacket and fitted with a water-cooled reflux condenser and thermometer. The reaction mixtures (hydrogels) are heated at T_{R} = 80 °C under stirring by a propeller. Calcium hydroxide (Ca(OH)₂), dispersed in 25 ml of 0.1 - 1 molar solution of potassium nitrate (KNO₃), is added to the reaction vessel, under continuous stirring, at the given reaction time t_{c}(add) (see Table 4 below). After the calcium hydroxide solution is added to the reaction vessel, the reaction mixture is continuously heated at T_{R}, under stirring, until the complete amount of amorphous phase has been transformed into the crystalline phase (for the total time t_{a-c}). After crystallization has completed, the phases were separated, the solid products were washed and dried. The chemical, structural, morphological and particulate properties are determined as described above.

Chemical, structural, morphological and particulate properties of the LTA zeolite, synthesized in accordance with the Example 3, are shown in Examples 5 - 8, respectively.

**Table 4 Different concentration of KNO₃ in solution on constant amounts of CaOH₂ in the hydrogels 1-5.**

| **Hydrogel** | **m(Ca(OH)₂) [g/(25 ml)]** | **t_{c}(add) [min]** | **t_{a-c} [min]** | **KNO₃ [mol/l]** |
|---|---|---|---|---|
| 1A | 2.0 | 130-145 | 160 | 0.05 |
| 1B | 2.0 | 130-145 | 160 | 0.10 |
| 1C | 2.0 | 130-145 | 160 | 0.20 |
| 1D | 2.0 | 120-135 | 160 | 0.50 |
| 1E | 2.0 | 120-135 | 160 | 0.65 |
| 1F | 2.0 | 120-135 | 160 | 0.80 |
| 1G | 2.0 | 120-135 | 160 | 1.00 |
| 2A | 2.0 | 120-135 | 150 | 0.05 |
| 2B | 2.0 | 120-135 | 150 | 0.10 |
| 2C | 2.0 | 105-117 | 150 | 0.20 |
| 2D | 2.0 | 105-117 | 150 | 0.50 |
| 2E | 2.0 | 105-117 | 150 | 0.65 |
| 2F | 2.0 | 144-162 | 150 | 0.80 |
| 2G | 2.0 | 144-162 | 150 | 1.00 |
| 3A | 3.0 | 144-162 | 150 | 0.05 |
| 3B | 3.0 | 130-145 | 150 | 0.10 |
| 3C | 3.0 | 130-145 | 150 | 0.20 |
| 3D | 3.0 | 130-145 | 150 | 0.50 |
| 3E | 3.0 | 120-135 | 150 | 0.65 |
| 3F | 3.0 | 120-135 | 150 | 0.80 |
| 3G | 3.0 | 120-135 | 150 | 1.00 |
| 4A | 3.5 | 120-135 | 130 | 0.05 |
| 4B | 3.5 | 120-135 | 130 | 0.10 |
| 4C | 3.5 | 120-135 | 130 | 0.20 |
| 4D | 3.5 | 105-117 | 130 | 0.50 |
| 4E | 3.5 | 105-117 | 130 | 0.65 |
| 4F | 3.5 | 105-117 | 130 | 0.80 |
| 4G | 3.5 | 144-162 | 130 | 1.00 |
| 5A | 6.0 | 144-162 | 180 | 0.05 |
| 5B | 6.0 | 144-162 | 180 | 0.10 |
| 5C | 6.0 | 130-145 | 180 | 0.20 |
| 5D | 6.0 | 130-145 | 180 | 0.50 |
| 5E | 6.0 | 130-145 | 180 | 0.65 |
| 5F | 6.0 | 120-135 | 180 | 0.80 |
| 5G | 6.0 | 120-135 | 180 | 1.00 |

### Example 4: Influence of the amount of calcium hydroxide, dispersed in potassium nitrate of defined concentration, on LTA-type Na,Ca-zeolites

Five different hydrogels are prepared in accordance with Example 1 (Table 2).

200 ml of the respective hydrogel is transferred into 350 ml stainless-steel reaction vessel provided with a thermostat- jacket and fitted with a water-cooled reflux condenser and thermometer. The reaction mixtures (hydrogels) are heated at T_{R} = 80 °C under stirring by a propeller. Calcium hydroxide (Ca(OH)₂) in different amounts, dispersed in 25 ml of 0.5 molar solution of potassium nitrate (KNO₃), is added to the reaction vessel, under continuous stirring, at the given reaction time t_{c}(add) (see Table 5 below). After the calcium hydroxide solution is added to the reaction vessel, the reaction mixture is continuously heated, under stirring, until the complete amount of amorphous phase has been transformed into the crystalline phase (for the total time t_{a-c}). After crystallization has completed, the phases were separated, the solid products were washed and dried. The chemical, structural, morphological and particulate properties are determined as described above.

Chemical, structural, morphological and particulate properties of the LTA zeolite, synthesized in accordance with the Example 4, are shown in Examples 5 - 8, respectively.

**Table 5 Different amounts of CaOH₂ in KNO₃ solution with constant concentration in the hydrogels 1-5**

| **Hydrogel** | **m(Ca(OH)₂) [g/(25 ml)]** | **t_{c} (add) [min]** | **t_{a-c} [min]** | **KNO₃ [mol/l]** |
|---|---|---|---|---|
| 1A | 0.5 | 130-145 | 160 | 0.5 |
| 1B | 1.0 | 130-145 | 160 | 0.5 |
| 1C | 1.5 | 130-145 | 160 | 0.5 |
| 1D | 2.0 | 120-135 | 160 | 0.5 |
| 1E | 2.5 | 120-135 | 160 | 0.5 |
| 1F | 3.0 | 120-135 | 160 | 0.5 |
| 2A | 0.5 | 120-135 | 150 | 0.5 |
| 2B | 1.0 | 120-135 | 150 | 0.5 |
| 2C | 1.5 | 120-135 | 150 | 0.5 |
| 2D | 2.0 | 105-117 | 150 | 0.5 |
| 2E | 2.5 | 105-117 | 150 | 0.5 |
| 2F | 3.0 | 105-117 | 150 | 0.5 |
| 2G | 3.5 | 144-162 | 150 | 0.5 |
| 2H | 4.0 | 144-162 | 150 | 0.5 |
| 3A | 0.5 | 144-162 | 150 | 0.5 |
| 3B | 1.0 | 130-145 | 150 | 0.5 |
| 3C | 1.5 | 130-145 | 150 | 0.5 |
| 3D | 2.0 | 130-145 | 150 | 0.5 |
| 3E | 3.0 | 120-135 | 150 | 0.5 |
| 3F | 4.0 | 120-135 | 150 | 0.5 |
| 3G | 5.0 | 120-135 | 150 | 0.5 |
| 3H | 6.0 | 120-135 | 150 | 0.5 |
| 4A | 1.0 | 120-135 | 130 | 0.5 |
| 4B | 2.0 | 120-135 | 130 | 0.5 |
| 4C | 3.5 | 105-117 | 130 | 0.5 |
| 4D | 5.0 | 105-117 | 130 | 0.5 |
| 4E | 6.5 | 105-117 | 130 | 0.5 |
| 4F | 8.0 | 144-162 | 130 | 0.5 |
| 5A | 1.0 | 144-162 | 180 | 0.5 |
| 5B | 3.0 | 144-162 | 180 | 0.5 |
| 5C | 4.5 | 130-145 | 180 | 0.5 |
| 5D | 6.0 | 130-145 | 180 | 0.5 |
| 5E | 7.5 | 130-145 | 180 | 0.5 |
| 5F | 9.0 | 120-135 | 180 | 0.5 |
| 5G | 10.5 | 120-135 | 180 | 0.5 |
| 5H | 11.5 | 130-145 | 180 | 0.5 |

An average reaction yield, Y_{R}, was determined on the basis of repeatedly performed synthesis procedures for each of the reaction mixtures (hydrogels 1 - 5). The measured, average values of the reaction yields, Y_{R}(meas), are compared to the reaction yields, Y_{R}(calc), calculated as outlined in the method section above (Table 6).

**Table 6 reaction yields as measured Y_{R}(meas) and calculated Y_{R}(calc)**

| **Hydrogel** | **A** | **TAC** | **y** | **Y_{R}(meas) [g]** | **Y_{R}(calc) [g]** |
|---|---|---|---|---|---|
| 1 | 0.0136 | 0.0044 | 2.0 | 5.427 | 5.480 |
| 2 | 0.0100 | 0.0086 | 1.4 | 7.791 | 7.746 |
| 3 | 0.0230 | 0.0100 | 1.7 | 10.186 | 10.376 |
| 4 | 0.0350 | 0.0350 | 1.6 | 15.227 | 15.528 |
| 5 | 0.0350 | 0.0570 | 1.3 | 20.728 | 20.656 |

For a given reaction mixture (hydrogel), the reaction yield is not influenced by addition of calcium hydroxide and potassium nitrate into the reaction mixture.

### Example 5: XRD analysis of the solid samples of Examples 1-4

The samples obtained in Examples 1 - 4 were analyzed by XRD.

All the samples prepared as described in Example 1 have XRD patterns characteristic of fully crystalline LTA Na-zeolites (see XRD in Fig. 3a). N_{D} is the number percentage and V_{D} is the volume percentage of the particles (crystals) having the corresponding spherical diameter D.

All samples prepared as described in Example 2 appear as mixtures of LTA-type Na,Ca-zeolite and amorphous Na,Ca-aluminosilicate. The fraction of the amorphous phase increases with increasing amount of calcium hydroxide. For m(Ca(OH)₂) > 8 g in 25 ml, traces of calcium silicate appear in the products.

All samples prepared by the addition of calcium hydroxide dispersed in 0.2, 0.5 and 0.65 mol/l solution of potassium nitrate, as described in Example 3, have XRD patterns characteristic for fully crystalline LTA-type Na,Ca-zeolite (see XRD in Fig. 3a). However, if the concentration of potassium nitrate is lower than 0.2 mol/l, a mixture of LTA zeolite and amorphous calcium aluminosilicate can be observed. On the other hand, if the concentration of potassium nitrate is higher than 0.8 mol/l, undefined crystalline and/or amorphous phase(s) are formed.

All samples prepared as described in Example 4 have XRD patterns characteristic of fully crystalline LTA-type Na,Ca-zeolite (see XRD in Fig. 3a).

### Example 6: Chemical composition of the solid samples of Examples 1 - 4

The dried solid samples, prepared under conditions described in Examples 1 - 4, are kept in a desiccator with saturated NaCl solution for 96 h.

To determine the total water content, a part of each sample, equilibrated over saturated NaCl solution, is weighed and then calcined at 800 °C for 2 h. After calcination, the samples are cooled down in a desiccator over dry silica gel and then weighed again. From the weights of samples before (mₒ) and after calcination (m_{c}), the total content of water ((H₂O)ₜₒₜ in wt.-%) is calculated as follows: ${\left({H}_{2}O\right)}_{tot} = 100 ⋅ \left({m}_{o}-{m}_{c}\right) / 100$

To determine the contents of sodium (Na), potassium (K), calcium (Ca), aluminum (Al), and silicon (Si), a given amount of each of the calcined (waterless) samples is dissolved in a 1:1 HCl aqueous solution. The solution is diluted with distilled water to the concentration ranges available for measuring the concentrations of sodium, calcium, potassium, aluminum, and silicon by atomic absorption spectroscopy. The average contents of Na, K, Ca, Al, and Si (in oxide forms; Na₂O, K₂O, CaO, Al₂O₃, SiO₂), in the samples, prepared as described in Examples 1 - 4, were calculated from the measured concentrations of Na, Al, and Si in the solutions and quantities of the calcined samples dissolved in known volumes of solutions (Tables 7 to 10).

**Table 7 Molar oxide composition of solid samples of Example 1 after hydrothermal treatment**

| **Hydrogel** | **Na2O [wt. %]** | **Al2O3 [wt. %]** | **SiO2 [wt. %]** | **H2O [wt. %]** | **Molar oxide composition** |
|---|---|---|---|---|---|
| 1 | 17.04 | 27.69 | 32.16 | 23.07 | 1.017 Na2O•Al2O3•1.973 SiO2•4.725 H2O |
| 2 | 16.20 | 28.14 | 31.83 | 23.83 | 0.95 Na2O•Al2O3•1.92 SiO2•4.79 H2O |
| 3 | 16.40 | 28.11 | 33.62 | 22.24 | 0.96 Na2O•Al2O3•1.92 SiO2•4.79 H2O |
| 4 | 16.64 | 28.31 | 33.8 | 21.28 | 0.967 Na2O•Al2O3•2.03 SiO2•4.26 H2O |
| 5 | 16.67 | 27.96 | 34.92 | 20.72 | 0.98 Na2O•Al2O3•2.12 SiO2•4.20 H2O |

**Table 8 Molar oxide composition of solid samples of Example 2 after hydrothermal treatment**

| **Hydrogel** | **Na2O [wt. %]** | **Al₂O₃ [wt. %]** | **SiO2 [wt. %]** | **H₂O [wt. %]** | **CaO [wt. %]** | **Molar oxide composition** |
|---|---|---|---|---|---|---|
| 1A | 13.85 | 27.25 | 35.63 | 22.22 | 1.11 | 0.074 CaO•0.836 Na₂O•Al₂O₃•2.2 2 SiO₂•4.62 H₂O |
| 1B | 8.63 | 27.31 | 36.36 | 22.80 | 4.89 | 0.326 CaO•0.52 Na₂O•Al₂O₃• 2.26 SiO₂•4.732 H₂O |
| 1C | 0.83 | 27.25 | 36.59 | 23.66 | 11.68 | 0.78 CaO•0.05 Na₂O•Al₂O₃• 2.28 SiO₂•4.92 H₂O |
| 2A | 14.56 | 27.28 | 35.03 | 21.95 | 1.29 | 0.086 CaO•0.872 Na₂O•Al₂O₃•2.1 8 SiO₂•4.56 H₂O |
| 2B | 8.03 | 27.41 | 36.00 | 22.74 | 5.82 | 0.386 CaO•0.482 Na₂O•Al₂O₃•2.2 3 SiO₂•4.7 H₂O |
| 2C | 1.70 | 26.35 | 35.85 | 25.11 | 11.01 | 0.76CaO•0.106Na₂O•Al₂O₃•2.31 SiO₂•5.4H₂O |
| 3A | 13.60 | 26.57 | 35.05 | 22.65 | 2.13 | 0.146 CaO•0.842 Na₂O•Al₂O₃•2.2 4 SiO₂•4.83 H₂O |
| 3B | 8.46 | 26.75 | 35.61 | 22.80 | 6.37 | 0.433 CaO•0.52 Na₂O•Al₂O₃• 2.26 SiO₂•4.83 H₂O |
| 3C | 0.16 | 26.61 | 35.45 | 26.09 | 11.90 | 0.82 CaO•0.01 Na₂O•Al₂O₃• 2.28 SiO₂•5.6 H₂O |
| 4A | 12.74 | 27.04 | 35.67 | 22.09 | 2.47 | 0.166 CaO•0.775 Na₂O•Al₂O₃•2.2 4 SiO₂•4.63 H₂O |
| 4B | 6.97 | 26.05 | 35.90 | 26.04 | 6.92 | 0.483 CaO•0.44 Na₂O•Al₂O₃•2.42 SiO₂•5.26 H₂O |
| 4C | 1.58 | 25.45 | 36.27 | 26.09 | 10.66 | 0.762 CaO•0.102 Na₂O•Al₂O₃•2.4 2 SiO₂•5.8 H₂O |
| 5A | 12.10 | 26.72 | 35.57 | 22.87 | 2.73 | 0.186 CaO•0.745 Na₂O•Al₂O₃•2.2 6 SiO₂•4.85 H₂O |
| 5B | 6.55 | 25.66 | 36.57 | 25.54 | 5.69 | 0.403 CaO•0.42 Na₂O•Al₂O₃• 2.42 SiO₂•5.64 H₂O |
| 5C | 1.69 | 24.76 | 37.04 | 25.55 | 10.96 | 0.806 CaO•0.112 Na₂O•Al₂O₃•2.5 4 SiO₂•5.85 H₂O |

Although the content of calcium in the products increases with increasing value of m(Ca(OH)₂), the phase (structural) analysis of the product in Example 5 indicates that only a part of calcium-ions is incorporated into the crystalline part of the product (LTA zeolite), and that another part of calcium-ions are distributed among amorphous aluminosilicate, liquid phase and/or calcium silicate. The increased ratio [SiO₂/Al₂O₃] (from 2.22 to 2.54) and the increased water content (from 21.17 wt.-% for m(Ca(OH)₂) = 0.5 g/25 ml to 26.1 wt. % for m(Ca(OH)₂) = 8 g/25 ml) is caused by the increase of the amorphous phase due to increased m(Ca(OH)₂).

All samples prepared by the addition of calcium hydroxide dispersed in 0.2, 0.5 and 0.65 mol/l solution of potassium nitrate into the reaction mixture, as described in Example 3, have XRD patterns characteristic for fully crystalline LTA-type Na,Ca-zeolite (see XRD in Fig. 3a). At a concentration of potassium nitrate lower than 0.2 mol/l, a mixture of LTA zeolite and amorphous calcium aluminosilicate can be observed. On the other hand, at a concentration of potassium nitrate higher than 0.8 mol/l, undefined crystalline and/or amorphous phase(s) are observed.

**Table 9 Molar oxide composition of samples of Example 3 after hydrothermal treatment**

| **Hydrogel** | **Na2O [wt. %]** | **K₂O [wt.%]** | **Al₂O₃ [wt. %]** | **SiO₂ [wt. %]** | **H₂O [wt. %]** | **CaO [wt. %]** | **Molar oxide composition** |
|---|---|---|---|---|---|---|---|
| 1A | 5.95 | - | 27.19 | 36.02 | 21.88 | 8.94 | 0.598 CaO•0.36 Na₂₀•Al₂O₃•2.25 SiO₂•4.56 H₂O |
| 1B | 6.36 | - | 27.53 | 35.19 | 21.77 | 9.14 | 0.604 CaO•0.38 Na₂O•Al₂O₃•2.17 SiO₂•4.48 H₂O |
| 1C | 6.16 | - | 28.14 | 34.30 | 21.60 | 9.81 | 0.634 CaO•0.36 Na₂O•Al₂O₃•2.07 SiO₂•4.35 H₂O |
| 1D | 6.43 | - | 28.22 | 34.23 | 21.46 | 9.85 | 0.622 CaO•0.375 Na₂O•Al₂O₃•2.0 6 SiO₂•4.31 H₂O |
| 1E | 6.36 | - | 28.35 | 33.56 | 2.11 | 9.63 | 0.618 CaO•0.369 Na₂O•Al₂O₃•2.0 1 SiO₂•4.42 H₂O |
| 1F | 4.73 | - | 6.43 | 26.25 | 41.14 | 6.83 | 0.473 CaO•0.22 Na₂O•0.265 K₂O• Al₂O₃•2.66 SiO₂•3.42 H₂O |
| 1G | 3.73 | - | 7.55 | 25.55 | 42.75 | 6.35 | 0.452 CaO•0.24 Na₂O•0.32 K₂O•A I₂O₃•2.84 SiO₂•3.12 H₂O |
| 2A | 6.09 | - | 26.58 | 36.79 | 25.33 | 5.20 | 0.356 CaO•0.377 Na₂O•Al₂O₃•2.3 5 SiO₂•5.4 H₂O |
| 2B | 6.15 | - | 26.48 | 35.57 | 26.36 | 5.47 | 0.376 CaO•0.382 Na₂O•Al₂O₃•2.2 8 SiO₂•5.64 H₂O |
| 2C | 9.74 | - | 28.10 | 32.77 | 22.81 | 6.58 | 0.426 CaO•0.570 Na₂O•Al₂O₃•1.9 8 SiO₂•4.60 H₂O |
| 2D | 9.53 | - | 27.75 | 33.84 | 22.24 | 6.63 | 0.435 CaO•0.565 Na₂O•Al₂O₃•2.0 7 SiO₂•4.54 H₂O |
| 2E | 9.70 | - | 28.19 | 32.54 | 23.03 | 6.54 | 0.422 CaO•0.566 Na₂O•Al₂O₃•1.9 6 SiO₂•4.63 H₂O |
| 2F | 6.53 | 5.15 | 25.57 | 41.27 | 16.40 | 5.09 | 0.362 CaO•0.42 Na₂O•0.218 K₂O• Al₂O₃•2.74 SiO₂•3.63 H₂O |
| 2G | 5.35 | 7.51 | 25.43 | 43.13 | 14.13 | 4.54 | 0.318 CaO•0.346 Na₂O•0.32 K₂O• Al₂O₃•2.88 SiO₂•3.15 H₂O |
| 3A | 7.66 | - | 26.25 | 36.01 | 24.27 | 5.80 | 0.402 CaO•0.48 Na₂O•Al₂O₃•2.33 SiO₂•5.24 H₂O |
| 3B | 8.05 | - | 27.15 | 34.86 | 24.10 | 5.88 | 0.394 CaO•0.488 Na₂O•Al₂O₃•2.1 8 SiO₂•5.03 H₂O |
| 3C | 8.60 | - | 27.85 | 33.14 | 22.91 | 7.50 | 0.490 CaO•0.508 Na₂O•Al₂O₃•2.0 2 SiO₂•4.66 H₂O |
| 3D | 8.26 | - | 28.16 | 32.84 | 22.70 | 7.71 | 0.498 CaO•0.500 Na₂O•Al₂O₃•1.9 8 SiO₂•4.57 H₂O |
| 3E | 8.56 | - | 28.16 | 32.84 | 22.70 | 7.79 | 0.50 CaO•0.494 Na₂O•Al₂O₃•2.01 SiO₂•4.48 H₂O |
| 3F | 6.37 | 3.63 | 26.22 | 40.91 | 17.26 | 5.81 | 0.398 CaO•0.40 Na₂O•0.150 K₂O• Al₂O₃•2.64 SiO₂•3.73H₂O |
| 3G | 5.10 | 5.71 | 25.74 | 43.36 | 14.63 | 5.46 | 0.386 CaO•0.326 Na₂O•0.24 K₂O• Al₂O₃•2.86 SiO₂•3.22H₂O |
| 4A | 8.69 | - | 27.50 | 36.93 | 22.32 | 4.57 | 0.302 CaO•0.52 Na₂O•Al₂O₃•2.28 SiO₂•4.60 H₂O |
| 4B | 8.80 | - | 26.82 | 36.33 | 23.00 | 5.04 | 0.342 CaO•0.54 Na₂O•Al₂O₃•2.30 SiO₂•4.86 H₂O |
| 4C | 10.04 | - | 27.80 | 33.08 | 23.16 | 5.92 | 0.387 CaO•0.594 Na₂O•Al₂O₃•2.0 2 SiO₂•4.72 H₂O |
| 4D | 10.25 | - | 28.01 | 33.76 | 21.87 | 6.10 | 0.39 CaO•0.60 Na₂O•Al₂O₃•2.04 S iO₂•4.41 H₂O |
| 4E | 10.25 | - | 28.28 | 32.98 | 22.56 | 5.94 | 0.382 CaO•0.596 Na₂O•Al₂O₃•1.9 8 SiO₂•4.52 H₂O |
| 4F | 8.63 | 3.64 | 26.29 | 39.32 | 17.81 | 4.31 | 0.298 CaO•0.54 Na₂O•0.150 K₂O• Al₂O₃•2.54 SiO₂•3.84H₂O |
| 4G | 6.64 | 5.68 | 25.65 | 43.22 | 14.26 | 4.54 | 0.322 CaO•0.426 Na₂O•0.24 K₂O• Al₂O₃•2.86 SiO₂•3.15H₂O |
| 5A | 8.17 | - | 27.26 | 35.00 | 22.71 | 6.86 | 0.458 CaO•0.493 Na₂O•Al₂O₃•2.1 8 SiO₂•4.72 H₂O |
| 5B | 8.07 | - | 26.71 | 35.87 | 22.81 | 6.55 | 0.446 CaO•0.497 Na₂O•Al₂O₃•2.2 8 SiO₂•4.84 H₂O |
| 5C | 8.44 | - | 27.66 | 33.07 | 23.53 | 7.30 | 0.480 CaO•0.502 Na₂O•Al₂O₃•2.0 3 SiO₂•4.82 H₂O |
| 5D | 8.72 | - | 28.16 | 33.67 | 21.86 | 7.57 | 0.498 CaO•0.51 Na₂O•Al₂O₃•.2.03 SiO₂•4.41 H₂O |
| 5E | 8.62 | - | 28.23 | 32.93 | 22.32 | 7.59 | 0.489 CaO•0.52 Na₂O•Al₂O₃•1.98 SiO₂•4.48 H₂O |
| 5F | 6.89 | 4.42 | 27.01 | 39.45 | 16.96 | 6.19 | 0.417 CaO•0.42 Na₂O•0.14K₂O•Al ₂O₃•2.48 SiO₂•3.56 H₂O |
| 5G | 6.78 | 5.68 | 25.56 | 42.87 | 13.87 | 5.81 | 0.398 CaO•0.401 Na₂O•0.18 K₂O• Al₂O₃•2.74 SiO₂•2.96 H₂O |

**Table 10 Molar oxide composition of samples of Example 4 after hydrothermal treatment.**

| **Hydrogel** | **Na2O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|---|
| 1A | 14.23 | 28.00 | 33.65 | 21.69 | 2.42 | 0.157 CaO•0.836 Na₂O•Al₂O₃ •2.04 SiO₂•4.39 H₂O |
| 1B | 11.60 | 28.08 | 32.74 | 22.88 | 4.83 | 0.313 CaO•0.660 Na₂O•Al₂O₃ •1.98 SiO₂•4.59 H₂O |
| 1C | 9.07 | 28.15 | 32.56 | 23.05 | 7.24 | 0.468 CaO•0.530 Na₂O•Al₂O₃ •1.96 SiO₂•4.64 H₂O |
| 1D | 6.43 | 28.22 | 34.24 | 21.46 | 9.65 | 0.622 CaO•0.375 Na₂O•Al₂O₃ •2.06 SiO₂•4.31 H₂O |
| 1E | 3.78 | 28.29 | 34.16 | 21.27 | 12.05 | 0.775 CaO•0.226 Na₂O•Al₂O₃ •2.05 SiO₂•4.35 H₂O |
| 1F | 1.21 | 28.36 | 32.74 | 23.17 | 14.50 | 0.93 CaO•0.070 Na₂O•Al₂O₃• 1.96 SiO₂•4.63 H₂O |
| 2A | 14.96 | 27.96 | 34.92 | 20.72 | 1.71 | 0.111 CaO•0.886 Na₂O•Al₂O₃ •2.12 SiO2•4.20 H₂O |
| 2B | 13.29 | 28.03 | 33.35 | 21.96 | 3.39 | 0.22 CaO•0.78 Na₂O•Al₂O₃•2. 02 SiO₂•4.44 H₂O |
| 2C | 11.41 | 28.08 | 32.42 | 23.00 | 5.08 | 0.329 CaO•0.668 Na₂O•Al₂O₃ •1.96 SiO₂•4.64 H₂O |
| 2D | 9.09 | 28.13 | 34.81 | 23.18 | 6.77 | 0.438 CaO•0.562 Na₂O•Al₂O₃ •1.98 SiO₂•4.68 H₂O |
| 2E | 7.71 | 28.18 | 33.53 | 22.10 | 8.48 | 0.547 CaO•0.450 Na₂O•Al₂O₃ •2.02 SiO₂•4.44 H₂O |
| 2F | 5.84 | 28.24 | 33.43 | 22.33 | 10.17 | 0.655 CaO•0.340 Na₂O•Al₂O₃ •2.01 SiO₂•4.48 H₂O |
| 2G | 4.09 | 28.29 | 34.00 | 21.77 | 11.85 | 0.762 CaO•0.238 Na₂O•Al₂O₃ •2.04 SiO₂•4.36 H₂O |
| 2H | 2.17 | 28.29 | 32.66 | 23.21 | 13.53 | 0.870 CaO•0.126 Na₂O•Al₂O₃ •1.96 SiO₂•4.65 H₂O |
| 3A | 15.54 | 27.90 | 34.20 | 21.03 | 1.13 | 0.0836 CaO•0.914 Na₂O·Al₂O ₃•2.076 SiO2•4.26 H₂O |
| 3B | 14.18 | 28.01 | 34.98 | 20.27 | 2.57 | 0.167 CaO•0.833 Na₂O•Al₂O₃ •2.12 SiO₂•4.10 H₂O |
| 3C | 11.27 | 28.08 | 33.41 | 22.10 | 5.14 | 0.333 CaO•0.660 Na₂O•Al₂O₃ •2.02 SiO₂•4.46 H₂O |
| 3D | 8.56 | 28.16 | 32.84 | 22.70 | 7.71 | 0.498 CaO•0.500 Na₂O•Al₂O₃ •1.98 SiO₂•4.57 H₂O |
| 3E | 5.78 | 28.23 | 31.93 | 23.76 | 10.29 | 0.663 CaO•0.337 Na₂O•Al₂O₃ •1.92 SiO₂•4.77 H₂O |
| 3F | 2.93 | 28.31 | 33.85 | 22.05 | 12.86 | 0.826 CaO•0.170 Na₂O•Al₂O₃ •2.03 SiO₂•4.41 H₂O |
| 3G | 0.173 | 28.39 | 34.28 | 21.80 | 15.38 | 0.985 CaO•0.01 Na₂O•Al₂O₃• 2.05 SiO₂•4.35 H₂O |
| 4A | 15.00 | 27.88 | 31.98 | 23.30 | 1.72 | 0.112 CaO•0.882 Na₂O•Al₂O₃ •.1.94 SiO₂•4.72 H₂O |
| 4B | 13.23 | 28.02 | 33.34 | 21.90 | 3.44 | 0.223 CaO•0.775 Na₂O•Al₂O₃ •2.07 SiO₂•4.43 H₂O |
| 4C | 10.25 | 28.01 | 33.76 | 21.87 | 6.10 | 0.390 CaO•0.600 Na₂O•Al₂O₃ •2.04 SiO₂•4.41 H₂O |
| 4D | 7.57 | 28.19 | 32.55 | 23.09 | 8.60 | 0.555 CaO•0.442 Na₂O•Al₂O₃ •1.96 SiO₂•4.64 H₂O |
| 4E | 4.81 | 28.26 | 33.79 | 21.95 | 11.19 | 0.720 CaO•0.280 Na₂O•Al₂O₃ •2.03 SiO₂•4.40 H₂O |
| 4F | 1.98 | 28.34 | 32.56 | 23.36 | 13.76 | 0.883 CaO•0.115 Na₂O•Al₂O₃ •1.95 SiO₂•4.67 H₂O |
| 5A | 14.89 | 27.99 | 32.32 | 23.41 | 1.89 | 0.123 CaO•0.875 Na₂O•Al₂O₃ •.1.96 SiO₂•4.74 H₂O |
| 5B | 12.79 | 28.05 | 32.71 | 22.66 | 3.78 | 0.245 CaO•0.750 Na₂O•Al₂O₃ •1.98 SiO₂•4.58 H₂O |
| 5C | 10.81 | 28.10 | 33.43 | 21.97 | 5.67 | 0.367 CaO•0.633 Na₂O•Al₂O₃ •2.02 SiO₂•4.43 H₂O |
| 5D | 8.72 | 28.16 | 33.67 | 21.86 | 7.57 | 0.489 CaO•0.510 Na₂O•Al₂O₃ •2.03 SiO₂•4.40 H₂O |
| 5E | 6.52 | 28.21 | 32.40 | 23.27 | 9.60 | 0.619 CaO•0.380 Na₂O•Al₂O₃ •1.95 SiO₂•4.67 H₂O |
| 5F | 4.52 | 28.27 | 33.87 | 22.35 | 11.41 | 0.734 CaO•0.263 Na₂O•Al₂O₃ •2.01 SiO₂•4.48 H₂O |
| 5G | 2.58 | 28.33 | 33.87 | 21.99 | 13.24 | 0.850 CaO•0.150 Na₂O•Al₂O₃ •2.03 SiO₂•4.40 H₂O |
| 5H | 1.21 | 28.31 | 33.03 | 21.88 | 14.49 | 0.931 CaO•0.070 Na₂O•Al₂O₃ •1.98 SiO₂•4.39 H₂O |

The results of the chemical analysis of the samples from Example 4 are in accordance with the results of structural (XRD) analyzes shown in Example 5 and Figure 4a; the molar oxide ratios [SiO₂/Al₂O₃] = 1.92 - 2.12 and [H₂O/Al₂O₃] = 4.10 - 4.77 of the synthesized solids are close to theoretical values; [SiO₂/Al₂O₃] = 2 and [H₂O/Al₂O₃] = 4.5 are characteristic for LTA zeolites. It has surprisingly shown that LTA-type Na,Ca-zeolites, with a defined Na/Ca ratio (see Tables 11 - 16), can be successfully synthesized by a controlled, one-pot synthesis procedure, as described in Example 4. Γ_{CaO}(meas) is the amount of CaO in one gram of the product (LTA-type Na,Ca-zeolite). [Na/Ca]ₘₑₐₛ is the measured ratio between sodium and calcium-ions in the product. The relations between Y_{R}, m(Ca(OH)₂), Γ_{CaO}(calc) and [Na/Ca] ([Na/Ca]ₘₑₐₛ) are defined as follows: ${Γ}_{CaO} \left(calc.\right) = \frac{261.25 ⋅ m \left[Ca{\left(OH\right)}_{2}\right]}{{Y}_{R}}$ ${\left[\frac{Na}{Ca}\right]}_{calc .} = \frac{1.1905 ⋅ {Y}_{R}}{m \left[Ca{\left(OH\right)}_{2}\right]} - 2$

The influences of Y_{R} and m(Ca(OH)₂) on the amount of calcium-ions, Γ_{CaO}[(mg CaO)/(g zeolite)], and the molar ratio [Na/Ca] in the synthesized zeolites are shown in Tables 11 - 16.

**Table 11 Comparison of measured Γ_{CaO(meas)}, ([Na/Ca]ₘₑₐₛ, and calculated, Γ_{CaO(calc)}, ([Na/Ca]_{calc}, values of hydrogel 1 of Example 4, with respect to the average yield Y_{R} = 5.427 g of product per 100 g of the reaction mixture.**

| **Reaction mixture** | **m(Ca(OH)₂*** | **Γ_{CaO}(meas)*** | **Γ_{CaO}(calc)*** | **[Na/Ca]ₘₑₐₛ*** | **[Na/Ca]_{calc}*** |
|---|---|---|---|---|---|
| 1A. | 0.5 | 24.13 | 24.07 | 10.65 | 9.84 |
| 1B. | 1.0 | 48.27 | 48.14 | 4.35 | 4.46 |
| 1C. | 1.5 | 72.39 | 72.21 | 2.26 | 2.31 |
| 1D. | 2.0 | 96.51 | 96.28 | 1.21 | 1.23 |
| 1E. | 2.5 | 120.67 | 120.35 | 0.583 | 0.584 |
| 1F. | 3.0 | 144.80 | 144.42 | 0.166 | 0.186 |

| | | | | | |
|---|---|---|---|---|---|
| * m(Ca(OH)₂) [(g Ca(OH)₂)/(25 ml suspension/solution)]; Γ_{CaO} [(mg CaO)/(g zeolite)]; [Na/Ca] (mol/mol). | | | | | |

**Table 12 Comparison of measured Γ_{CaO(meas)}, ([Na/Ca]ₘₑₐₛ, and calculated, Γ_{CaO(calc)}, ([Na/Ca]_{calc}, values of hydrogel 2 of Example 4, with respect to the average yield Y_{R} = 7.731 g of product per 100 g of the reaction mixture.**

| **Reaction mixture** | **m(Ca(OH)₂)*** | **Γ_{CaO}(meas)*** | **Γ_{CaO}(calc)*** | **[Na/Ca]ₘₑₐₛ*** | **[Na/Ca]_{calc}*** |
|---|---|---|---|---|---|
| 2A. | 0.5 | 17.10 | 16.90 | 15.86 | 16.41 |
| 2B. | 1.0 | 33.90 | 33.80 | 7.09 | 7.20 |
| 2C. | 1.5 | 50.82 | 50.77 | 4.06 | 4.14 |
| 2D. | 2.0 | 67.74 | 67.52 | 2.57 | 2.60 |
| 2E. | 2.5 | 84.65 | 84.48 | 1.65 | 1.68 |
| 2F. | 3.0 | 101.63 | 101.38 | 1.04 | 1.07 |
| 2G. | 3.5 | 118.57 | 118.27 | 0.625 | 0.630 |
| 2H. | 4.0 | 135.50 | 135.17 | 0.290 | 0.301 |

| | | | | | |
|---|---|---|---|---|---|
| * m(Ca(OH)₂) [(g Ca(OH)₂)/(25 ml suspension/solution)]; Γ_{CaO} [(mg CaO)/(g zeolite)]; [Na/Ca] (mol/mol). | | | | | |

**Table 13 Comparison of measured Γ_{CaO(meas)}, ([Na/Ca]ₘₑₐₛ, and calculated, Γ_{CaO(calc)}, ([Na/Ca]_{calc}, values of hydrogel 3 of Example 4, with respect to the average yield Y_{R} = 10.186 g of product per 100 g of the reaction mixture.**

| **Reaction mixture** | **m(Ca(OH)₂) *** | **Γ_{CaO}(meas)*** | **Γ_{CaO}(calc)*** | **[Na/Ca]ₘₑₐₛ*** | **[Na/Ca]_{calc}*** |
|---|---|---|---|---|---|
| 3A. | 0.5 | 12.85 | 12.82 | 21.87 | 22.25 |
| 3B. | 1.0 | 25.72 | 25.65 | 9.97 | 10.13 |
| 3C. | 2.0 | 51.43 | 51.30 | 3.96 | 4.06 |
| 3D. | 3.0 | 77.16 | 76.94 | 2.01 | 2.04 |
| 3E. | 4.0 | 102.89 | 102.59 | 1.017 | 1.032 |
| 3F. | 5.0 | 128.60 | 128.24 | 0.412 | 0.425 |
| 3G. | 6.0 | 154.32 | 153.89 | 0.020 | 0.021 |

| | | | | | |
|---|---|---|---|---|---|
| * m(Ca(OH)₂) [(g Ca(OH)₂)/(25 ml suspension/solution)]; Γ_{CaO} [(mg CaO)/(g zeolite)]; [Na/Ca] (mol/mol). | | | | | |

**Table 14 Comparison of measured Γ_{CaO(meas)}, ([Na/Ca]ₘₑₐₛ, and calculated, Γ_{CaO(calc)}, ([Na/Ca]_{calc}, values of hydrogel 4 of Example 4, with respect to the average yield Y_{R} = 15.227 g of product per 100 g of the reaction mixture.**

| **Reaction mixture** | **M(Ca(OH)₂)*** | **Γ_{CaO}(meas)*** | **Γ_{CaO}(calc)*** | **[Na/Ca]ₘₑₐₛ*** | **[Na/Ca]_{calc}*** |
|---|---|---|---|---|---|
| 4A. | 1.0 | 17.23 | 17.16 | 15.75 | 16.13 |
| 4B. | 2.0 | 34.40 | 34.31 | 6.96 | 7.06 |
| 4C. | 3.5 | 60.28 | 60.05 | 3.08 | 3.18 |
| 4D. | 5.0 | 86.03 | 85.79 | 1.59 | 1.63 |
| 4E. | 6.5 | 111.84 | 111.52 | 0.779 | 0.789 |
| 4F. | 8.0 | 137.64 | 137.25 | 0.260 | 0.266 |

| | | | | | |
|---|---|---|---|---|---|
| * m(Ca(OH)₂) [(g Ca(OH)₂)/(25 ml suspension/solution)]; Γ_{CaO} [(mg CaO)/(g zeolite)]; [Na/Ca] (mol/mol). | | | | | |

**Table 15 Comparison of measured Γ_{CaO(meas)}, ([Na/Ca]ₘₑₐₛ, and calculated, Γ_{CaO(calc)}, ([Na/Ca]_{calc}, values of hydrogel 5 of Example 4, with respect to the average yield Y_{R} = 20.782 g of product per 100 g of the reaction mixture.**

| **Reaction mixture** | **m[Ca(OH)₂]*** | **Γ_{CaO}(meas)*** | **Γ_{CaO}(calc)*** | **[Na/Ca]ₘₑₐₛ*** | **[Na/Ca]_{calc}*** |
|---|---|---|---|---|---|
| 5A. | 1.5 | 18.90 | 18.86 | 14.23 | 14.49 |
| 5B. | 3.0 | 37.82 | 37.71 | 6.12 | 6.25 |
| 5C. | 4.5 | 56.73 | 56.59 | 3.45 | 3.50 |
| 5D. | 6.0 | 75.63 | 75.14 | 2.09 | 2.12 |
| 5E. | 7.5 | 96.00 | 94.28 | 1.23 | 1.30 |
| 5F. | 9.0 | 113.46 | 113.14 | 0.717 | 0.750 |
| 5G. | 10.5 | 132.37 | 132.00 | 0.363 | 0.356 |
| 5H. | 11.5 | 144.97 | 144.57 | 0.150 | 0.151 |

| | | | | | |
|---|---|---|---|---|---|
| *m(Ca(OH)₂) [(g Ca(OH)₂)/(25 ml suspension/solution)]; Γ_{CaO} [(mg CaO)/(g zeolite)]; [Na/Ca] (mol/mol). | | | | | |

### Example 7: Morphology and size of the solid samples (products: LTA zeolites)

The crystal morphologies of LTA-type zeolites are determined visually from the corresponding SEM images. Fig. 1 shows the regular cubic crystals with sharp edges and apexes. In addition, Fig. 2 shows cubic crystals with truncated edges and apexes. Here, e represents the wideness of the truncated edge and L represents the distance between two opposite {0 0 1} crystal planes. Cubic crystals with rounded edges and apexes are shown in Fig. 7 and face-less particles of the LTA-type zeolite in Fig. 9.

**Table 16 Morphology and size of LTA-type zeolites obtained under the conditions described in Examples 1 - 4, having the structural characteristics presented in Example 5 and chemical compositions presented in Example 6.**

| **Hydrogel** | **Zeolite type** | **Morphology*** | **Size L** | **m(Ca(OH)₂) in 25 ml KNO₃ solution** | **c(KNO₃)** |
|---|---|---|---|---|---|
| 1 | LTA-type | Regular cubic with sharp edges and apexes (cf. SEA Fig. 1) | 1 - 5.5 µm (cf. Fig. 5) | 0.5 - 3 g | 0.2 - 0.8 mol/l |
| 2 | LTA-type | Cubic crystals with truncated edges and apexes (e/L ≈ 0.2, cf. TEA-1 Fig. 2) | 1 - 4.5 µm | 0.5 - 4 g | 0.2 - 0.8 mol/l |
| 3 | LTA-type | Cubic crystals with truncated edges and apexes (e/L ≈ 0.12, cf. TEA-2 Fig. 2) | 0.5 - 15 µm | 0.5 - 6 g | 0.2 - 0.8 mol/l |
| 4 | LTA-type | Cubic crystals with "rounded" edges and apexes (cf. REA Fig. 7) | 0.5 - 11 µm | 1 - 8 g | 0.2 - 0.8 mol/l |
| 5 | LTA-type | Face-less particles (cf. FLA Fig. 9) | 0.5 - 5.5 µm | 1.5 - 11.5 g | 0.2 - 0.8 mol/l |

| | | | | | |
|---|---|---|---|---|---|
| * e/L: e is the wideness of the edge and L is the distance between two opposite {0 0 1} crystal planes. | | | | | |

In all hydrogels performed under said conditions, resulting in LTA-types Na,Ca-zeolites, the different morphologies and sizes were maintained compared to the corresponding LTA-type Na-zeolites.

### Example 8: Surface properties of the solid samples (products: LTA-type zeolites)

The values for average crystal size Lₐᵥ, specific number of particles N_{S}, real specific surface area, RSSA(BET), and geometrical specific surface area GSSA and the ratio, RSSA(BET)/GSSA between the real and geometrical external specific surface area correspond to LTA zeolites having different morphologies. The values are shown in Table 17.

**Table 17 Average crystal size Lav, specific number of particles NS, real specific surface area RSSA(BET), and geometrical specific surface area GSSA and the ratio RSSA(BET)/GSSA between the real and geometrical external specific surface area of different LTA zeolite morphologies.**

| **SAMPLE** | **Lₐᵥ [µm]** | **Nₛ [number of particles/g]** | **RSSA(BET) [m²/g]** | **GSSA[m²/g]** | **RSSA(BET)/GSSA** |
|---|---|---|---|---|---|
| SEA | 1.662 | 9.672x10¹⁰ | 1.630 | 1.472 | 1.110 |
| TEA-1 | 1.303 | 6.650x10¹⁰ | 0.941 | 0.908 | 1.036 |
| TEA-2 | 1.583 | 1.233x10¹¹ | 1.506 | 1.446 | 1.041 |
| REA | 1.291 | 5.880x10¹⁰ | 1.092 | 0.939 | 1.163 |
| FLA | 1.237 | 2.673x10¹¹ | 4.433 | 1.593 | 2.783 |

The values of Lₐᵥ, Nₛ, RSSA(BET), GSSA, and RSSA(BET)/GSSA do not change with the addition of the calcium hydroxide solution in 0.2 - 0.8 molar potassium nitrate solution into the reaction mixtures.

The BET real external specific surface area, RSSA(BET), of LTA zeolites having cubic crystals with sharp edges and apexes (Example 4 1A - F, Table 17 line 1) as well as of zeolite the LTA zeolites having cubic crystals with truncated edges and apexes (regardless to the e/L ratio;
Example 4. 2A - H and 3A - G, Table 17 lines 2 and 3), is almost the same as the geometrical external specific surface area, i.e., RSSA(BET)/GSSA ≈ 1. It is evident that the RSSA(BET)/GSSA does not depend either on the aspect ratio e/L in the range from e/L = 0 (cubic crystals with sharp edges and apexes as shown in Fig. 1; Example 4 1A - F, Table 17 line 1) to e/L = 0.2 (cubic crystals with truncated edges and apexes as shown in Fig. 2; Example 4. 2A - H and 3A - G, Table 17 lines 2 and 3) or the particle (crystal) size distribution (see Figs. 5 and 6).

Surface roughness of zeolite the LTA zeolite having cubic crystals with rounded edges and apexes (Fig. 7; Example 4 4A - F, Table 17 line 4) is higher than the surface roughness of the LTA zeolites having cubic crystals with sharp edges and apexes (Example 4 1A - F, Table 17 line 1) as well as of the LTA zeolite having cubic crystals with truncated edges and apexes (regardless to the e/L ratio; Example 4 2A - H and 3A ₋ G, Table 17 lines 2 and 3) as it is indicated by higher RSSA(BET)/GSSA (= 1.163) for the LTA zeolite having cubic crystals with rounded edges and apexes than the RSSA(BET)/GSSA (≈ 1) for the LTA zeolite having cubic crystals with both sharp and truncated edges and apexes.

The ratio, RSSA(BET)/GSSA (= 2.783) of the zeolite FLA (Example 4 5A - H, Table 17 line 5) is substantially higher than the corresponding RSSA(BET)/GSSA ratios of the LTA-type zeolites having cubic crystals with sharp edges and apexes (Example 4 1A - F, Table 17 line 1) as well as of the LTA zeolites having cubic crystals with truncated edges and apexes (Example 4 2A - H and 3A - G, Table 17 lines 2 and 3) and also higher than the corresponding RSSA/GSSA ratios of the LTA zeolite having cubic crystals with rounded edges and apexes (Example 4 4A - F, Table 17 line 4). The ratio RSSA(BET)/GSSA does not depend on the particle size distribution. This means that the absorption ability (at least for nitrogen) of the zeolite FLA particles is about 2.7 times higher than the absorption ability of the LTA zeolites having cubic crystals with truncated edges and apexes about 2.4 times higher than the adsorption capacity of the LTA zeolites having rounded edges and apexes and about 2.51 times higher than the absorption ability of the LTA zeolites having cubic crystals with sharp and/or truncated edges and apexes.

### Example 9: Exemplary preparation of a hydrogel in step a.

In the following a hydrogel to obtain an LTA-type Na-zeolite having cubic crystals with truncated edges and apexes with e/L = 0.22 is exemplarily prepared starting from A, TAC and y values according to hydrogel 3 (Example 4,Table 6): A = [Na₂O/H₂O] = 0.023, TAC = [SiO₂/H₂O] = 0.01, and y = [SiO₂/Al₂O₃] = 1.7. The example refers to step a. of the method of present disclosure.

The hydrogel is provided in a volume V_{hg} = 1950 mL. To obtain 1950 mL of hydrogel 3, 2.3 mol Na₂O, 1 mol SiO₂ and 0.588 mol Al₂O₃ have to be provided in 1800 mL H₂O (corresponding to 100 mol H₂O). The hydrogel is prepared mixing 1800 mL water with the corresponding amounts of NaOH, SiO2 and Al(OH)₃ at T_{P} = 20 °C indicated in Table 18.

**Table 18 corresponding amounts of NaOH, SiO₂ and Al(OH)₃ in the hydrogel.**

| **Hydrogel proportions (indicated from A, TAC, y)** | **Amounts in 1800 mL H₂O** |
|---|---|
| 2.3 mol Na₂O | 184 g NaOH |
| 1.0 mol SiO₂ | 60.1 g SiO₂ |
| 0.588 mol Al₂O₃ | 98.8 g Al(OH)₃ |

### Example 10: Exemplary preparation of a face-less LTA-type Na,Ca-zeolite (FLA)

In the following an FLA-type Na,Ca-zeolite with a predetermined ratio of [Na/Ca] = 0.3 is exemplarily prepared starting from A, TAC and y values according to hydrogel 5C
(Example 4,Tables 5 and 6): A = [Na₂O/H₂O] = 0.035, TAC = [SiO₂/H₂O] = 0.057, and y = [SiO₂/Al₂O₃] = 1.3.

The hydrogel is provided in a volume V_{hg} = 3192 mL. To obtain 3192 mL of hydrogel 5C, 4.7 mol Na₂O, 7.6 mol SiO₂ and 5.8 mol Al₂O₃ are required. The hydrogel is prepared mixing 2400 mL water (corresponding to 133.33 mol H₂O) with the corresponding amounts of NaOH, SiO₂ and Al(OH)₃ at T_{P} = 20 °C, indicated in Table 19.

**Table 19 corresponding amounts of NaOH, SiO₂ and Al(OH)₃ in the hydrogel.**

| **Hydrogel proportions (indicated from A, TAC, y)** | **Amounts in 2400 mL H₂O** |
|---|---|
| 4.7 mol Na₂O | 373 g NaOH |
| 7.6 mol SiO₂ | 456.6 g SiO₂ |
| 5.8 mol Al₂O₃ | 983 g Al(OH)₃ |

The hydrogel is heated to T_{R} = 80 C. After a heating time t_{c}(add) = 130 - 145 min a solution with a volume V_{ca} containing Ca(OH)₂ and KNO₃ is added. The volume V_{Ca} of the solution is determined V_{Ca} = 0.125 V_{hg} and is thus 399 mL at Volume V_{hg} = 3192 mL. 71.82 g Ca(OH)₂ are dissolved in 399 mL KNO₃ solution (0.5 mol/L) resulting in a solution with the volume V_{ca}. The solution is added to the hydrogel, resulting in 3591 mL reaction mixture. The mixture is continued to be hydrothermally treated, resulting in a total heating time t_{a-c} = 180 min. Subsequently, the phases are separated and the solid phase was washed and dried according to the general procedure as disclosed. From 3591 mL reaction mixture, 776 g of FLA-type zeolite with a ratio of [Na/Ca] = 0.3 were obtained in pure crystallinity (Y_{R} = 20.73 wt. %).

### EMBODIMENTS

The present disclosure also relates to the following numbered embodiments.
1. A method for preparing an LTA-type Na,Ca-zeolite in a one-pot-reaction, wherein the method comprises the steps of:
a) Providing an aluminosilicate hydrogel by mixing an aqueous sodium aluminate solution and an aqueous sodium silicate solution with a total volume V_{hg} at a temperature T_{P}, wherein the aluminosilicate hydrogel is characterized by
   (1) the molar ratio A [Na₂O/H₂O] is within the range of from 0.0051 to 0.065;
   (2) the molar ratio TAC [SiO₂/H₂O] is within the range of from 0.0026 to 0.06; and
   (3) the molar ratio y [SiO₂/Al₂O₃] is within the range of from 1.2 to 2.2;
b) Adjusting the temperature of the aluminosilicate hydrogel provided in step a. to a temperature T_{R} of from 50 to 90 °C;
c) Adding an aqueous calcium hydroxide solution in a volume V_{Ca} to the aluminosilicate hydrogel of step b. at a time t_{c}(add); and
d) Continuing hydrothermal treatment after step c. for a total time t_{a-c}.
2. The method according to embodiment 1, wherein the temperature T_{P} is in the range of from 20 to 90 °C.
3. The method according to any of the preceding embodiments, wherein t_{a-c} is the time for the aluminosilicate hydrogel as provided in step a) to fully crystallize and thereby resulting in the LTA-type Na,Ca-zeolite.
4. The method according to any of the preceding embodiments, wherein t_{c}(add) is in the range of 0.8 to 0.9 of the time t_{a-c}.
5. The method according to any of the preceding embodiments, wherein t_{c}(add) is from 100 to 170 minutes, preferably 105 to 117 minutes, 120 to 135 minutes, 130 to 145 minutes or 144 to 162 minutes.
6. The method according to any of the preceding embodiments, wherein the time t_{a-c} is from 130 to 180 minutes, preferably 130 minutes, 150 minutes, 160 minutes or 180 minutes.
7. The method according to any of the preceding embodiments, wherein the volume V_{Ca} of the aqueous calcium hydroxide solution in step c is 0.100 V_{hg} ≤ V_{Ca} ≤ 0.150 V_{hg}, preferably V_{Ca} = 0.1 V_{hg}, V_{Ca} = 0.110 V_{hg}, V_{Ca} = 0.120 V_{hg}, V_{Ca} = 0.125 V_{hg}, V_{Ca} = 0.130 V_{hg}, V_{Ca} = 0.140 V_{hg}, or V_{Ca} = 0.150 V_{hg}, and most preferably V_{Ca} = 0.125 V_{hg}.
8. The method according to embodiment 7, wherein the concentration of the aqueous calcium hydroxide solution is in the range of from 0.27 mol/L to 6.20 mol/L.
9. The method according to any of the preceding embodiments, wherein the aqueous calcium hydroxide solution of step c contains potassium-ions, preferably wherein the potassium-ions are selected from KNO₃, K₂SO₄, K₂PO₄, KCI, potassium citrate, and potassium lactate, further preferably wherein the potassium-ions are selected from KNO₃.
10. The method according to embodiments 7 to 9, wherein the aqueous calcium hydroxide solution contains potassium-ions in a concentration in the range of from 0.2 mol/L to 0.8 mol/L, preferably in a concentration in the range of from 0.2 mol/L to 0.65 mol/L, further preferably in a concentration of 0.5 mol/L.
11. An LTA-type Na, Ca-zeolite prepared according to a method of any of the preceding embodiments, wherein the zeolite comprises zeolite particles having a form of cubic crystals with sharp edges and apexes;
wherein the zeolite is obtained from a hydrogel in step a) that has a molar ratio A ≤ 0.0136, a molar ratio 0.00255 ≤ TAC ≤ 0.006, and a molar ratio 2.0 ≤ y ≤ 2.2; and
wherein the molar ratio of Ca²⁺ and Na⁺-ions [Ca/Na] = (1-x)/(2x) is determined >0.
12. The zeolite according to embodiment 11, wherein the zeolite is obtained from a hydrogel in step a) that has a molar ratio A = 0.011, A = 0.0115, A = 0.0120, A = 0.0130, or A = 0.0136, preferably A = 0.0136.
13. The zeolite according to embodiments 11 or 12, wherein the zeolite is obtained from a hydrogel in step a) that has a molar ratio TAC = 0.00255, TAC = 0.00300, TAC = 0.00350, TAC = 0.00400, TAC = 0.00444, TAC = 0.00510, TAC = 0.00550, or TAC = 0.00600, preferably TAC = 0.0044.
14. The zeolite according to embodiments 11 to 13, wherein the zeolite is obtained from a hydrogel in step a) that has a molar ratio y = 2.0, y = 2.05, y = 2.1, y = 2.15, or y = 2.2, preferably y = 2.0.
15. The zeolite according to embodiments 11 to 14, wherein the molar ratio of Ca²⁺ and Na⁺-ions is in the range of from 0.01 to 55, and wherein the zeolite has a crystal size in the range of from 1 to 5.5 µm.
16. The zeolite according to embodiments 11 to 15, wherein the molar ratio of Ca²⁺ and Na⁺-ions is in the range of from 0.01 to 11, preferably wherein the ratio is about 0.09, about 0.24, about 0.44, about 0.83, about 1.7 or about 6.6.
17. The zeolite according to any one of the embodiments 11 to 16, wherein the zeolite comprises an average oxide composition with proportions of:

| **Na2O [wt. %]** | **Al₂O₃ [wt. %]** | **SiO2 [wt. %]** | **H₂O [wt. %]** | **CaO [wt. %]** | **Molar oxide composition** |
|---|---|---|---|---|---|
| 14.23 | 28.00 | 33.65 | 21.69 | 2.42 | 0.157 CaO•0.836 Na₂O•Al₂O₃•2.04 SiO₂•4.39 H₂O |
| 11.60 | 28.08 | 32.74 | 22.88 | 4.83 | 0.313 CaO•0.660 Na₂O•Al₂O₃•1.98 SiO₂•4.59 H₂O |
| 9.07 | 28.15 | 32.56 | 23.05 | 7.24 | 0.468 CaO•0.530 Na₂O•Al₂O₃•1.96 SiO₂•4.64 H₂O |
| 6.43 | 28.22 | 34.24 | 21.46 | 9.65 | 0.622 CaO•0.375 Na₂O•Al₂O₃•2.06 SiO₂•4.31 H₂O |
| 3.78 | 28.29 | 34.16 | 21.27 | 12.05 | 0.775 CaO•0.226 Na₂O•Al₂O₃•2.05 SiO₂•4.35 H₂O |
| 1.21 | 28.36 | 32.74 | 23.17 | 14.50 | 0.93 CaO•0.070 Na₂O•Al₂O₃•1.96 SiO₂•4.63 H₂O |

18. An LTA-type Na, Ca-zeolite prepared according to a method of any one of the embodiments 1 to 10, wherein the zeolite comprises zeolite particles having a form of cubic crystals with truncated edges and apexes, comprising a ratio e/L of from 0.1 to 0.15, preferably 0.11, 0.12, 0.13, 0.14 or 0.15;
wherein the zeolite is obtained from a hydrogel in step a) that has a molar ratio 0.0051 ≤ A ≤ 0.023, a molar ratio 0.00255 ≤ TAC ≤ 0.015, and a molar ratio 18 ≤ y ≤ 2.2; and wherein the molar ratio of Ca²⁺ and Na⁺-ions [Ca/Na] = (1-x)/(2x) is determined >0.
19. The zeolite according to embodiment 18, wherein the zeolite is obtained from a hydrogel in step a) that has a molar ratio A = 0.0051, A = 0.0075, A = 0.01, A = 0.0125, A = 0.015, A = 0.0175, A = 0.02, or A = 0.023, preferably A = 0.01.
20. The zeolite according to embodiments 18 or 19, wherein the zeolite is obtained from a hydrogel in step a) that has a molar ratio TAC = 0.00255, TAC = 0.005, TAC = 0.0075, TAC = 0.0086, TAC = 0.01, TAC = 0.00125, or TAC = 0.0150, preferably TAC = 0.0086.
21. The zeolite according to embodiments 18 to 20, wherein the zeolite is obtained from a hydrogel in step a) that has a molar ratio y = 1.4, y = 1.8, y = 1.9, y = 2.0, y = 2.1, or y = 2.2, preferably y = 1.8.
22. The zeolite according to embodiments 18 to 21, wherein the molar ratio of Ca²⁺ and Na⁺-ions is in the range of from 0.01 to 55; and wherein the zeolite has a crystal size in the range of 1 to 4.5 µm.
23. The zeolite according to embodiment 18 or 22, wherein the molar ratio of Ca²⁺ and Na⁺-ions is in the range of from 0.01 to 5, preferably wherein the ratio is about 0.06, about 0.14, about 0.25, about 0.4, about 0.5, about 1.6, or about 3.5.
24. The zeolite according to any one of the embodiments 18 to 23, wherein the zeolite has an average oxide composition with proportions of:

| **Na2O [wt. %]** | **Al₂O₃ [wt. %]** | **SiO2 [wt. %]** | **H₂O [wt. %]** | **CaO [wt. %]** | **Molar oxide composition** |
|---|---|---|---|---|---|
| 14.96 | 27.96 | 34.92 | 20.72 | 1.71 | 0.111 CaO•0.886 Na2O•Al2O3•2.12 SiO2•4.20 H₂O |
| 13.29 | 28.03 | 33.35 | 21.96 | 3.39 | 0.22 CaO•0.78 Na₂O•Al₂O₃•2.02 SiO₂•4.44 H₂O |
| 11.41 | 28.08 | 32.42 | 23.00 | 5.08 | 0.329 CaO•0.668 Na₂O•Al₂O₃•1.96 SiO₂•4.64 H₂O |
| 9.09 | 28.13 | 34.81 | 23.18 | 6.77 | 0.438 CaO•0.562 Na₂O•Al₂O₃•1.98 SiO₂•4.68 H₂O |
| 7.71 | 28.18 | 33.53 | 22.10 | 8.48 | 0.547 CaO•0.450 Na₂O•Al₂O₃•2.02 SiO₂•4.44 H₂O |
| 5.84 | 28.24 | 33.43 | 22.33 | 10.17 | 0.655 CaO•0.340 Na₂O•Al₂O₃•2.01 SiO₂•4.48 H₂O |
| 4.09 | 28.29 | 34.00 | 21.77 | 11.85 | 0.762 CaO•0.238 Na₂O•Al₂O₃•2.04 SiO₂•4.36 H₂O |
| 2.17 | 28.29 | 32.66 | 23.21 | 13.53 | 0.870 CaO•0.126 Na₂O•Al₂O₃•1.96 SiO₂•4.65 H₂O |

25. An LTA-type Na, Ca-zeolite prepared according to a method of any of the embodiments 1 to 10, wherein the zeolite comprises zeolite particles having a form of cubic crystals with truncated edges and apexes, comprising a ratio e/L of from 0.2 to 0.25, preferably 0.2, 0.21, 0.22, 0.23, 0.24, or 0.25;
wherein the zeolite is obtained from a hydrogel in step a) that has a molar ratio 0.02 ≤ A ≤ 0.037, a molar ratio 0.007 ≤ TAC ≤ 0.0162, and a molar ratio 1.3 ≤ y ≤ 2.2; and
wherein the molar ratio of Ca²⁺ and Na⁺-ions [Ca/Na] = (1-x)/(2x) is determined >0.
26. The zeolite according to embodiment 25, wherein the zeolite is obtained from a hydrogel in step a) that has a molar ratio A = 0.02, A = 0.022, A = 0.023, A = 0.025, A = 0.027, A = 0.03, A = 0.035, or A = 0.037, preferably A = 0.023.
27. The zeolite according to embodiments 25 or 26, wherein the zeolite is obtained from a hydrogel in step a) that has a molar ratio TAC = 0.007, TAC = 0.009, TAC = 0.01, TAC = 0.0115, TAC = 0.013, TAC = 0.0145, TAC = 0.0155, or TAC = 0.0162, preferably TAC = 0.01.
28. The zeolite according to embodiments 25 to 27, wherein the zeolite is obtained from a hydrogel in step a) that has a molar ratio y = 1.3, y = 1.5, y = 1.7, y = 2.0, or y = 2.2, preferably y = 1.7.
29. The zeolite according to embodiments 25 to 28, wherein the molar ratio of Ca²⁺ and Na⁺-ions is in the range of from 0.01 to 50, wherein the zeolite has a crystal size in the range of 0.5 to 15 µm.
30. The zeolite according to embodiments 25 to 29, wherein the molar ratio of Ca²⁺ and Na⁺-ions is in the range of from 0.05 to 50, preferably wherein the ratio is about 0.05, about 0.1, about 0.25, about 0.5, about 0.9, about 2.4, or about 49.2.
31. The zeolite according to any one of the embodiments 25 to 30, wherein the zeolite comprises an average oxide composition with proportions of:

| **Na2O [wt. %]** | **Al₂O₃ [wt. %]** | **SiO2 [wt. %]** | **H₂O [wt. %]** | **CaO [wt. %]** | **Molar oxide composition** |
|---|---|---|---|---|---|
| 15.54 | 27.90 | 34.20 | 21.03 | 1.13 | 0.0836 CaO•0.914 Na₂O•Al₂O₃•2.076 SiO2•4.26 H₂O |
| 14.18 | 28.01 | 34.98 | 20.27 | 2.57 | 0.167 CaO•0.833 Na2O•Al2O3•2.12 SiO₂•4.10 H₂O |
| 11.27 | 28.08 | 33.41 | 22.10 | 5.14 | 0.333 CaO•0.660 Na₂O•Al₂O₃•2.02 SiO₂•4.46 H₂O |
| 8.56 | 28.16 | 32.84 | 22.70 | 7.71 | 0.498 CaO•0.500 Na₂O•Al₂O₃•1.98 SiO₂•4.57 H₂O |
| 5.78 | 28.23 | 31.93 | 23.76 | 10.29 | 0.663 CaO•0.337 Na2O•Al2O3•1.92 SiO₂•4.77 H₂O |
| 2.93 | 28.31 | 33.85 | 22.05 | 12.86 | 0.826 CaO•0.170 Na₂O•Al₂O₃•2.03 SiO₂•4.41 H₂O |
| 0.173 | 28.39 | 34.28 | 21.80 | 15.38 | 0.985 CaO•0.01 Na₂O•Al₂O₃•2.05 SiO₂•4.35 H₂O |

32. An LTA-type Na, Ca-zeolite prepared according to a method of any of the embodiments 1 to 10, wherein the zeolite comprises zeolite particles having a form of cubic crystals with rounded edges and apexes;
wherein the zeolite is obtained from a hydrogel in step a) that has a molar ratio 0.0165 ≤ A ≤ 0.0420, a molar ratio 0.0053 ≤ TAC ≤ 0.04, and a molar ratio 1.3 ≤ y ≤ 2.2; and wherein the molar ratio of Ca²⁺ and Na⁺-ions [Ca/Na] = (1-x)/(2x) is determined >0.
33. The zeolite according to embodiment 32, wherein the zeolite is obtained from a hydrogel in step a) that has a molar ratio A = 0.0165, A = 0.02, A = 0.025, A = 0.027, A = 0.03, A = 0.035, A = 0.037, or A = 0.0420, preferably A = 0.035.
34. The zeolite according to embodiments 32 or 33, wherein the zeolite is obtained from a hydrogel in step a) that has a molar ratio TAC = 0.0053, TAC = 0.01, TAC = 0.015, TAC = 0.02, TAC = 0.025, TAC = 0.03, TAC = 0.035, or TAC = 0.04, preferably TAC = 0.035.
35. The zeolite according to embodiments 32 to 34, wherein the zeolite is obtained from a hydrogel in step a) that has a molar ratio y = 1.3, y = 1.5, y = 1.6, y = 1.8, y = 2.0, or y = 2.2, preferably y = 1.6.
36. The zeolite according to embodiments 32 to 35, wherein the molar ratio of Ca²⁺ and Na⁺-ions is in the range of from 0.01 to 55; and wherein the zeolite has a crystal size in the range of 0.5 to 11 µm.
37. The zeolite according to embodiments 32 or 36, wherein the molar ratio of Ca²⁺ and Na⁺-ions is in the range of from 0.05 to 5, preferably wherein the ratio is about 0.06, about 0.14, about 0.3, about 0.63, about 1.3, or about 3.8.
38. The zeolite according to any one of the embodiments 32 to 37, wherein the zeolite comprises an average oxide composition with proportions of:

| **Na2O [wt. %]** | **Al₂O₃ [wt. %]** | **SiO2 [wt. %]** | **H₂O [wt. %]** | **CaO [wt. %]** | **Molar oxide composition** |
|---|---|---|---|---|---|
| 15.00 | 27.88 | 31.98 | 23.30 | 1.72 | 0.112 CaO•0.882 Na₂O•Al₂O₃•.1.94 SiO₂•4.72 H₂O |
| 13.23 | 28.02 | 33.34 | 21.90 | 3.44 | 0.223 CaO•0.775 Na₂O•Al₂O₃•2.07 SiO₂•4.43 H₂O |
| 10.25 | 28.01 | 33.76 | 21.87 | 6.10 | 0.390 CaO•0.600 Na₂O•Al₂O₃•2.04 SiO₂•4.41 H₂O |
| 7.57 | 28.19 | 32.55 | 23.09 | 8.60 | 0.555 CaO•0.442 Na₂O•Al₂O₃•1.96 SiO₂•4.64 H₂O |
| 4.81 | 28.26 | 33.79 | 21.95 | 11.19 | 0.720 CaO•0.280 Na₂O•Al₂O₃•2.03 SiO₂•4.40 H₂O |
| 1.98 | 28.34 | 32.56 | 23.36 | 13.76 | 0.883 CaO•0.115 Na₂O•Al₂O₃•1.95 SiO₂•4.67 H₂O |

39. An LTA-type Na, Ca-zeolite prepared according to a method of any of the embodiments 1 to 10,
wherein the zeolite comprises face-less zeolite particles;
wherein the zeolite is obtained from a hydrogel in step a) that has a molar ratio 0.026 ≤ A ≤ 0.065, a molar ratio 0.035 ≤ TAC ≤ 0.06, and a molar ratio 1.2 ≤ y ≤ 1.4; and
wherein the molar ratio of Ca²⁺ and Na⁺-ions [Ca/Na] = (1-x)/(2x) is determined >0.
40. The zeolite according to embodiment 39, wherein the zeolite is obtained from a hydrogel in step a) that has a molar ratio A = 0.026, A = 0.03, A = 0.035, A = 0.040, A = 0.045, A = 0.05, A = 0.055, A = 0.06, or A = 0.065, preferably A = 0.035.
41. The zeolite according to embodiments 39 or 40, wherein the zeolite is obtained from a hydrogel in step a) that has a molar ratio TAC = 0.035, TAC = 0.04, TAC = 0.045, TAC = 0.05, TAC = 0.055, TAC = 0.057, or TAC = 0.06, preferably TAC = 0.057.
42. The zeolite according to embodiments 39 to 41, wherein the zeolite is obtained from a hydrogel in step a) that has a molar ratio y = 1.2, y = 1.25, y = 1.3, y = 1.35, or y = 1.4, preferably y = 1.3.
43. The zeolite according to embodiments 39 to 42, wherein the molar ratio of Ca²⁺ and Na⁺-ions is in the range of from 0.01 to 55; and wherein the zeolite has a crystal size in the range of 0.4 to 5 µm.
44. The zeolite according to embodiments 39 or 43, wherein the molar ratio of Ca²⁺ and Na⁺-ions is in the range of from 0.05 to 7, preferably the ratio is about 0.07, about 0.13, about 0.16, about 0.3, about 0.5, about 0.82, about 1.4, about 2.8, about 3.6, or about 6.7.
45. The zeolite according to any one of the embodiments 39 to 44, wherein the zeolite comprises an average oxide composition with proportions of:

| **Na2O [wt. %]** | **Al₂O₃ [wt. %]** | **SiO2 [wt. %]** | **H₂O [wt. %]** | **CaO [wt. %]** | **Molar oxide composition** |
|---|---|---|---|---|---|
| 14.89 | 27.99 | 32.32 | 23.41 | 1.89 | 0.123 CaO•0.875 Na₂O•Al₂O₃•.1.96 SiO₂•4.74 H₂O |
| 12.79 | 28.05 | 32.71 | 22.66 | 3.78 | 0.245 CaO•0.750 Na₂O•Al₂O₃•1.98 SiO₂•4.58 H₂O |
| 10.81 | 28.10 | 33.43 | 21.97 | 5.67 | 0.367 CaO•0.633 Na₂O•Al₂O₃•2.02 SiO₂•4.43 H₂O |
| 8.72 | 28.16 | 33.67 | 21.86 | 7.57 | 0.489 CaO•0.510 Na₂O•Al₂O₃•2.03 SiO₂•4.40 H₂O |
| 6.52 | 28.21 | 32.40 | 23.27 | 9.60 | 0.619 CaO•0.380 Na₂O•Al₂O₃•1.95 SiO₂•4.67 H₂O |
| 4.52 | 28.27 | 33.87 | 22.35 | 11.41 | 0.734 CaO•0.263 Na₂O•Al₂O₃•2.01 SiO₂•4.48 H₂O |
| 2.58 | 28.33 | 33.87 | 21.99 | 13.24 | 0.850 CaO•0.150 Na₂O•Al₂O₃•2.03 SiO₂•4.40 H₂O |
| 1.21 | 28.31 | 33.03 | 21.88 | 14.49 | 0.931 CaO•0.070 Na₂O•Al₂O₃•1.98 SiO₂•4.39 H₂O |

46. An LTA-type Na, Ca-zeolite of the general formula xNa₂O•(1-x)CaO•Al₂O₃•ySiO₂•zH₂O, comprising uniform zeolite particles, wherein the molar ratios [xNa₂O•(1-x)CaO]/[Al₂O₃] = 1,
y = [SiO₂/Al₂O₃] = 2 and [H₂O/Al₂O₃] is in the range of from 4.5 and 5; and
wherein the molar ratio of Ca²⁺ and Na⁺-ions [Ca/Na] = (1-x)/(2x) is >0.
47. The zeolite according to embodiment 46, wherein the molar ratio of Ca²⁺ and Na⁺-ions is in the range of from 0.01 to 55.
48. The zeolite according to embodiments 46 or 47, wherein the zeolite comprises zeolite particles having a form of cubic crystals with sharp edges and apexes; and wherein the zeolite has a crystal size in the range of 1 to 5.5 µm.
49. The zeolite according to embodiment 48, wherein the molar ratio of Ca²⁺ and Na⁺-ions is in the range of from 0.01 to 11, preferably wherein the ratio is about 0.09, about 0.24, about 0.44, about 0.83, about 1.7, or about 6.6.
50. The zeolite according to any one of the embodiments 48 or 49, wherein the zeolite comprises an average oxide composition with proportions of:

| **Na2O [wt. %]** | **Al₂O₃ [wt. %]** | **SiO2 [wt. %]** | **H₂O [wt. %]** | **CaO [wt. %]** | **Molar oxide composition** |
|---|---|---|---|---|---|
| 14.23 | 28.00 | 33.65 | 21.69 | 2.42 | 0.157 CaO•0.836 Na₂O•Al₂O₃•2.04 SiO₂•4.39 H₂O |
| 11.60 | 28.08 | 32.74 | 22.88 | 4.83 | 0.313 CaO•0.660 Na₂O•Al₂O₃•1.98 SiO₂•4.59 H₂O |
| 9.07 | 28.15 | 32.56 | 23.05 | 7.24 | 0.468 CaO•0.530 Na₂O•Al₂O₃•1.96 SiO₂•4.64 H₂O |
| 6.43 | 28.22 | 34.24 | 21.46 | 9.65 | 0.622 CaO•0.375 Na₂O•Al₂O₃•2.06 SiO₂•4.31 H₂O |
| 3.78 | 28.29 | 34.16 | 21.27 | 12.05 | 0.775 CaO•0.226 Na₂O•Al₂O₃•2.05 SiO₂•4.35 H₂O |
| 1.21 | 28.36 | 32.74 | 23.17 | 14.50 | 0.93 CaO•0.070 Na₂O•Al₂O₃•1.96 SiO₂•4.63 H₂O |

51. The zeolite according to embodiments 46 or 47, wherein the zeolite comprises zeolite particles having a form of cubic crystals with truncated edges and apexes, comprising a ratio e/L of from 0.1 to 0.15; and
wherein the zeolite has a crystal size in the range of 1 to 4.5 µm.
52. The zeolite according to embodiment 51, wherein the molar ratio of Ca²⁺ and Na⁺-ions is in the range of from 0.01 to 5, preferably wherein the ratio is about 0.06, about 0.14, about 0.25, about 0.4, about 0.5, about 1.6, or about 3.5.
53. The zeolite according to embodiments 51 or 52, wherein the zeolite comprises an average oxide composition with proportions of:

| **Na₂O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|
| 14.96 | 27.96 | 34.92 | 20.72 | 1.71 | 0.111 CaO•0.886 Na₂O•Al₂O₃•2.12 SiO₂•4.20 H₂O |
| 13.29 | 28.03 | 33.35 | 21.96 | 3.39 | 0.22 CaO•0.78 Na₂O•Al₂O₃•2.02 SiO₂•4.44 H₂O |
| 11.41 | 28.08 | 32.42 | 23.00 | 5.08 | 0.329 CaO•0.668 Na₂O•Al₂O₃•1.96 SiO₂•4.64 H₂O |
| 9.09 | 28.13 | 34.81 | 23.18 | 6.77 | 0.438 CaO•0.562 Na₂O•Al₂O₃•1.98 SiO₂•4.68 H₂O |
| 7.71 | 28.18 | 33.53 | 22.10 | 8.48 | 0.547 CaO•0.450 Na₂O•Al₂O₃•2.02 SiO₂•4.44 H₂O |
| 5.84 | 28.24 | 33.43 | 22.33 | 10.17 | 0.655 CaO•0.340 Na₂O•Al₂O₃•2.01 SiO₂•4.48 H₂O |
| 4.09 | 28.29 | 34.00 | 21.77 | 11.85 | 0.762 CaO•0.238 Na₂O•Al₂O₃•2.04 SiO₂•4.36 H₂O |
| 2.17 | 28.29 | 32.66 | 23.21 | 13.53 | 0.870 CaO•0.126 Na₂O•Al₂O₃•1.96 SiO₂•4.65 H₂O |

54. The zeolite according to embodiments 46 or 47, wherein the zeolite comprises zeolite particles having a form of cubic crystals with truncated edges and apexes, comprising a ratio e/L of from 0.2 to 0.25; and
wherein the zeolite has a crystal size in the range of 0.5 to 15 µm.
55. The zeolite according to embodiment 54, wherein the molar ratio of Ca²⁺ and Na⁺-ions is in the range of from 0.05 to 50, preferably wherein the ratio is about 0.05, about 0.1, about 0.25, about 0.5, about 0.9, about 2.4, or about 49.2.
56. The zeolite according to embodiments 54 or 55, wherein the zeolite comprises an average oxide composition with proportions of:

| **Na₂O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|
| 15.54 | 27.90 | 34.20 | 21.03 | 1.13 | 0.0836 CaO•0.914 Na₂O•Al₂O₃•2.076 SiO₂•4.26 H₂O |
| 14.18 | 28.01 | 34.98 | 20.27 | 2.57 | 0.167 CaO•0.833 Na₂O•Al₂O₃•2.12 SiO₂•4.10 H₂O |
| 11.27 | 28.08 | 33.41 | 22.10 | 5.14 | 0.333 CaO•0.660 Na₂O•Al₂O₃•2.02 SiO₂•4.46 H₂O |
| 8.56 | 28.16 | 32.84 | 22.70 | 7.71 | 0.498 CaO•0.500 Na₂O•Al₂O₃•1.98 SiO₂•4.57 H₂O |
| 5.78 | 28.23 | 31.93 | 23.76 | 10.29 | 0.663 CaO•0.337 Na₂O•Al₂O₃•1.92 SiO₂•4.77 H₂O |
| 2.93 | 28.31 | 33.85 | 22.05 | 12.86 | 0.826 CaO•0.170 Na₂O•Al₂O₃•2.03 SiO₂•4.41 H₂O |
| 0.173 | 28.39 | 34.28 | 21.80 | 15.38 | 0.985 CaO•0.01 Na₂O•Al₂O₃•2.05 SiO₂•4.35 H₂O |

57. The zeolite according to embodiments 46 or 47, wherein the zeolite comprises zeolite particles having a form of cubic crystals with rounded edges and apexes; and
wherein the zeolite has a crystal size in the range of 0.5 to 11 µm.
58. The zeolite according to embodiment 57, wherein the molar ratio of Ca²⁺ and Na⁺-ions is in the range of from 0.05 to 5, preferably wherein the ratio is about 0.06, about 0.14, about 0.3, about 0.63, about 1.3, or about 3.8.
59. The zeolite according to embodiments 57 or 58, wherein the zeolite comprises an average oxide composition with proportions of:

| **Na₂O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|
| 15.00 | 27.88 | 31.98 | 23.30 | 1.72 | 0.112 CaO•0.882 Na₂O•Al₂O₃•.1.94 SiO₂•4.72 H₂O |
| 13.23 | 28.02 | 33.34 | 21.90 | 3.44 | 0.223 CaO•0.775 Na₂O•Al₂O₃•2.07 SiO₂•4.43 H₂O |
| 10.25 | 28.01 | 33.76 | 21.87 | 6.10 | 0.390 CaO•0.600 Na₂O•Al₂O₃•2.04 SiO₂•4.41 H₂O |
| 7.57 | 28.19 | 32.55 | 23.09 | 8.60 | 0.555 CaO•0.442 Na₂O•Al₂O₃•1.96 SiO₂•4.64 H₂O |
| 4.81 | 28.26 | 33.79 | 21.95 | 11.19 | 0.720 CaO•0.280 Na₂O•Al₂O₃•2.03 SiO₂•4.40 H₂O |
| 1.98 | 28.34 | 32.56 | 23.36 | 13.76 | 0.883 CaO•0.115 Na₂O•Al₂O₃•1.95 SiO₂•4.67 H₂O |

60. The zeolite according to embodiments 46 or 47, wherein the zeolite comprises face-less zeolite particles; and
wherein the zeolite has a crystal size in the range of 0.4 to 5 µm.
61. The zeolite according to embodiment 60, wherein the molar ratio of Ca²⁺ and Na⁺-ions is in the range of from 0.05 to 7, preferably the ratio is about 0.07, about 0.13, about 0.16, about 0.3, about 0.5, about 0.82, about 1.4, about 2.8, about 3.6, or about 6.7.
62. The zeolite according to embodiments 60 or 61, wherein the zeolite comprises an average oxide composition with proportions of:

| **Na₂O [wt. %]** | **Al₂O₃ [wt. %]** | **SiO₂ [wt. %]** | **H₂O [wt. %]** | **CaO [wt. %]** | **Molar oxide composition** |
|---|---|---|---|---|---|
| 14.89 | 27.99 | 32.32 | 23.41 | 1.89 | 0.123 CaO•0.875 Na₂O•Al₂O₃•.1.96 SiO₂•4.74 H₂O |
| 12.79 | 28.05 | 32.71 | 22.66 | 3.78 | 0.245 CaO•0.750 Na₂O•Al₂O₃•1.98 SiO₂•4.58 H₂O |
| 10.81 | 28.10 | 33.43 | 21.97 | 5.67 | 0.367 CaO•0.633 Na₂O•Al₂O₃•2.02 SiO₂•4.43 H₂O |
| 8.72 | 28.16 | 33.67 | 21.86 | 7.57 | 0.489 CaO•0.510 Na₂O•Al₂O₃•2.03 SiO₂•4.40 H₂O |
| 6.52 | 28.21 | 32.40 | 23.27 | 9.60 | 0.619 CaO•0.380 Na₂O•Al₂O₃•1.95 SiO₂•4.67 H₂O |
| 4.52 | 28.27 | 33.87 | 22.35 | 11.41 | 0.734 CaO•0.263 Na₂O•Al₂O₃•2.01 SiO₂•4.48 H₂O |
| 2.58 | 28.33 | 33.87 | 21.99 | 13.24 | 0.850 CaO•0.150 Na₂O•Al₂O₃•2.03 SiO₂•4.40 H₂O |
| 1.21 | 28.31 | 33.03 | 21.88 | 14.49 | 0.931 CaO•0.070 Na₂O•Al₂O₃•1.98 SiO₂•4.39 H₂O |

## Claims

1. A method for preparing an LTA-type Na,Ca-zeolite in a one-pot-reaction, wherein the method comprises the steps of:
a) Providing an aluminosilicate hydrogel by mixing an aqueous sodium aluminate solution and an aqueous sodium silicate solution with a total volume V_{hg} at a temperature T_{P}, wherein the aluminosilicate hydrogel is **characterized by**
(1) the molar ratio A [Na₂O/H₂O] is within the range of from 0.0051 to 0.065;
(2) the molar ratio TAC [SiO₂/H₂O] is within the range of from 0.0026 to 0.06; and
(3) the molar ratio y [SiO₂/Al₂O₃] is within the range of from 1.2 to 2.2;
b) Adjusting the temperature of the aluminosilicate hydrogel provided in step a. to a temperature T_{R} of from 50 to 90 °C;
c) Adding an aqueous calcium hydroxide solution in a volume V_{Ca} to the aluminosilicate hydrogel of step b. at a time t_{c}(add); and
d) Continuing hydrothermal treatment after step c. for a total time t_{a-c}.

2. The method according to any of the preceding claims, wherein t_{a-c} is the time for the aluminosilicate hydrogel as provided in step a) to fully crystallize and thereby resulting in the LTA-type Na,Ca-zeolite, and / or wherein the time t_{a-c} is from 130 to 180 minutes, preferably 130 minutes, 150 minutes, 160 minutes or 180 minutes, and / or wherein t_{c}(add) is in a range of 0.8 to 0.9 of the time t_{a-c}, and / or wherein t_{c}(add) is from 100 to 170 minutes, preferably 105 to 117 minutes, 120 to 135 minutes, 130 to 145 minutes or 144 to 162 minutes.

3. The method according to any of the preceding claims, wherein the volume V_{Ca} of the aqueous calcium hydroxide solution in step c is 0.100 V_{hg} ≤ V_{Ca} ≤ 0.150 V_{hg}, preferably
V_{Ca} = 0.1 V_{hg}, V_{Ca} = 0.110 V_{hg}, V_{Ca} = 0.120 V_{hg}, V_{Ca} = 0.125 V_{hg}, V_{Ca} = 0.130 V_{hg},
V_{Ca} = 0.140 V_{hg}, or V_{Ca} = 0.150 V_{hg}, and most preferably V_{Ca} = 0.125 V_{hg}, and / or
wherein the concentration of the aqueous calcium hydroxide solution is in the range of from 0.27 mol/L to 6.20 mol/L.

4. The method according to any of the preceding claims, wherein the aqueous calcium hydroxide solution of step c contains potassium-ions, preferably wherein the potassium-ions are selected from KNO₃, K₂SO₄, K₂PO₄, KCI, potassium citrate, and potassium lactate, further preferably wherein the potassium-ions are selected from KNO₃, and/or wherein the aqueous calcium hydroxide solution contains potassium-ions in a concentration in the range of from 0.2 mol/L to 0.8 mol/L, preferably in a concentration in the range of from 0.2 mol/L to 0.65 mol/L, further preferably in a concentration of 0.5 mol/L.

5. An LTA-type Na, Ca-zeolite prepared according to a method of any of the preceding claims, wherein the zeolite comprises zeolite particles having a form of cubic crystals with sharp edges and apexes;
wherein the zeolite is obtained from a hydrogel in step a) that has a molar ratio A ≤ 0.0136, a molar ratio 0.00255 ≤ TAC ≤ 0.006, and a molar ratio 2.0 ≤ y ≤ 2.2; and wherein the molar ratio of Ca²⁺ and Na⁺-ions [Ca/Na] = (1-x)/(2x) is determined >0, and / or wherein the molar ratio of Ca²⁺ and Na⁺-ions is in a range of from 0.01 to 55, and wherein the zeolite has a crystal size in a range of from 1 to 5.5 µm.

6. An LTA-type Na, Ca-zeolite prepared according to a method of any one of the claims 1 to 4, wherein the zeolite comprises zeolite particles having a form of cubic crystals with truncated edges and apexes, comprising a ratio e/L of from 0.1 to 0.15, preferably 0.11, 0.12, 0.13, 0.14 or 0.15;
wherein the zeolite is obtained from a hydrogel in step a) that has a molar ratio 0.0051 ≤ A ≤ 0.023, a molar ratio 0.00255 ≤ TAC ≤ 0.015, and a molar ratio 1.8 ≤ y ≤ 2.2; and
wherein the molar ratio of Ca²⁺ and Na⁺-ions [Ca/Na] = (1-x)/(2x) is determined >0, and / or wherein the molar ratio of Ca²⁺ and Na⁺-ions is in the range of from 0.01 to 55; and wherein the zeolite has a crystal size in a range of 1 to 4.5 µm.

7. An LTA-type Na, Ca-zeolite prepared according to a method of any of the claims 1 to 4, wherein the zeolite comprises zeolite particles having a form of cubic crystals with truncated edges and apexes, comprising a ratio e/L of from 0.2 to 0.25, preferably 0.2, 0.21, 0.22, 0.23, 0.24, or 0.25;
wherein the zeolite is obtained from a hydrogel in step a) that has a molar ratio 0.02 ≤ A ≤ 0.037, a molar ratio 0.007 ≤ TAC ≤ 0.0162, and a molar ratio 1.3 ≤ y ≤ 2.2; and
wherein the molar ratio of Ca²⁺ and Na⁺-ions [Ca/Na] = (1-x)/(2x) is determined >0, and / or wherein the molar ratio of Ca²⁺ and Na⁺-ions is in the range of from 0.01 to 50, wherein the zeolite has a crystal size in a range of 0.5 to 15 µm.

8. An LTA-type Na, Ca-zeolite prepared according to a method of any of the claims 1 to 4, wherein the zeolite comprises zeolite particles having a form of cubic crystals with rounded edges and apexes;
wherein the zeolite is obtained from a hydrogel in step a) that has a molar ratio 0.0165 ≤ A ≤ 0.0420, a molar ratio 0.0053 ≤ TAC ≤ 0.04, and a molar ratio 1.3 ≤ y ≤ 2.2; and
wherein the molar ratio of Ca²⁺ and Na⁺-ions [Ca/Na] = (1-x)/(2x) is determined >0, and / or wherein the molar ratio of Ca²⁺ and Na⁺-ions is in the range of from 0.01 to 55; and wherein the zeolite has a crystal size in a range of 0.5 to 11 µm.

9. An LTA-type Na, Ca-zeolite prepared according to a method of any of the claims 1 to 4,
wherein the zeolite comprises face-less zeolite particles;
wherein the zeolite is obtained from a hydrogel in step a) that has a molar ratio 0.026 ≤ A ≤ 0.065, a molar ratio 0.035 ≤ TAC ≤ 0.06, and a molar ratio 1.2 ≤ y ≤ 1.4; and
wherein the molar ratio of Ca²⁺ and Na⁺-ions [Ca/Na] = (1-x)/(2x) is determined >0, and / or wherein the molar ratio of Ca²⁺ and Na⁺-ions is in the range of from 0.01 to 55; and wherein the zeolite has a crystal size in a range of 0.4 to 5 µm.

10. An LTA-type Na, Ca-zeolite of the general formula xNa₂O•(1-x)CaO•Al₂O₃•ySiO₂•zH₂O, comprising uniform zeolite particles, wherein the molar ratios [xNa₂O•(1-x)CaO]/[Al₂O₃] = 1, y = [SiO₂/Al₂O₃] = 2 and [H₂O/Al₂O₃] is in the range of from 4.5 and 5; and
wherein the molar ratio of Ca²⁺ and Na⁺-ions [Ca/Na] = (1-x)/(2x) is >0, and / or wherein the molar ratio of Ca²⁺ and Na⁺-ions is in a range of from 0.01 to 55.

11. The zeolite according to claim 10, wherein the zeolite comprises zeolite particles having a form of cubic crystals with sharp edges and apexes; and wherein the zeolite has a crystal size in a range of 1 to 5.5 µm, and / or wherein the molar ratio of Ca²⁺ and Na⁺-ions is in a range of from 0.01 to 11, preferably wherein the ratio is about 0.09, about 0.24, about 0.44, about 0.83, about 1.7, or about 6.6.

12. The zeolite according to claim 10, wherein the zeolite comprises zeolite particles having a form of cubic crystals with truncated edges and apexes, comprising a ratio e/L of from 0.1 to 0.15; and
wherein the zeolite has a crystal size in a range of 1 to 4.5 µm, and /or wherein the molar ratio of Ca²⁺ and Na⁺-ions is in a range of from 0.01 to 5, preferably wherein the ratio is about 0.06, about 0.14, about 0.25, about 0.4, about 0.5, about 1.6, or about 3.5.

13. The zeolite according to claim 10, wherein the zeolite comprises zeolite particles having a form of cubic crystals with truncated edges and apexes, comprising a ratio e/L of from 0.2 to 0.25; and
wherein the zeolite has a crystal size in a range of 0.5 to 15 µm, and /or wherein the molar ratio of Ca²⁺ and Na⁺-ions is in a range of from 0.05 to 50, preferably wherein the ratio is about 0.05, about 0.1, about 0.25, about 0.5, about 0.9, about 2.4, or about 49.2.

14. The zeolite according to claim 10, wherein the zeolite comprises zeolite particles having a form of cubic crystals with rounded edges and apexes; and
wherein the zeolite has a crystal size in a range of 0.5 to 11 µm, and / or wherein the molar ratio of Ca²⁺ and Na⁺-ions is in a range of from 0.05 to 5, preferably wherein the ratio is about 0.06, about 0.14, about 0.3, about 0.63, about 1.3, or about 3.8.

15. The zeolite according to claim 10, wherein the zeolite comprises face-less zeolite particles; and
wherein the zeolite has a crystal size in a range of 0.4 to 5 µm, and / or wherein the molar ratio of Ca²⁺ and Na⁺-ions is in a range of from 0.05 to 7, preferably the ratio is about 0.07, about 0.13, about 0.16, about 0.3, about 0.5, about 0.82, about 1.4, about 2.8, about 3.6, or about 6.7.
